# EUROPEAN PATENT SPECIFICATION

(11) **EP 1 820 232 B1**
(45) Date of publication and mention of the grant of the patent: **14.05.2014**
(21) Application number: 05824713.1
(22) Date of filing: 31.10.2005
(51) Int. Cl.: C01B 3/24, H01M 8/06, H01M 8/04

(54) **HYDROGEN GENERATION AND ENERGY PRODUCTION ASSEMBLIES**
WASSERSTOFFERZEUGUNGS- UND ENERGIEPRODUKTIONSBAUGRUPPEN
ENSEMBLES DE GENERATION D'HYDROGENE ET DE PRODUCTION D'ENERGIE

(30) Priority: 31.10.2004 US 623894 P; 17.09.2005 US 717641 P
(43) Date of publication of application: 22.08.2007
(73) Proprietor: DCNS SA, 75015 Paris (FR)
(72) Inventor: EDLUND, David, J., Bend, Oregon 97701 (US); STUDEBAKER, R., Todd, Shelley, Idaho 83274 (US)
(74) Representative: Couchman, Jonathan Hugh
(86) International application number: PCT/US2005/039409
(87) International publication number: WO 2006/050335

(56) References cited:
- WO-A1-01/12539
- US-A1- 2003 223 926
- US-A1- 2004 083 890
- US-A1- 2005 036 941
- US-B2- 6 797 420
- US-B2- 7 052 530

## Description

### Field of the Disclosure

The present disclosure is directed generally to hydrogen generation assemblies, components thereof, and energy production assemblies.

### Background of the Disclosure

A hydrogen generation assembly is an assembly that converts one or more feedstocks into a product stream containing hydrogen gas as a majority component. The feedstocks may include a carbon-containing feedstock, and in some embodiments, may additionally include water. The feedstocks are delivered to a hydrogen-producing region of the hydrogen generation assembly from a feedstock delivery system, typically with the feedstocks being delivered under pressure and at elevated temperatures. The hydrogen-producing region is often associated with a temperature modulating assembly, such as a heating assembly or cooling assembly, which consumes one or more fuel streams to maintain the hydrogen-producing region within a suitable temperature range for effectively producing hydrogen gas.

The produced hydrogen gas may be used in a variety of applications. One such application is energy production, such as in electrochemical fuel cells. An electrochemical fuel cell is a device that converts fuel and an oxidant to electricity, a reaction product, and heat. For example, fuel cells may convert hydrogen and oxygen into water and electricity. In such fuel cells, the hydrogen is the fuel, the oxygen is the oxidant, and the water is a reaction product. Fuel cell stacks include a plurality of fuel cells and may be utilized with a hydrogen generation assembly to provide an energy production assembly. The fuel cell stack may be associated with an air delivery system to deliver an air stream thereto and/or a temperature modulating assembly to maintain the fuel cell stack within a suitable temperature range for generating electricity.

US 2004/083890 discloses hydrogen purification membranes, hydrogen purification devices, and fuel processing and fuel cell systems that include hydrogen purification devices. The hydrogen purification membranes include a metal membrane, which is at least substantially comprised of palladium or a palladium alloy. In some embodiments, the membrane contains trace amounts of carbon, silicon, and/or oxygen. In some embodiments, the membranes form part of a hydrogen purification device that includes an enclosure containing a separation assembly, which is adapted to receive a mixed gas stream containing hydrogen gas and to produce a stream that contains pure or at least substantially pure hydrogen gas therefrom. In some embodiments, the membrane(s) and/or purification device forms a portion of a fuel processor, and in some embodiments, the membrane(s) and/or purification device forms a portion of a fuel processing or fuel cell system.

US 2003/223926 discloses diffusion and atomizing burner assemblies and fuel processing and fuel cell systems containing the same. The burner assembly receives at least one liquid and/or gaseous fuel stream, mixes the stream with air, and combusts the mixed stream to provide heat for a fuel processor. In some embodiments, the burner assembly receives at least one combustible fuel stream produced by the fuel processing and/or fuel cell system. In some embodiments, the burner assembly receives a fuel stream having the same composition as a stream that is delivered for non-combustion purposes to another portion of the fuel processing and/or fuel cell system. In some embodiments, the burner assembly receives and vaporizes a fuel stream that includes the same carbon-containing feedstock and/or has the same overall composition as the feed stream from which the steam reformer or other fuel processor produces hydrogen gas. Methods of use are also disclosed.

### Summary of the Disclosure

The present disclosure relates to assemblies, systems, devices, and methods that are adapted to produce hydrogen gas from one or more feedstocks for use in electrochemical fuel cells or in other applications, as well as energy production assemblies incorporating the same.

According to a first aspect, the present invention provides a hydrogen generation assembly according to claim 1.

According to a second aspect, the present invention provides a system of claim 12 comprising a hydrogen generation assembly in combination with a fuel cell stack adapted to produce an electric current from an oxidant and at least a portion of the product hydrogen stream.

According to a third aspect, the present invention provides a method according to claim 19 the method being a method of starting up and operating a hydrogen generation assembly.
In some embodiments, the hydrogen generation assemblies, and/or energy production assemblies incorporating the same, are adapted for portable applications. In some embodiments, the hydrogen generation assemblies, and/or energy production assemblies incorporating the same, are free of pumps and other electrically powered fluid delivery systems. In some embodiments, the hydrogen generation assemblies, and/or energy production assemblies incorporating the same, include pumps or other feedstock delivery systems that are adapted to draw one or more feed streams from a supply, which in some embodiments is an unpressurized or low pressure supply. In some embodiments, the hydrogen generation assemblies, and/or energy production assemblies incorporating the same, are free of electrically powered controllers. In some embodiments, the hydrogen generation assemblies, and/or energy production assemblies incorporating the same, include a controller, which in some embodiments is an electrically powered controller, and in some embodiments is a computerized, or computer-implemented, controller. In some embodiments, the hydrogen generation assemblies, and energy production assemblies incorporating the same, are adapted to produce purified hydrogen gas without requiring a powered feedstock delivery system or heating or other temperature modulation assembly. In some embodiments, the hydrogen generation assemblies, and/or energy production assemblies incorporating the same, include an electrically powered feedstock delivery system and/or heating or other temperature modulation assembly. In some embodiments, the hydrogen generation assemblies, and/or energy production assemblies incorporating the same, are adapted to startup from an off operating configuration, to transition from the startup operating configuration to a hydrogen-producing and/or energy-producing operating configuration, and to maintain the selected operating configuration with minimal user inputs and/or balance-of-plant requirements. In some embodiments, the hydrogen generation assemblies, and/or energy production assemblies incorporating the same, are adapted to start up using a liquid-fueled burner assembly. In some embodiments, the hydrogen generation assemblies, and/or energy production assemblies incorporating the same, are adapted to start up using a gas-fueled burner assembly. In some embodiments, the hydrogen generation assemblies, and energy production assemblies incorporating the same, include a feedstock delivery system that is adapted to utilize a recycle stream and at least one of a flow restrictor and a pressure-actuated valve to regulate the flow rate and/or pressure at which the feed stream is delivered to the hydrogen-producing region of the fuel processor. In some embodiments, the hydrogen generation assemblies, and/or energy production assemblies incorporating the same, are adapted to be portable assemblies. In some embodiments, the hydrogen generation assemblies are adapted to produce less than 15 slm of hydrogen gas, and in some embodiments, less than 10 slm, or optionally even less than 5 slm, of hydrogen gas when operating at full capacity. In some embodiments, the energy production assemblies incorporating hydrogen generation assemblies according to the present disclosure are adapted to have a rated power output of at least 100 watts and/or not more than 1000 watts, and optionally 100-400 watts, 200-600 watts, and/or 400-800 watts.

### Brief Description of the Drawings

Fig. 1 is a schematic view of a hydrogen generation assembly according to the present disclosure.
Fig. 2 is a schematic view of a hydrogen-producing fuel cell system according to the present disclosure.
Fig. 3 is a schematic view of another hydrogen-producing fuel cell system according to the present disclosure.
Fig. 4 is a schematic view of another hydrogen-producing fuel cell system according to the present disclosure.
Fig. 5 is a schematic view of another hydrogen generation assembly according to the present disclosure.
Fig. 6 is a schematic view of another hydrogen generation assembly according to the present disclosure.
Fig. 7 is an exploded perspective view of an illustrative example of a fuel processing assembly according to the present disclosure.
Fig. 8 is an exploded perspective view of the fuel processing assembly of Fig. 7.
Fig. 9 is a perspective view of another illustrative example of a fuel processing assembly according to the present disclosure.
Fig. 10 is a cross-sectional perspective view of the fuel processing assembly of Fig. 9.
Fig. 11 is an exploded perspective view of the fuel processing assembly of Fig. 9.
Fig. 12 is an schematic view of another illustrative hydrogen generation assembly according to the present disclosure.
Fig. 13 is a fragmentary isometric view illustrating examples of burner constructions that may be used in heating assemblies according to the present disclosure.
Fig. 14 is a side elevation view of an illustrative example of a hydrogen-producing fuel processing assembly according to the present disclosure.
Fig. 15 is a cross-sectional view of the hydrogen-producing fuel processing assembly of Fig. 14.
Fig. 16 is a side elevation view of another illustrative hydrogen generation assembly according to the present disclosure that is adapted to start up using a liquid fuel.
Fig. 17 is a side elevation view of another illustrative hydrogen generation assembly according to the present disclosure that is adapted to be start up using a liquid fuel.
Fig. 18 is a side elevation view of another illustrative hydrogen generation assembly according to the present disclosure that is adapted to start up using a liquid fuel.
Fig. 19 is an end elevation view of the hydrogen generation assembly of Fig. 18.
Fig. 20 is a perspective view of an illustrative hydrogen-producing fuel processing assembly according to the present disclosure.
Fig. 21 is another perspective view of the hydrogen-producing fuel processing assembly of Fig. 20.
Fig. 22 is a partial cross-sectional view of the hydrogen-producing fuel processing assembly of Fig. 20.
Fig. 23 is a fragmentary schematic view of a hydrogen generation assembly with an illustrative feedstock delivery system according to the present disclosure in which the hydrogen-producing region and the feedstock delivery system both receive the same liquid carbon-containing feedstock.
Fig. 24 is a schematic view showing a variation of the hydrogen generation assembly of Fig. 23, with a carbon-containing feedstock being delivered to the hydrogen-producing region and the burner assembly from the same supply stream.
Fig. 25 is a schematic view of another illustrative hydrogen generation assembly according to the present disclosure in which the hydrogen-producing region and the burner assembly both receive fuel, or feed, streams containing water and a liquid carbon-containing feedstock.
Fig. 26 is a schematic view showing a variation of the hydrogen-generation assembly of Fig. 25, with the hydrogen-producing region and the burner assembly both receiving fuel, or feed, streams containing water and a carbon-containing feedstock from the same supply stream.
Fig. 27 is a schematic view showing another variation of the hydrogen generation assemblies of Figs. 25 and 26.
Fig. 28 is a schematic view of a hydrogen generation assembly with another example of a feedstock delivery system according to the present disclosure.
Fig. 29 is a schematic view of a hydrogen generation assembly with another example of a feedstock delivery system according to the present disclosure.
Fig. 30 is a schematic view of another illustrative example of a fuel cell system according to the present disclosure.
Fig. 31 is a schematic view of another illustrative feedstock delivery system according to the present disclosure.
Fig. 32 is a schematic view of another feedstock delivery system according to the present disclosure
Fig. 33 is a schematic view of another hydrogen generation assembly according to the present disclosure.
Fig. 34 is a schematic view of another feedstock delivery system according to the present disclosure.
Fig. 35 is a schematic view of another hydrogen generation assembly according to the present disclosure.

### Detailed Description and Best Mode of the Disclosure

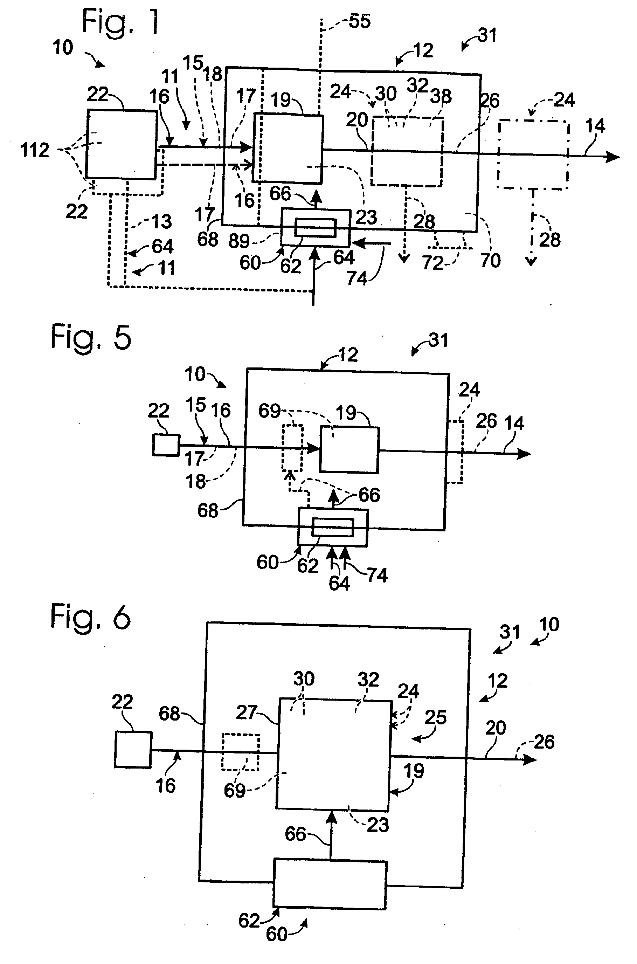

A hydrogen generation assembly according to the present disclosure is schematically illustrated in Fig. 1 and generally indicated at 10. Hydrogen generation assembly includes a feedstock delivery system 22 and a fuel processing assembly 31. Fuel processing assembly, or system, 31, includes a fuel processor 12 that is adapted to produce a product hydrogen stream 14 containing hydrogen gas, and preferably at least substantially pure hydrogen gas, from one or more feed streams 16. Feed stream 16 may include at least one carbon-containing feedstock 18. Fuel processor 12 includes any suitable device, or combination of devices, that is adapted to produce hydrogen gas from feed stream(s) 16. Accordingly, fuel processor 12 includes a hydrogen-producing region 19, in which an output stream 20 containing hydrogen gas is produced by utilizing any suitable hydrogen-producing mechanism(s). Output stream 20 includes hydrogen gas as at least a majority component. Output stream 20 may include one or more additional gaseous components, and thereby may be referred to as a mixed gas stream that contains hydrogen gas as its majority component but which includes other gases. Region 19 may utilize a suitable catalyst-containing bed or region.

Examples of suitable mechanisms for producing hydrogen gas from feed stream(s) 16 delivered by feedstock delivery system 22 include steam reforming and autothermal reforming, in which reforming catalysts are used to produce hydrogen gas from a feed stream 16 containing a carbon-containing feedstock 18 and water 17. In a steam reforming process, hydrogen-producing region 19 contains a suitable steam reforming catalyst 23, as indicated in dashed lines in Fig. 1. In such an embodiment, the fuel processor may be referred to as a steam reformer, hydrogen-producing region 19 may be referred to as a reforming region, and output, or mixed gas, stream 20 may be referred to as a reformate stream. Examples of suitable steam reforming catalysts include copper-zinc formulations of low temperature shift catalysts and a chromium formulation sold under the trade name KMA by Sfd-Chemie, although others may be used. The other gases that are typically present in the reformate stream include carbon monoxide, carbon dioxide, methane, steam, and/or unreacted carbon-containing feedstock. In an autothermal reforming reaction, a suitable autothermal reforming catalyst is used to produce hydrogen gas from water and a carbon-containing feedstock in the presence of air. When autothermal reforming is used, the fuel processor further includes an air delivery assembly 55 that is adapted to deliver an air stream to the hydrogen-producing region, as indicated in dashed lines in Fig. 1. Autothermal hydrogen-producing reactions utilize a primary endothermic reaction that is utilized in conjunction with an exothermic partial oxidation reaction, which generates heat within the hydrogen-producing region upon initiation of the initial hydrogen-producing reaction.

Other suitable mechanisms for producing hydrogen gas include pyrolysis and catalytic partial oxidation of a carbon-containing feedstock, in which case the feed stream does not contain water. Examples of suitable carbon-containing feedstocks 18 include at least one hydrocarbon or alcohol. Examples of suitable hydrocarbons include methane, propane, natural gas, diesel, kerosene, gasoline and the like. Examples of suitable alcohols include methanol, ethanol, and polyols, such as ethylene glycol and propylene glycol. It is within the scope of the present disclosure that hydrogen generation assembly 10 may utilize more than a single hydrogen-producing mechanism in the hydrogen-producing region 19.

Fuel processing assemblies 31 according to the present disclosure may (but are not required to) further include a purification, or separation, region 24, in which a hydrogen-rich stream 26 is produced from the output, or mixed gas, stream. Hydrogen-rich stream 26 contains at least one of a greater hydrogen concentration than output stream 20 and a reduced concentration of one or more of the other gases or impurities that were present in the output stream. Purification region 24 is schematically illustrated in Fig. 1, where output stream 20 is shown being delivered to an optional purification region 24. As shown in Fig. 1, product hydrogen stream 14 includes at least a portion of hydrogen-rich stream 26. Accordingly, hydrogen-rich stream 26 and may be the same stream and have the same compositions and flow rates. However, it is also within the scope of the present disclosure that some of the purified hydrogen gas in hydrogen-rich stream 26 may be stored for later use, such as in a suitable hydrogen storage assembly, and/or consumed by the fuel processing assembly.

Purification region 24 may, but is not required to, produce at least one byproduct stream 28. Byproduct stream 28 may contain no hydrogen gas, or it may contain some hydrogen gas. When present, byproduct stream 28 may be exhausted, sent to a burner assembly or other combustion source, used as a heated fluid stream, stored for later use, or otherwise utilized, stored or disposed of. It is within the scope of the disclosure that byproduct stream 28 may be emitted from the purification region as a continuous stream responsive to the delivery of output stream 20 to the purification region, or intermittently, such as in a batch process or when the byproduct portion of the output stream is retained at least temporarily in the purification region.

While not required, it is within the scope of the present disclosure that fuel processing system 31 may include one or more purification regions that are adapted to produce one or more byproduct streams containing sufficient amounts of hydrogen gas to be suitable for use as a fuel, or feedstock, stream for a heating assembly for the fuel processing system. In some embodiments, the byproduct stream may have sufficient fuel value (i.e., hydrogen content) to enable the heating assembly, when present, to maintain the hydrogen-producing region at a desired operating temperature or within a selected range of temperatures. Therefore, while not required, it is within the scope of the present disclosure that the byproduct stream may include hydrogen gas, such as 10-30 wt% hydrogen gas, 15-25 wt% hydrogen gas, 20-30 wt% hydrogen gas, at least 10 or 15 wt% hydrogen gas, at least 20 wt% hydrogen gas, etc.

It is within the scope of the present disclosure that the purification, or separation, region and the hydrogen producing region may be housed together in a common shell, or housing, 68. It is within the scope of the present disclosure that the separation region is separately positioned relative to the hydrogen-producing region but in fluid communication therewith to receive the mixed gas stream therefrom. It is also within the scope of the present disclosure that the hydrogen generation assembly does not include a separation region.

Purification region 24 includes any suitable mechanism, device, or combination of devices, that are adapted to reduce the concentration of at least one component of output stream 20. In most applications, hydrogen-rich stream 26 will have a greater hydrogen concentration than output, or mixed gas, stream 20. However, it is also within the scope of the disclosure that the hydrogen-rich stream will have a reduced concentration of one or more non-hydrogen components that were present in output stream 20, yet have the same, or even a reduced overall hydrogen concentration as the output stream. For example, in some applications where product hydrogen stream 14 may be used, certain impurities, or non-hydrogen components, are more harmful than others. As a specific example, in conventional fuel cell systems, carbon monoxide may damage a fuel cell stack if it is present in even a few parts per million, while other non-hydrogen components that may be present in stream 20, such as water, will not damage the stack even if present in much greater concentrations. Therefore, in such an application, a suitable purification region may not increase the overall hydrogen concentration, but it will reduce the concentration of a non-hydrogen component that is harmful, or potentially harmful, to the desired application for the product hydrogen stream.

Illustrative examples of suitable devices for purification region 24 include one or more hydrogen-selective membranes 30, chemical carbon monoxide removal assemblies 32, and pressure swing adsorption systems 38. It is within the scope of the disclosure that purification region 24 may include more than one type of purification device, and that these devices may have the same or different structures and/or operate by the same or different mechanisms. As discussed herein, hydrogen-producing fuel processing assembly 31 may include at least one restrictive orifice or other flow restrictor downstream of at least one purification region, such as associated with one or more of the product hydrogen stream, hydrogen-rich stream, and/or byproduct stream.

Hydrogen-selective membranes 30 are permeable to hydrogen gas, but are at least substantially, if not completely, impermeable to other components of output stream 20. Membranes 30 may be formed of any hydrogen-permeable material suitable for use in the operating environment and parameters in which purification region 24 is operated. Examples of suitable materials for membranes 30 include palladium and palladium alloys, and especially thin films of such metals and metal alloys. Palladium alloys have proven particularly effective, especially palladium with 35 wt% to 45 wt% copper. A palladium-copper alloy that contains approximately 40 wt% copper has proven particularly effective, although other relative concentrations and components may be used within the scope of the disclosure. Examples of various membranes, membrane configurations, and methods for preparing the same are disclosed in U.S. Patent Nos. 6,221,117, 6,319,306, and 6,537,352.

Chemical carbon monoxide removal assemblies 32 are devices that chemically react carbon monoxide and/or other undesirable components of stream 20, if present in output stream 20, to form other compositions that are not as potentially harmful. Examples of chemical carbon monoxide removal assemblies include water-gas shift reactors to produce hydrogen gas and carbon dioxide from water and carbon monoxide, partial oxidation reactors that are adapted to convert carbon monoxide into carbon dioxide, and methanation catalyst regions, or beds, that convert carbon monoxide and hydrogen to methane and water. It is within the scope of the disclosure that fuel processing assembly 31 may include more than one type and/or number of chemical removal assemblies 32.

Pressure swing adsorption (PSA) is a chemical process in which gaseous impurities are removed from output stream 20 based on the principle that certain gases, under the proper conditions of temperature and pressure, will be adsorbed onto an adsorbent material more strongly than other gases. Typically, it is the impurities that are adsorbed and removed from output stream 20. Adsorption of impurity gases occurs at elevated pressure. When the pressure is reduced, the impurities are desorbed from the adsorbent material, thus regenerating the adsorbent material. Typically, PSA is a cyclic process and requires at least two beds for continuous (as opposed to batch) operation. Examples of suitable adsorbent materials that may be used in adsorbent beds are activated carbon and zeolites, especially 5 A (5 angstrom) zeolites. PSA system 38 also provides an example of a device for use in purification region 24 in which the byproducts, or removed components, are not directly exhausted from the region as a gas stream concurrently with the purification of the output stream. Instead, these byproduct components are removed when the adsorbent material is regenerated or otherwise removed from the purification region.

In Fig. 1, purification region 24 is shown within fuel processor 12. It is within the scope of the disclosure that region 24, when present, may alternatively be separately located downstream from the fuel processor, as is schematically illustrated in dash-dot lines in Fig. 1. It is also within the scope of the disclosure that purification region 24 may include portions within and external fuel processor 12.

In Fig. 1, fuel processor 12 is shown including a shell 68 in which at least the hydrogen-producing region, and optionally the purification region, is contained. Shell 68, which also may be referred to as a housing, enables the components of the steam reformer or other fuel processing mechanism to be moved as a unit. It also protects the components of fuel processor 12 from damage by providing a protective enclosure and reduces the heating demand of the fuel processing assembly because the components of the fuel processor may be heated as a unit. Shell 68 may, but does not necessarily, include insulating material 70, such as a solid insulating material, blanket insulating material, and/or an air-filled cavity. It is within the scope of the disclosure, however, that the fuel processor may be formed without a housing or shell. When fuel processor 12 includes insulating material 70, the insulating material may be internal the shell, external the shell, or both. When the insulating material is external a shell containing the above-described reforming and/or purification regions, fuel processor 12 further may include an outer cover or jacket 72 external the insulation, as schematically illustrated in Fig. 1. It is within the scope of the present disclosure that the fuel processing assembly may be implemented with a different shell, with a shell that includes additional components of the fuel processing assembly, including feedstock delivery system 22 (or portions thereof), and/or includes additional components of the fuel cell system. It is also within the scope of the present disclosure that a fuel processing assembly 31 may not include a shell 68.

It is further within the scope of the disclosure that one or more of the components of fuel processing assembly 31 may either extend beyond the shell or be located external at least shell 68. For example, and as discussed, purification region 24 may be located external shell 68, such as with the purification region being coupled directly to the shell (as schematically illustrated in Fig. 5) or being spaced-away from the shell but in fluid communication therewith by suitable fluid-transfer conduits (as indicated in dash-dot lines in Fig. 1). As another example, a portion of hydrogen-producing region 19 (such as portions of one or more reforming catalyst beds) may extend beyond the shell, such as indicated schematically with a dashed line representing an alternative shell configuration in Fig. 1.

In the illustrative, non-exclusive embodiment shown in Fig. 1, the fuel processing system 31 includes a hydrogen-producing region 19 and a temperature modulating assembly in the form of a heating assembly 60. Heating assembly 60 is adapted to produce a heated exhaust stream, or combustion stream, 66 from heating fuel stream 64, typically as combusted in the presence of air. Stream 66 is schematically illustrated in Fig. 1 as heating hydrogen-producing region 19. Heating assembly 60 may utilize any suitable structure for generating heated exhaust stream 66, such as a burner or combustion catalyst in which a fuel is combusted with air to produce the heated exhaust stream. Heating assembly 60 may include an ignitor, or ignition source, 89 that is adapted to initiate the combustion of fuel, and thereby the generation of exhaust stream 66. Illustrative examples of suitable ignition sources include one or more of spark plugs, glow plugs, combustion catalyst, pilot lights, piezoelectric ignitors, and the like.

In some fuel processing assemblies according to the present disclosure, heating assembly 60 includes a burner assembly 62 and may be referred to as a combustion-based, or combustion-driven, heating assembly. In a combustion-based heating assembly, the heating assembly 60 is adapted to receive at least one fuel stream 64 and to combust the fuel stream in the presence of air to provide a hot combustion stream 66 that may be used to heat at least the hydrogen-producing region 19 of the fuel processor. As discussed in more detail herein, air may be delivered to the heating assembly via a variety of mechanisms. In Fig. 1, an air stream 74 is shown; however, it is within the scope of the disclosure for the air stream to additionally or alternatively be delivered to the heating assembly with at least one of the fuel streams 64 for the heating assembly 60 and/or drawn from the environment within which the heating assembly is utilized.

It is within the scope of the disclosure that combustion stream 66 may additionally or alternatively be used to heat other portions of the fuel processing assembly and/or fuel cell systems with which heating assembly 60 is used. It is also within the scope of the present disclosure that other configurations and types of heating assemblies 60 may be utilized. As an illustrative example, a heating assembly 60 may be an electrically powered heating assembly that is adapted to heat at least the hydrogen-producing region of the fuel processing assembly by generating heat using at least one heating element, such as a resistive heating element. Therefore, it is not required that heating assembly 60 receive and combust a combustible fuel stream to heat hydrogen-producing region 19 to a suitable hydrogen-producing temperature. Additional non-exclusive examples of heating assemblies that may be utilized in hydrogen generating assemblies, hydrogen-producing fuel processing assemblies, fuel cell systems, and the like according to the present disclosure are disclosed in U.S. Patent Application Serial No. 11/226,810 (later published as US 7,632,322), which is entitled "Hydrogen-Producing Fuel Processing Assemblies, Heating Assemblies, and Methods of Operating the Same," was filed on September 13, 2005.

As also schematically illustrated in Fig. 1, it is within the scope of the present disclosure that the heating assembly 60 is housed in a common shell, or housing, 68 with the hydrogen-producing region and/or separation region, although this construction is not required. It is also within the scope of the present disclosure that the heating assembly may be separately positioned relative to the hydrogen-producing region but in thermal and/or fluid communication therewith to provide the desired heating of at least the hydrogen-producing region. In Fig. 1, heating assembly 60 is shown in an overlapping relationship with fuel processor 12 to graphically represent that it is within the scope of the disclosure that the heating assembly may be located partially or completely within fuel processor 12, such as being at least partially within shell 68, and/or that at least a portion, or all, of the heating assembly may be located external the fuel processor. In this latter embodiment, the hot combustion gases from the burner assembly will be delivered via suitable heat transfer conduits to the fuel processor or other portion of the system(s) to be heated.

Depending on the configuration of the hydrogen generation assembly 10 and the fuel processing system 31, the heating assembly 60 may be configured to heat the feedstock delivery system, the feedstock supply streams, the hydrogen-producing region, the purification (or separation) region, or any combination of these elements or selected components thereof. The heating of the feedstock supply streams may include vaporizing liquid reactant streams or components of the hydrogen-production fluid used to produce hydrogen gas in the hydrogen-producing region. In such an embodiment, the fuel processing system may be described as including a vaporization region 69. The heating assembly 60 may also be configured to heat other components of the hydrogen generation assembly 10. For example, the heated exhaust stream may be adapted to heat a pressure vessel or other canister containing the heating fuel and/or the hydrogen-production fluid that form at least portions of streams 16 and 64. While not required, increasing the temperature of a vessel may increase the pressure of the fluids stored within the vessel, which may be desirable in some applications.

As an illustrative example of temperatures that may be achieved and/or maintained in hydrogen-producing region 19 through the use of heating assembly 60, steam reformers typically operate at temperatures in the range of 200° C and 900° C. Temperatures outside of this range are within the scope of the disclosure. When the carbon-containing feedstock is methanol, the steam reforming reaction will typically operate in a temperature range of approximately 200-500° C. Illustrative subsets of this range include 350-450° C, 375-425° C, and 375-400° C. When the carbon-containing feedstock is a hydrocarbon, ethanol or another alcohol, a temperature range of approximately 400-900° C will typically be used for the steam reforming reaction. Illustrative subsets of this range include 750-850° C, 725-825° C, 650-750° C, 700-800° C, 700-900° C, 500-800° C, 400-600° C, and 600-800° C. It is within the scope of the present disclosure for the hydrogen-producing region to include two or more zones, or portions, each of which may be operated at the same or at different temperatures. For example, when the hydrogen-production fluid includes a hydrocarbon, in some embodiments it may be desirable to include two different hydrogen-producing portions, or regions, with one operating at a lower temperature than the other to provide a pre-reforming region. In such an embodiment, the fuel processing system may alternatively be described as including two or more hydrogen producing regions.

Hydrogen-producing fuel processing assemblies, or hydrogen generation assemblies 10, according to the present disclosure may include a feedstock delivery system 22 that is adapted to selectively deliver at least one feed stream 16 to at least the hydrogen-producing region of the fuel processing/generating assembly. In some embodiments, the feedstock delivery system is further adapted to at least selectively deliver fuel stream 64 to a burner 62 or other heating assembly 60 that is adapted to heat at least the hydrogen-producing region 19, such as to heat (and optionally maintain) the region at a suitable hydrogen-producing temperature. Feedstock delivery system 22 may utilize any suitable delivery mechanism, such as a positive displacement or other suitable pump or mechanism for propelling liquid fluid streams. In some embodiments of feedstock delivery systems 22 according to the present disclosure, the delivery system is adapted to deliver the at least one feed stream and/or the fuel stream without requiring the use of pumps or other electrically powered fluid-delivery mechanisms.

In the embodiment shown schematically in Fig. 1, feedstock delivery system 22 is adapted to deliver two feedstock supply streams 11, namely, a hydrogen-production fluid supply stream, or feed stream, 16, which contains at least one hydrogen-production fluid 15 and is adapted to be delivered to hydrogen-producing region 19 of the fuel processing system, and a heating fuel supply stream 64, which contains at least one combustible fuel 13 and is adapted to be delivered to heating assembly 60.

While a single feed stream 16 is shown in Fig. 1, it is within the scope of the disclosure that more than one stream 16 may be used and that these streams may contain the same or different feedstocks. This is schematically illustrated by the inclusion of a second feed stream 16 in dashed lines in Fig. 1. Similarly, Fig. 1 also illustrates in dashed lines that that each feed stream 16 may (but is not required to) be associated with a different feedstock delivery system 22, or portions thereof. For example, when more than one feedstock delivery system 22 is utilized, the systems may (but are not required to) draw at least a portion of their outlet streams from a common supply. When feed stream 16 contains two or more components, such as a carbon-containing feedstock and water, the components may be delivered in the same or different feed streams.

When the heating assembly forms a portion of the fuel processing assembly, such as schematically illustrated in the illustrative embodiment shown in Fig. 1, the fuel processing assembly may be described as being configured to receive at least two feedstock supply streams 11, namely, fluid supply stream 16 and fuel supply stream 64. It is within the scope of the present disclosure that these streams may be delivered from the same or different delivery systems, as indicated in Fig. 1 in dashed lines. It is also within the scope of the present disclosure that these streams may have different compositions, at least one common component, no common components, or the same compositions. The feedstock delivery system may include, or be in fluid communication with, any suitable type and/or number of sources, or supplies, 112 for the components of the feed and fuel streams delivered thereby.

The hydrogen-production fluid 15 may include one or more fluids that may be utilized as reactants to produce product hydrogen stream 14, such as described above. The composition of the hydrogen-production fluid 15 may be selected based on the configuration of the hydrogen-generation assembly 10 and/or the mechanism by which hydrogen is produced in the hydrogen-producing region. For example, the hydrogen-production fluid 15 may include at least one carbon-containing feedstock, water, or a combination of water and a carbon-containing feedstock. Illustrative examples of carbon-containing feedstocks are previously presented herein. When the hydrogen-producing region is adapted to receive water and a carbon-containing feedstock as reactants to produce hydrogen gas, either or both of these reactants may be supplied as the hydrogen-production fluid by the feedstock delivery system.

For example, when a carbon-containing feedstock is used that is miscible with water, such as methanol or another water-soluble alcohol, the feedstock delivery system may be (but is not required to be) adapted to deliver a hydrogen-production fluid 15 that contains a mixture of water and the carbon-containing feedstock. The ratio of water to carbon-containing feedstock in such a fluid stream may vary according to such factors as the particular carbon-containing feedstock being used, user preferences, the design of the hydrogen-production region, etc. Typically the molar ratio of water to carbon will be approximately 1:1 to 3:1. Mixtures of water and methanol will typically be delivered at or near a 1:1 molar ratio (31 vol% water, 69 vol% methanol), while mixtures of hydrocarbons or other alcohols will typically be delivered at a molar ratio greater than 1:1 water-to-carbon.

As a further illustrative example, a reforming feed stream 16 may contain approximately 25-75 vol% methanol or ethanol or another suitable water-miscible carbon-containing feedstock, and approximately 25-75 vol% water. For feed streams formed (at least substantially) of methanol and water, the streams will typically contain approximately 50-75 vol% methanol and approximately 25-50 vol% water. Streams containing ethanol or other water-miscible alcohols will typically contain approximately 25-60 vol% alcohol and approximately 40-75 vol% water. An example of a particularly well-suited feed stream for hydrogen-generating assemblies that utilize steam reforming or autothermal reforming reactions contains 69 vol% methanol and 31 vol% water, although other compositions and liquid carbon-containing feedstocks may be used without departing from the scope of the present disclosure.

While not required, it is within the scope of the present disclosure that such a feed stream that contains both water and at least one carbon-containing feedstock may be used as the feed stream for hydrogen-producing region 19 and as a combustible fuel stream for a heating assembly that is adapted to heat at least the hydrogen-producing region of the fuel processing assembly. A potential benefit of such a construction is that the hydrogen generation assembly that produces hydrogen gas from water and a carbon-containing feedstock does not need to include more than a single supply 112, if the water and water-soluble liquid carbon-containing feedstock are premixed. If not, then the hydrogen generation assembly still only requires a water supply and a carbon-containing feedstock supply.

It is also within the scope of the present disclosure that a feedstock delivery system 22 may deliver the components of the hydrogen production fluid, or feed stream, to the fuel processing assembly in two or more streams, with these streams having the same or different compositions. For example, when the fuel processor is adapted to produce hydrogen gas from a carbon-containing feedstock and water, these components are typically delivered in separate streams, and optionally (at least until both streams are vaporized or otherwise gaseous), when they are not miscible with each other, such as shown in Fig. 1 by reference numerals 17 and 18 optionally pointing to different feed streams.

It is within the scope of the present disclosure that heating fuel 13 may include any combustible liquid and/or gas that is suitable for being consumed by heating assembly 60 to provide the desired heat output. Some heating fuels 13 according to the present disclosure will be gases when delivered and combusted by heating assembly 60, while others will be delivered to the heating assembly as a liquid stream. Illustrative examples of suitable heating fuels include the previously discussed carbon-containing feedstocks, such as methanol, methane, ethane, ethanol, ethylene, propane, propylene, butane, and butanes, amongst others. Additional examples include low molecular weight condensable fuels such as liquefied petroleum gas, ammonia, lightweight amines, dimethyl ether, and low molecular weight hydrocarbons. Although not required to all embodiments, the heating fuel stream and the hydrogen-production fluid stream may have different individual or overall compositions and may be discharged from the feedstock delivery system in different phases. For example, one of the streams may be a liquid stream while the other is a gas stream. In some embodiments, both of the streams may be liquid streams. In some embodiments, both of the streams may be gas streams. In embodiments of a hydrogen generation assembly that include a temperature modulating assembly in the form of a cooling assembly instead of a heating assembly (such as may be used when an exothermic hydrogen-generating process is utilized instead of an endothermic process like steam reforming), it is within the scope of the present disclosure that the feedstock delivery system may be adapted to supply a fuel or coolant stream to the assembly. Any suitable fuel or coolant fluid may be used.

Illustrative, non-exclusive examples of suitable feedstock delivery systems that may be used with hydrogen-producing fuel processing assemblies (or hydrogen-generation assemblies) according to the present disclosure are disclosed in U.S. Patent Application Serial Nos. 11/228,637 (later published as US 7,601,302) and 11/096,827 (later published as US 7,470,293). The above applications also disclose additional examples of fuel processing assemblies, fuel cell systems, the components therefor, and methods for operating the same that may selectively be used and/or integrated with other components disclosed, illustrated and/or incorporated herein. Illustrative, nonexclusive examples of suitable hydrogen generation assemblies, and components thereof, are disclosed in U.S. Patent Nos. 6,221,117, 5,997,594, 5,861,137, and pending U.S. Patent Application Publication Nos. 2001/0045061, 2003/0192251, and 2003/0223926. Additional examples are disclosed in U.S. Patent Application Serial Nos. 10/945,783 (later published as US 7,297,183), 11/226,810 (later published as US 7,632,322), and 11/228,637 (later published as US 7,601,302).

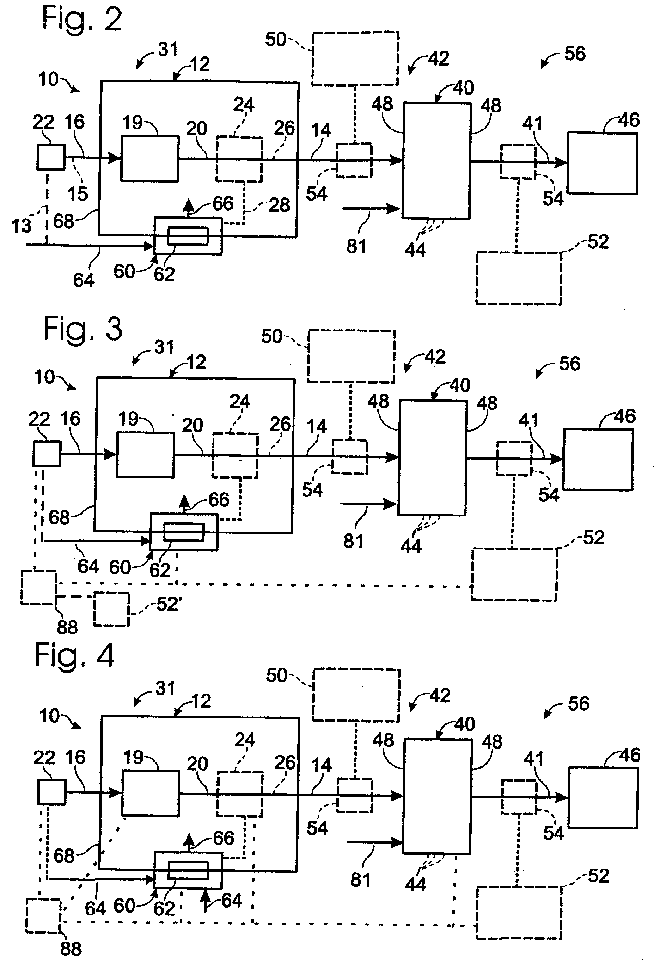

As discussed, product hydrogen stream 14 may be used in a variety of applications, including applications where high purity hydrogen gas is utilized. An example of such an application is as a fuel, or feed, stream for a fuel cell stack. A fuel cell stack is a device that produces an electrical potential from a source of protons, such as hydrogen gas, and an oxidant, such as oxygen gas. Accordingly, hydrogen generation assembly 10 may include or be coupled to at least one fuel cell stack 40, which is adapted to receive at least a portion of product hydrogen stream 14 and an air or other oxidant stream 81 to produce an electrical power output therefrom. This is schematically illustrated in Fig. 2, in which a fuel cell stack is indicated at 40 and produces an electric current, which is schematically illustrated at 41. Air stream 81 may be delivered to the fuel cell stack via any suitable mechanism, including passive or active mechanisms, and powered or manual mechanisms. When coupled to a fuel cell stack 40, the hydrogen generation assembly may be referred to as an energy producing system, or a fuel cell system, 42.

As used herein, hydrogen generation assembly 10 may also be described as being a fuel processing system, a fuel processing assembly, and/or a hydrogen-producing fuel processing system (or assembly). As used herein, energy-producing system 42 may be referred to as a fuel cell system or a hydrogen-producing fuel cell system. The present application incorporates by reference many different applications that disclose fuel processing assemblies, fuel cell systems, or components thereof. It is within the scope of the present disclosure that these systems and components, including the variations disclosed, illustrated, and incorporated therein and herein may be selectively combined and used or integrated together without departing from the scope of the present disclosure.

Stack 40 includes at least one fuel cell 44, and typically includes a plurality of fuel cells 44 that are adapted to produce an electric current from an oxidant, such as air, oxygen-enriched air, or oxygen gas, and the portion of the product hydrogen stream 14 delivered thereto. A fuel cell stack typically includes multiple fuel cells joined together between common end plates 48, which contain fluid delivery/removal conduits, although this construction is not required to all embodiments. Examples of suitable fuel cells include proton exchange membrane (PEM) fuel cells and alkaline fuel cells. Others include solid oxide fuel cells, phosphoric acid fuel cells, and molten carbonate fuel cells.

Fuel cell stack 40 may have any suitable construction. Illustrative examples of fuel cell stacks, and components thereof, are disclosed in U.S. Patent Nos. 4,214,969, 4,583,583, 5,300,370, 5,484,666, 5,879,826, 6,057,053, and 6,403,249. Further examples of fuel cell systems, stacks, and components thereof, that may be utilized in fuel cell systems, including hydrogen-producing fuel cell systems that include a hydrogen-producing fuel processing assembly, according to the present disclosure are disclosed in U.S. Patent Application Serial No. 11/150,615 (later published as US 2006-0246331), which is entitled "Partitioned Fuel Cell Stacks and Fuel Cell Systems Including the Same," was filed on June 10, 2005.

It is within the scope of the present disclosure that hydrogen generation assemblies 10 according to the present disclosure may be used in other applications in which it is desirable to have a source of hydrogen gas and/or may be used to produce hydrogen gas for storage and later consumption. In other words, while hydrogen generation assemblies 10 according to the present disclosure may be utilized with fuel cell stacks to provide a fuel cell system for satisfying an applied electrical load, it is also within the scope of the present disclosure that the hydrogen generation assemblies may be utilized independent of fuel cell stacks.

Energy producing, or fuel cell, system 42 may be adapted to supply power to meet the applied load from at least one energy-consuming device 46. Illustrative examples of energy-consuming devices include, but should not be limited to, motor vehicles, recreational vehicles, construction or industrial vehicles, boats and other sea craft, and any combination of one or more residences, commercial offices or buildings, neighborhoods, tools, lights and lighting assemblies, radios, appliances (including household appliances), computers, industrial equipment, signaling and communications equipment, radios, electrically powered components on boats, recreational vehicles or other vehicles, battery chargers, autonomous battery chargers, mobile devices, mobile tools, emergency response units, life support equipment, monitoring equipment for patients, and even the balance-of-plant electrical requirements for the energy-producing system 42 of which fuel cell stack 40 forms a part. As used herein, energy-consuming device 46 is used to schematically and generally refer to one or more energy-consuming devices that are adapted to draw power from an energy producing system, or fuel cell system, according to the present disclosure. It is also within the scope of the present disclosure that an energy-producing system according to the present disclosure, including such a system that includes a hydrogen generation assembly (or hydrogen-producing fuel processing assembly) according to the present disclosure, may be integrated or otherwise coupled to, or commonly housed within, at least one energy-consuming device to provide an energy-producing and consuming assembly, or system, as indicated generally at 56 in Fig. 2.

In the context of a portable energy producing system according to the present disclosure, the rate at which the hydrogen generation assembly is adapted to produce hydrogen gas, and the rated power output of fuel cell stack 40 contribute or otherwise define the number and/or type of energy-consuming devices that system 22 may be adapted to power. Therefore, although not required by all fuel energy producing systems (or hydrogen-producing fuel cell systems), including (but not limited to) smaller, portable energy producing systems according to the present disclosure, the system may be designed or otherwise configured to have a rated/intended maximum power output, and corresponding hydrogen gas production rate, of 1000 watts or less. In some embodiments, the system may be designed or otherwise configured to have a rated/intended maximum power output, and corresponding hydrogen gas production rate, and in some embodiments to have a rated/intended maximum power output of 500 watts or less. In some embodiments, the system may be designed or otherwise configured to have a rated/intended maximum power output, and corresponding hydrogen gas production rate, of 300 watts or less, or even 250 watts. The systems will typically have a rated, or maximum, power output of at least 100 watts, although this is not required to all embodiments. Illustrative, non-exclusive examples of power outputs of 1000 watts or less that may be utilized by systems according to the present disclosure include, but should not be limited to 800-500 watts, 500-750 watts, 750-1000 watts, 200-500 watts, 250-500 watts, 300-600 watts, and 400-800 watts. Illustrative, non-exclusive examples of power outputs of 500 watts or less that may be utilized by systems according to the present disclosure include, but should not be limited to, 25-500W, 50-200W, 50-250 W, 150-250 W, 350-450 W, 100-400 W, 100-300 W, and 250-450W. Illustrative, non-exclusive examples of power outputs of 300 watts or less that may be utilized by systems according to the present disclosure include, but should not be limited to 100-300 watts, 75-300 watts, 100-200 watts, 200-300 watts, 150-300 watts, and 250-300 watts. Typically these systems will be relatively lightweight and compact, such as sized for manual transport by an individual.

When fuel cell systems 42 are adapted to have a rated power output of 1 kW or less, such as discussed above, the corresponding hydrogen generation assembly 10 may be configured to provide an appropriate flow rate of hydrogen gas in product hydrogen stream 14 to enable the fuel cell stack, or stacks, to produce this power output. For example, the hydrogen generation assemblies illustrated herein may be adapted to produce less than 20 slm of hydrogen gas when operating at full capacity, with illustrative subsets of this range including less than 15 slm, less than 10 slm less than 5 slm, 13-15 slm, 3-5 slm, and 2-4 slm of hydrogen gas. For a system 44 rated to produces 250 watts/hr, an illustrative, non-exclusive example of a suitable capacity for hydrogen generation assembly 10 is 3-4 slm of hydrogen gas.

However, it is within the scope of the present disclosure that hydrogen generation assemblies (and energy-producing systems incorporating the same) according to the present disclosure may be constructed to any suitable scale, such as depending upon the desired flow rate of hydrogen gas in product hydrogen stream 14, the desired rated output of the energy producing system, the type and/or number of energy-consuming devices to be powered by the energy producing assembly, limitations on available size for the hydrogen generation assembly and/or the energy production assembly, etc. In some embodiments, it may be desirable to produce energy-production assemblies according to the present disclosure that have a rated (designed) power output in the range of 1-2 kW, with the assembly including a hydrogen generation assembly adapted to provide the requisite hydrogen gas to produce the required electricity to satisfy such an applied load. In other applications, it may be desirable for the assembly to have a power output in the range of 4-6 kW, such as to provide power to a household or other residence, small office, or other energy-consuming device with similar energy requirements.

It is within the scope of the present disclosure that embodiments of hydrogen generation assemblies, fuel processing assemblies, feedstock delivery systems, fuel cell stacks, and/or fuel cell systems that are disclosed, illustrated and/or incorporated herein may be utilized in combinations of two or more of the corresponding components to increase the capacity thereof. For example, if a particular embodiment of a hydrogen generation assembly is adapted to produce 3-4 slm of hydrogen gas, then two such assemblies may be used to produce 6-8 slm of hydrogen gas. Accordingly, the assemblies and systems disclosed herein may be referred to as scalable systems. It is within the scope of the present disclosure that the hydrogen generation assemblies, fuel processing assemblies, fuel cell stacks, fuel processors, and/or heating assemblies described, illustrated and/or incorporated herein may be configured as modular units that may be selectively interconnected together.

Fuel cell stack 40 may receive all of product hydrogen stream 14. Some or all of stream 14 may additionally, or alternatively, be delivered, via a suitable conduit, for use in another hydrogen-consuming process, burned for fuel or heat, or stored for later use. As an illustrative example, a hydrogen storage device 50 is shown in dashed lines in Fig. 2. Device 50 is adapted to store at least a portion of product hydrogen stream 14. For example, when the demand for hydrogen gas by stack 40 is less than the hydrogen output of fuel processor 12, the excess hydrogen gas may be stored in device 50. Illustrative examples of suitable hydrogen storage devices include hydride beds and pressurized tanks. Although not required, a benefit of fuel processing assembly 31 or fuel cell system 42 including a supply of stored hydrogen is that this supply may be used to satisfy the hydrogen requirements of stack 40, or the other application for which stream 14 is used, in situations when fuel processor 12 is not able to meet these hydrogen demands. Examples of these situations include when the fuel processor is starting up from a cold, or inactive state, ramping up (being heated and/or pressurized) from an idle state, offline for maintenance or repair, and when the fuel cell stack or application is demanding a greater flow rate of hydrogen gas than the maximum available production from the fuel processor. Additionally or alternatively, the stored hydrogen may also be used as a combustible fuel stream to heat the fuel processing assembly or fuel cell system. Fuel processing assemblies that are not directly associated with a fuel cell stack may still include at least one hydrogen-storage device, thereby enabling the product hydrogen streams from these fuel processing assemblies to also be stored for later use.

Fuel cell system 42 may also include a battery 52 or other suitable electricity-storing device that is adapted to store the electric potential, or power output, produced by stack 40. Similar to the above discussion regarding excess hydrogen, fuel cell stack 40 may produce a power output in excess of that necessary to satisfy the load exerted, or applied, by device 46, including the load required to power fuel cell system 42. In further similarity to the above discussion of excess hydrogen gas, this excess power output may be used in other applications outside of the fuel cell system and/or stored for later use by the fuel cell system. For example, the battery or other storage device may provide power for use by system 42 during startup or other applications in which the system is not producing electricity and/or hydrogen gas. In Fig. 2, flow-regulating structures are generally indicated at 54 and schematically represent any suitable manifolds, valves, controllers, switches and the like for selectively delivering hydrogen and the fuel cell stack's power output to device 50 and battery 52, respectively, and to draw the stored hydrogen and stored power output therefrom.

It is within the scope of the present disclosure that hydrogen generation assemblies and/or fuel cell systems may be free from computerized controllers and control systems. In such an embodiment, the system may be less complex in that it may not include as many sensors, communication linkages, actuators, and the like, and it may have lower balance of plant requirements than a comparable assembly or system that includes a controller. However, in some embodiments, it may be desirable to include a controller, such as to automate one or more operations of the assembly or system, to regulate the operation of the assembly or system, etc. In Fig. 3, an illustrative example of a controller is schematically illustrated at 88 and is shown being in communication with feedstock delivery system 22 and heating assembly 60 of the hydrogen generation assembly. In such a configuration, the controller may be adapted to control and/or regulate, at least the startup of the hydrogen generation assembly. Such a controller may additionally or alternatively, control and/or regulate the hydrogen-producing operating state of the assembly. Controller 88 may be powered by any suitable power source, such as battery 52. It is also within the scope of the present disclosure that controller 88 is powered by a power source other than battery 52, such as indicated at 52' in Fig. 3. It is also within the scope of the present disclosure that a controller 88 may be in communication with other components of the hydrogen generation assembly and/or fuel cell system, such as to monitor and/or control the operation thereof. Such a controller is schematically illustrated in Fig. 4 and is shown being in communication (via any suitable communication linkage for one or two way communication) with components of the fuel processing assembly (such as hydrogen-producing region 19 and purification region 24) and fuel cell stack 40.

As indicated in dashed lines in Fig. 5, fuel processing assemblies 10 according to the present disclosure may include a vaporization region 69 that is adapted to receive a liquid feed stream 16 (or a liquid component of feed stream 16, such as a stream of water 17 or a stream of a liquid carbon-containing feedstock 18) and to vaporize the feed stream (or portion thereof) prior to delivery to hydrogen-producing region 19 of fuel processor 12. As indicated schematically in Fig. 5, heated combustion stream 66 from the heating assembly may be used to vaporize the feed stream in vaporization region 69 and/or otherwise heat the feed stream. It is within the scope of the disclosure that fuel processor 12 may be constructed without a vaporization region and/or that the fuel processor is adapted to receive a feed stream that is gaseous or that has already been vaporized. It is also within the scope of the present disclosure that vaporization region 69, when present, extends partially or completely outside of shell 68 (when present).

Fuel processors 12, heating assemblies 60, and feedstock delivery systems 22 according to the present disclosure may be configured in any of the arrangements described, illustrated and/or incorporated herein. In some embodiments, features or aspects from one or more of the above described configurations may be combined with each other and/or with additional features described herein. For example, it is within the scope of the present disclosure that fuel processing assemblies 10 that include at least one purification region 24 may (but are not required to) house the hydrogen-producing region 19 and at least a portion of the purification region together in a common housing, with this housing optionally being located within the shell 68 of the fuel processor. This is schematically illustrated in Fig. 6, in which reference numeral 25 generally indicates a hydrogen-producing region 19 of a fuel processor, with the hydrogen-producing region being contained within a housing, or vessel, 27 that contains at least the reforming (or other) catalyst 23 used to produce the mixed gas stream from the feed stream that is delivered to the hydrogen-producing region.

As indicated in dashed lines in Fig. 6, shell 27 (and thereby region 25) may, but is not required to, also include a purification region 24. For example, as illustrated in dashed lines in Fig. 6, the purification region, when present in the housing, may include one or more hydrogen-selective membranes 30 and/or a chemical carbon monoxide removal assembly 32. Accordingly, region 25 may be described as a hydrogen-producing and purifying region when it contains both a hydrogen-producing region 19 and a purification region 24. It is within the scope of the disclosure that any of the regions 19 and 24 described, illustrated and/or incorporated herein may be used in region 25. When region 25 does not include a purification region, it may simply be described as a hydrogen-producing region 19 that includes a housing 27. When housing 27 includes a purification region 24, it is still within the scope of the present disclosure that the fuel processing assembly may include one or more additional purification regions (such as which may include the same or different purification devices/mechanisms) external (i.e., downstream from) housing 27. The fuel processing assemblies illustrated herein thereby include a hydrogen-producing region that is contained in a housing, with this housing optionally also containing a purification region. As also illustrated in Fig. 6, it is within the scope of the present disclosure that vaporization region 69, when present, may extend partially or completely within housing 27.

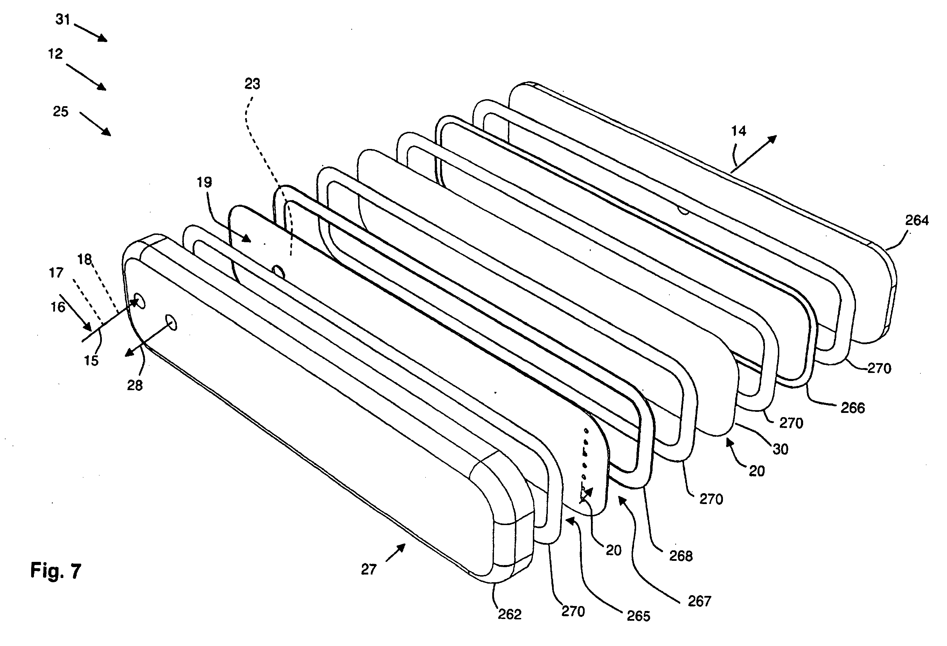

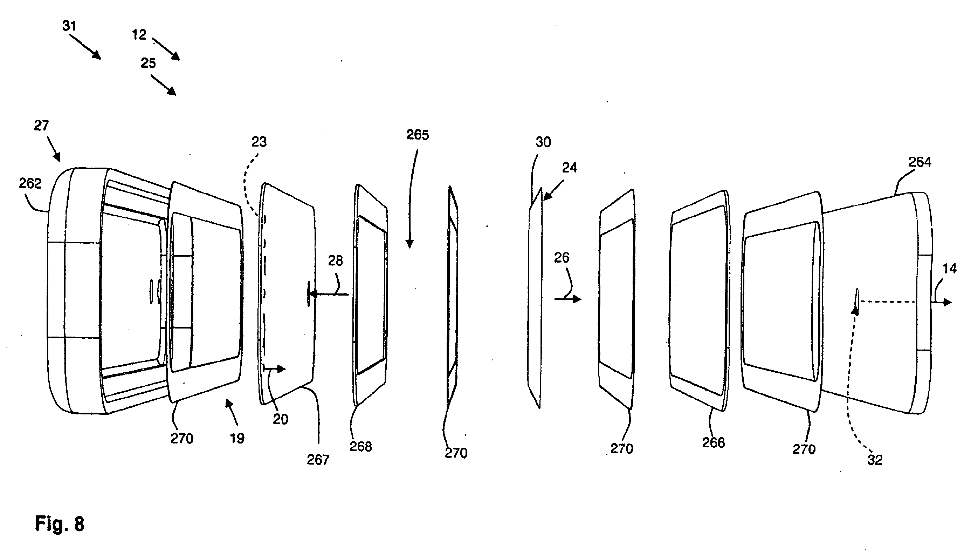

An illustrative, less schematic example of a fuel processor that includes a hydrogen producing region and at least one purification region 24 housed within a common, sealed, shell 27 is shown in Figs. 7 and 8. In the illustrative, non-exclusive example, hydrogen-producing region 19 includes a steam reforming catalyst 23, and purification region 24 includes at least one hydrogen-selective membrane 30 that is supported within the shell and positioned to receive the mixed gas stream 20 produced by the reforming reaction and to divide this stream into a byproduct stream 28 and a hydrogen-rich stream from which product hydrogen stream 14 is formed. In the illustrative example that is perhaps best seen in Fig. 8, the hydrogen-producing region is separated from the membrane by a catalyst plate 267 having apertures distal the region of the hydrogen-producing region in which the feed stream is introduced into the hydrogen-producing region. The reformate, or mixed gas, stream that is produced in the hydrogen-producing region flows through these apertures into contact with the mixed gas, or feed, surface of membrane 30. The portion of the mixed gas stream the permeates through the membrane forms a hydrogen-rich stream 26, which may be withdrawn from shell 27, such as to form product hydrogen stream 14, while the portion of the mixed gas stream that does not pass through membrane 30 is withdrawn from the shell as byproduct stream 28.

As shown, shell 27 includes end plates 262 and 264, which are adapted to be secured together to define a sealed pressure vessel having an interior compartment 265 in which the hydrogen-producing and separation regions are supported. Any suitable process may be utilized to seal the portions of shell 27 together. Also shown is a support 266 for membrane 30. Support 266 should be formed from a porous material through which the portion of the mixed gas stream that permeates through membrane 30 may flow. Also shown are various support plates and sealing gaskets 268 and 270.

It is within the scope of the present disclosure that more than a single membrane 30 or other purification device may be used in a single shell 27 and/or fuel processing assembly 31. This is schematically illustrated in dashed lines in Fig. 8, in which methanation catalyst 32 is shown proximate the output port from which the hydrogen-rich stream is withdrawn from the shell. In such an embodiment, the methanation (or other carbon monoxide removing) catalyst may be located in any suitable position downstream from the hydrogen-selective membrane. The methanation catalyst may also be located in a fluid conduit that extends in fluid communication from the shell and through which the hydrogen-rich stream flows from the shell.

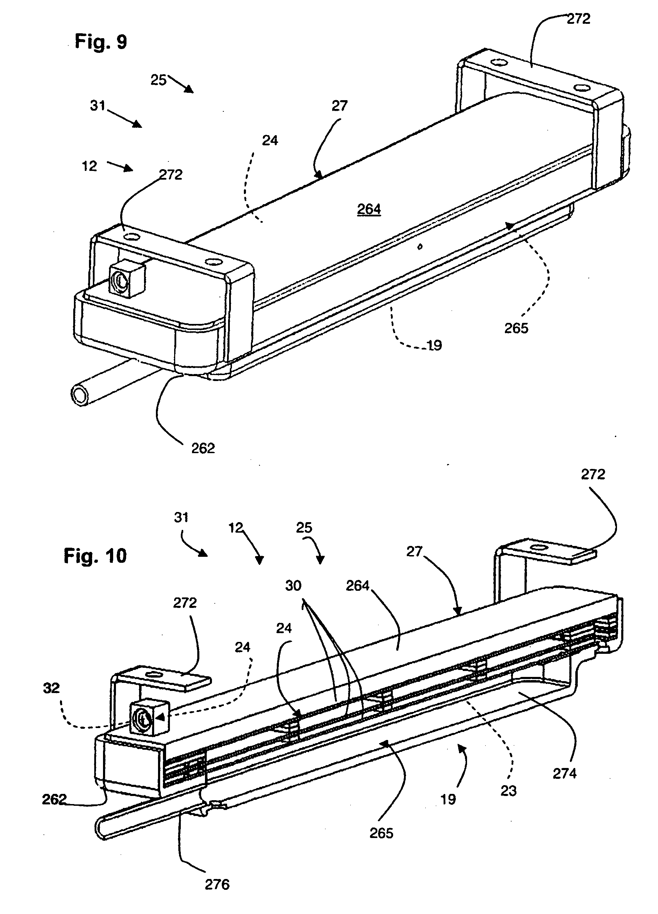

Another illustrative example of a suitable configuration for a fuel processor that includes a sealed shell 27 that contains a hydrogen-producing region 19 and at least one purification (or separation) region 24 is shown in Figs. 9-11. Accordingly, Figs. 9-11 may be described as providing additional illustrative examples of a suitable hydrogen-producing region that may be used in hydrogen-producing fuel processing assemblies and fuel cell systems according to the present disclosure. The shell 27 is formed, in the illustrated example, from plates, or shell portions, 262 and 264 that define an internal compartment 265 into which the hydrogen producing region, and optionally one or more purification regions, is/are housed. The illustrated elongate shape of the shell, and corresponding hydrogen-producing region 19, is not required, and other shapes and configurations may be used without departing from the scope of the present disclosure. In Figs. 9 and 10, optional mounts 272 are shown projecting from shell 27. Mounts 272 may be utilized to secure the shell in a desired position within the housing 68 within which the rest of the fuel processor and/or fuel processing assembly is located. The number and configuration of these optional mounts may vary without departing from the scope of the present disclosure.

Similar to the illustrative example of Figs. 7 and 8, the housing may be a sealed housing, in that the end plates of the housing may be welded or otherwise sealed together after assembly of the internal components contained therewithin. However, welding or other sealing of the housing is not required to all embodiments. Accordingly, it is within the scope of the present disclosure that a housing, or other vessel, may be used that is adapted to be repeatedly disassembled or otherwise opened, and thereafter reassembled, without destruction of the housing. As discussed and disclosed in the above U.S. Patent Application Serial No. 10/945,783 (later published as US 7,297,183), it is within the scope of the present disclosure that various ones of the seals around the hydrogen-selective membranes may be formed through welding, brazing, diffusion-bonding, or other process in which the membrane is actually consumed to form part of the seal.

In Figs. 9-11, and as perhaps best seen in Fig. 10, hydrogen-producing region 19 includes a catalyst region, or compartment, 274 that is sized to receive a sufficient quantity of the catalyst, such as reforming catalyst 23, for the hydrogen-generating reaction performed in the hydrogen-producing region. Also shown is an access port 276 that extends linearly from the catalyst region within the plane of the catalyst region and parallel to the long axis of the catalyst region. Such a construction, in which the access port does not include an elbow or other turn, is not required but may promote easier loading and unloading (i.e., removal) of the catalyst. For example, the linear extension of the access port enables catalyst to be poured into the catalyst region, or bed, through the access port and even permits the introduction of a rod or other member to compress or otherwise distribute or position the catalyst within the region.

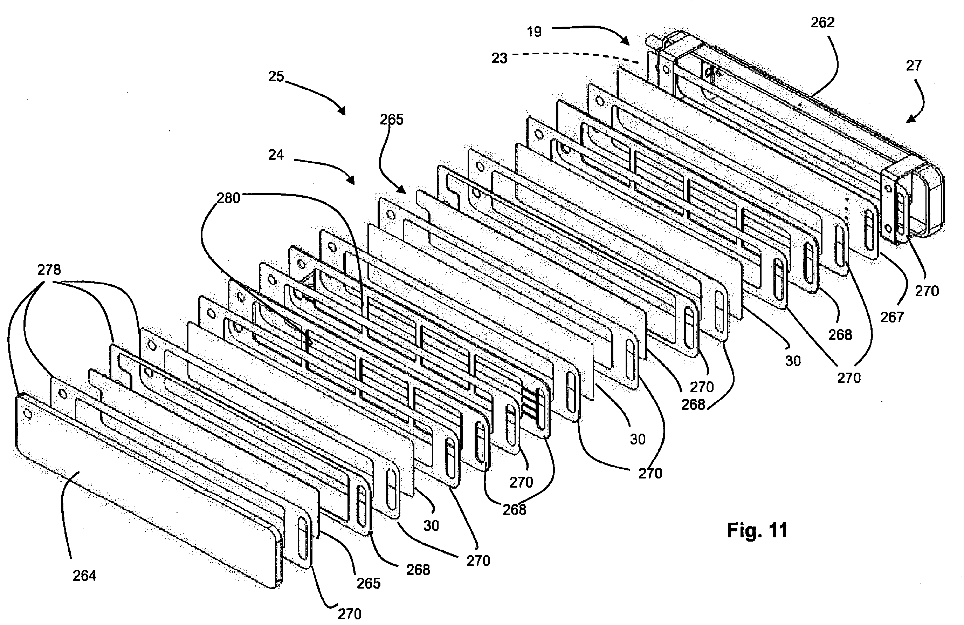

As indicated in Figs. 10 and 11, and as perhaps best seen in Fig 11, shell 27 contains a plurality of hydrogen-selective membranes 30. The membranes are supported in spaced-apart relationships relative to each other, with various gaskets and spacers being utilized to define flow paths between the membranes for the mixed gas (or reformate) stream, the streams containing purified hydrogen gas that has permeated through one of the membranes, and streams containing the portion of the mixed gas stream that has not permeated through the membranes and which will form a byproduct stream. As illustrated, the hydrogen-producing region is housed with three hydrogen-selective membranes that are spaced-apart from each other by various gaskets, screens or other porous supports, frames and the like. It is within the scope of the present disclosure that more or less membranes, and corresponding supports, plates, gaskets, etc., may be used without departing from the scope of the present disclosure. For example, the inclusion of additional membranes may increase the recovery of hydrogen gas from the mixed gas stream that is produced in the hydrogen-producing region.

As illustrated, the plates and gaskets are sized with asymmetrical shapes so that these components may only be located in the housing in a predetermined configuration. This is not required, but it may assist in assembly of the components because they cannot be inadvertently positioned in the housing in a backwards or upside-down configuration. In the illustrative example of a suitable asymmetrical shape, a corner region 278 of the various components within the shell has a different shape than the other corner regions, with this difference being sufficient to permit that corner to be only inserted into one of the corresponding corner regions of the shell's internal compartment. Accordingly, the shell may be described as being keyed, or indexed, to define the orientation of the gaskets, frames, supports and similar components that are stacked therein.

In Fig. 11, several feed plates are shown that include (optional) spaced-apart mixing bars 280. The mixing bars promote turbulent flow in the mixed gas stream that is delivered in contact with the adjacent hydrogen-selective membranes, thereby promoting contact between the hydrogen gas and the membranes, and thereby promoting permeation of the hydrogen gas through the membranes. When present, the mixing bars preferably define gas flow passages on both sides thereof, and preferably do not contact the adjacent membranes.

Shell 27 may further include a chemical purification region, such a region containing a suitable methanation catalyst 32. Additionally or alternatively, the methanation catalyst, when present, may be contained downstream of shell 27, such as in the conduit through which the hydrogen-rich stream leaves the housing, as indicated in dashed lines in Fig 10.

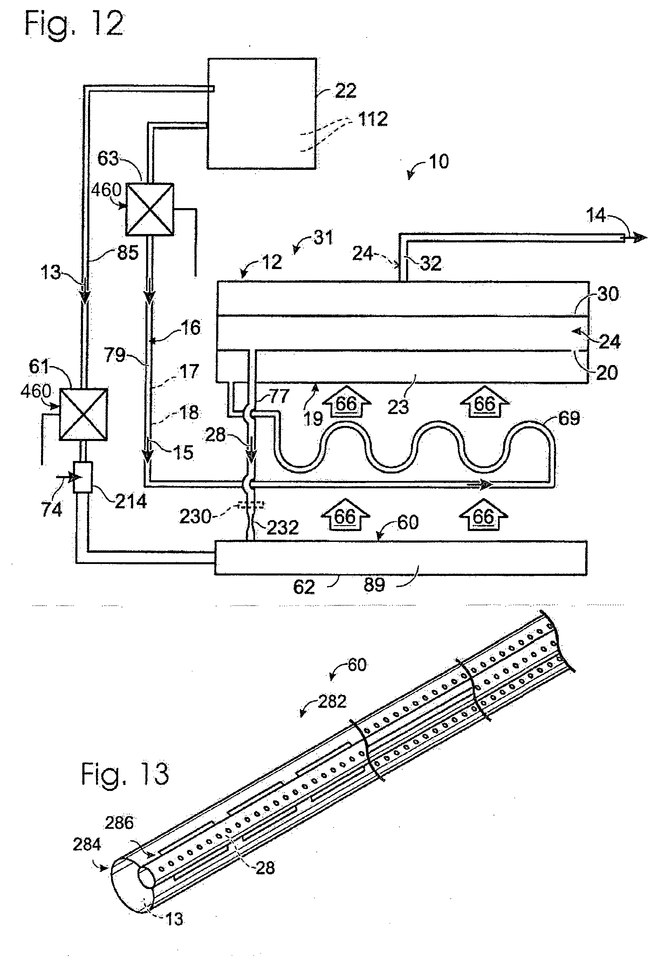

An illustrative, non-exclusive example of a hydrogen generation assembly 10 according to the present disclosure is shown schematically in Fig. 12 and generally indicated at 10. The hydrogen generation assembly illustrated in Fig. 12 will be described as being configured to produce hydrogen gas through a steam reforming reaction in which hydrogen-producing region 19 includes a steam reforming catalyst 23 and hydrogen-production fluid 15 (i.e., feed stream(s) 16) includes water 17 and a carbon-containing feedstock 18. Accordingly, the illustrative hydrogen generation assembly described in this example may be referred to as a stream reformer, with the hydrogen-producing region being referred to as a reforming region, and the mixed gas stream 20 produced in the hydrogen-producing region being referred to as a raffinate stream.

For the purpose of providing a specific, although not exclusive or required, example, the following discussion will refer to the carbon-containing feedstock as including or being methanol and the heating fuel as including or being propane. It is within the scope of the present disclosure that other mechanisms for producing hydrogen gas from hydrogen-production fluid 15 may additionally or alternatively be used. Similarly, other heating fuels and hydrogen production fluids may be used. For example, fluid 15 may be include water, such as up to, or even more than 25 wt% water, in addition to methanol or another water-soluble carbon-containing feedstock. As another example, the combustible fuel may be a liquid when delivered to the heating assembly and/or when withdrawn from the feedstock delivery system. In Fig. 12, the hydrogen-production fluid and the heating fuel are illustrated being delivered to the hydrogen-production region and the heating assembly, respectively through fluid conduits 85 and 79. It is within the scope of the present disclosure that any suitable number and configuration of such conduits may be utilized. As discussed, in some embodiments, it may be desirable for the conduits to pass in thermal communication with the heated exhaust stream, such as to preheat the fluid contained in the conduits. In Fig. 12, a valve assembly 460 is shown including valves 61 and 63 that are adapted to selectively restrict or permit flow of the heating fuel and the hydrogen-production fluid. This construction is not required to all embodiments. When present, the valves and/or valve assembly may be configured for manual operation, such as by an operator proximate the hydrogen generation assembly, and/or automated, or controlled, actuation, such as responsive to input commands from a controller. The schematically illustrated feedstock delivery system of Fig. 12 may include, or be in fluid communication with, any suitable type and/or number of sources, or supplies, 112 for the streams to be delivered thereby.

In the illustrated example shown in Fig. 12, the heating assembly 60 takes the form of a burner 62 that combusts the heating fuel with air to produce heated exhaust stream 66. Heating assembly 60 may utilize an ignitor or any other suitable ignition source 89, such as those discussed herein, for initiating combustion of the heating fuel. It is also within the scope of the disclosure that the heating assembly includes a combustion catalyst in place of the burner.

The heating assembly typically also receives an air stream to support the combustion occurring therein. The air stream may be delivered via any suitable air delivery assembly, such as a blower, fan, compressor, or the like. It is also within the scope of the present disclosure that the air is drawn from the environment within which the heating assembly is used, with no air delivery assembly, much less an electrically powered air delivery assembly, being required. As a further variation, when the hydrogen generation assembly is coupled to a fuel cell stack and/or an energy-storage device, the stack and/or energy-storage device may power an air delivery assembly. In the illustrative example, air stream 74 is combined with the heating fuel supply stream 64 prior to entering the heating assembly. As shown, the air stream is mixed with heating fuel 13 at an air entrainment area 214 prior to entering the heating assembly. Additionally or alternatively, the air supply may enter the heating assembly 60 separately from the heating fuel.

The heated exhaust stream 66 from the heating assembly is shown heating the hydrogen-production fluid 15 prior to the fluid being delivered to the hydrogen-producing region, with the heated exhaust stream also heating the hydrogen-producing region. When the heating fluid is a liquid stream when it is delivered to the fuel processor, the stream may be vaporized by the heated exhaust stream from the heating assembly in a vaporization region 69. In Fig. 12, the vaporization region has been some what schematically illustrated as including a sinusoidal configuration to graphically illustrate that the region may be shaped and/or positioned in any suitable configuration to provide the required heating (i.e., exposure time) to the heated exhaust stream. As illustrated, the sinusoidal region has been rotated 90° from the generally horizontal configuration that may be used in some embodiments. It is additionally or alternatively within the scope of the disclosure that at least a portion, if not all, of the hydrogen-production fluid is a gaseous composition and/or is already vaporized prior to exposure to the heated exhaust stream from the heating assembly and/or prior to being delivered to the fuel processing system.

As illustrated in Fig. 12, the vaporized hydrogen-production fluid stream is delivered to the hydrogen-producing region 19 of the fuel processing system In the illustrative steam reformer example, reforming catalyst 23 in the hydrogen-producing region produces from fluid 15 a mixed gas stream 20 containing hydrogen gas and other gases, with the hydrogen gas being present as a majority component. Any suitable reforming catalyst may be used, such as those available from Süd Chemie, BASF and others. The reforming catalyst may be disposed in the hydrogen-producing region in any suitable form, such as catalyst beds, as a coating on structure within this region, as pellets, as powder, etc.

As also shown in Fig. 12, the fuel processing system also includes a separation region 24 (which, as discussed, may also be referred to as a purification region) that receives mixed gas, or reformate, stream 20 from the hydrogen-producing region. As shown, separation region 24 includes at least hydrogen-selective membrane 30, with product hydrogen stream 14 being formed from the portion of the mixed gas stream that passes through the at least one hydrogen-selective membrane and byproduct stream 28 being formed from the portion of the mixed gas stream that does not pass through the at least one hydrogen-selective membrane. Also shown in Fig. 12 is a graphical example of a fuel processing assembly that includes more than one separation region 24 and/or more than one mechanism for removing impurities from the produced hydrogen gas. As shown in dashed lines is a second separation region 24 that includes a methanation catalyst 32 that is adapted to reduce the concentration of any carbon monoxide in the product hydrogen stream. This second separation region may be referred to as a methanation region.

When the byproduct stream has sufficient fuel value to be used as a fuel stream for heating assembly 60, at least a portion of the byproduct stream may be delivered to the heating assembly for consumption as a fuel stream. This is illustrated in the example shown in Fig. 12 in which fluid conduit 77 is configured to deliver byproduct stream 28 to be used as a combustible fuel for heating assembly 60. As discussed, is within the scope of the present disclosure that the entire fuel requirements of the heating assembly to maintain the hydrogen-producing region within a suitable temperature range for producing hydrogen gas may be provided by the byproduct stream. In some embodiments, it may be desirable to include some of the produced hydrogen gas in the byproduct stream to increase the fuel value of the byproduct stream. This may be accomplished by such illustrative mechanisms as mixing some of the product hydrogen stream with the byproduct stream, separately delivering some of the product hydrogen stream to the heating assembly, and designing the separation region to leave sufficient amounts of hydrogen gas in the byproduct stream. While this may reduce the overall efficiency of the hydrogen-producing region, i.e., the amount of hydrogen gas obtained per unit of hydrogen-producing fluid, it may be desirable in some applications because a separate fuel stream does not need to be supplied to the heating assembly during operation of the hydrogen-producing region. Instead, as the hydrogen gas is generated, some of the generated hydrogen gas, and byproducts from this reaction, are delivered to the heating assembly to maintain the hydrogen-producing region within a desired temperature range. In embodiments where the fuel processor does not include a separation region, this configuration may still be achieved by diverting or otherwise delivering some of the product hydrogen stream to the heating assembly for consumption as a combustible fuel stream.

In the illustrative example shown in Fig. 12, hydrogen generation assembly 10 includes an optional filter 230 through which the byproduct stream passes prior to being consumed as a fuel stream in the heating assembly. Also shown is an optional restricted flow orifice 232. Orifice 232 is adapted to created backpressure on the hydrogen generation assembly by limiting the flow rate of byproduct stream 28 that may pass therethrough. As discussed in more detail herein, orifice 232 may be helpful in conserving fluid 15 in times when there is less demand for product hydrogen stream 14 while still maintaining the fuel processing system in a hydrogen-producing, or active, operating state, as opposed to an idle operating state in which little or no hydrogen gas is being produced, or a shutdown operating state, in which the flow of hydrogen-production fluid to the fuel processing system has been stopped.

For example, the hydrogen-production fluid 15 may be delivered to hydrogen-producing region 19 at a pressure in the range of 345 - 1725 kPa (50-250 psi), with this pressure being established at least in part by the pressure at which the hydrogen-production fluid is discharged from the feedstock delivery system (including, but not limited to, from the subsequently discussed pressure vessel 459 or any other pressurized source 499 used in a particular embodiment). The pressure in byproduct stream 28 and product hydrogen stream 14 will be less than the delivery pressure, at least partially due to the pressure-driven separation process described in the illustrative example. In times at which there is demand for the hydrogen gas produced by the hydrogen generation assembly, the hydrogen gas is drawn from the fuel processing system as it is separated from the mixed gas stream. Similarly, the byproduct stream is also withdrawn from the fuel processing system. Some backpressure on the byproduct stream may increase the separation produced in the separation region by urging more hydrogen gas to pass through the hydrogen-selective membrane than would occur if orifice 232 was not exerting backpressure on the byproduct stream, and thereby the rest of the fuel processing system.

When there is less demand for product hydrogen stream 14, the flow rate of hydrogen gas in this stream may be limited or even stopped, via a suitable valve assembly or other flow-regulating device, such as may be included downstream from separation region 24. When this occurs, there will be a greater partial pressure of hydrogen gas on the permeate side of the hydrogen-selective membrane, thereby resulting in less hydrogen gas permeating through the membrane. This, in turn, results in more hydrogen gas and a greater overall flow rate in byproduct stream 28. Without restricting or otherwise limiting the flow of this stream, the stream would simply flow to the heating assembly or other destination. This may not negatively affect the operation of the system; however, it may be wasteful from a hydrogen-production fluid standpoint. In some embodiments, the increased flow of byproduct stream 28 and/or the additional hydrogen content of this stream may cause the overall temperature of the hydrogen-producing region to be increased because the burner assembly is consuming more fuel and/or fuel having a greater heating value. It is also possible that the flow rate of byproduct stream 28, if sufficiently high, may flood or otherwise impair the operation of the burner. It is within the scope of the present disclosure to include bypass valves, vents, and other structure to selectively divert a portion of the byproduct stream so that it is not delivered as heating fuel to the burner assembly. As discussed, this also may not be a concern in some embodiments, such as when the byproduct stream is not consumed as a heating fuel for a heating assembly for the fuel processing system.

By exerting backpressure on the system via orifice 232 or other suitable structure, the backpressure may result in less comparative flow of hydrogen-production fluid from the feedstock delivery system during times when the flow rate of product hydrogen stream is limited or stopped, such as from a position downstream from the separation assembly. A potential benefit of using orifice 232 is that the operation of the hydrogen generation assembly is automatically regulated, or stabilized, through the presence of the orifice without requiring complex, typically electrically powered, controllers, sensors and/or related structure. Filter 230 and/or orifice 232 may be, but are not required to be, utilized with any of the hydrogen generation assemblies described, illustrated, and/or incorporated herein.

During startup of the hydrogen generation assembly, heating fuel 13 is initially delivered to the heating assembly, where it is ignited through any suitable mechanism to produce exhaust stream 66. This stream, in turn, is used to heat at least the hydrogen-producing region to a suitable temperature for producing hydrogen gas from the particular fluid 15 being utilized (i.e., to at least a minimum hydrogen-producing temperature). In embodiments of hydrogen generation assemblies 10 that utilize a controller, the controller may be adapted to detect whether ignition of the fuel has commenced. This detection may utilize any suitable sensor. Illustrative, non-exclusive examples of which include optical sensors and thermal sensors, such as thermocouples. If ignition did not occur, the controller may be configured to stop the flow of fuel and/or fluid by the feedstock delivery system (such as by closing valves 461 and 463, stopping pumps that are utilized to propel the fuel/fluid, etc.).

Once the hydrogen-producing region is sufficiently preheated, the flow of heating fuel may be stopped and the flow of hydrogen-production fluid may commence. This transition may (but is not required to) include a brief period in which neither fuel 13 nor fluid 15 are delivered to the hydrogen-producing region or the heating assembly, or no such period may occur. For example, the flow of fuel 13 may be stopped as the flow of fluid 15 is started, or there may be a period in which fuel 13 is being delivered to heating assembly 60 and hydrogen-production fluid is being delivered to hydrogen-producing region 19. In the illustrative example, the reactants utilized in hydrogen-producing region 19 are delivered in stream 64. However, it is within the scope of the present disclosure that the hydrogen-producing region receives at least one additional reactant or other fluid stream. A benefit of all of the reactants being delivered in stream 64 is that the reactants may be heated as a unit, are at the same pressure, and do not require separate delivery systems or mechanisms.

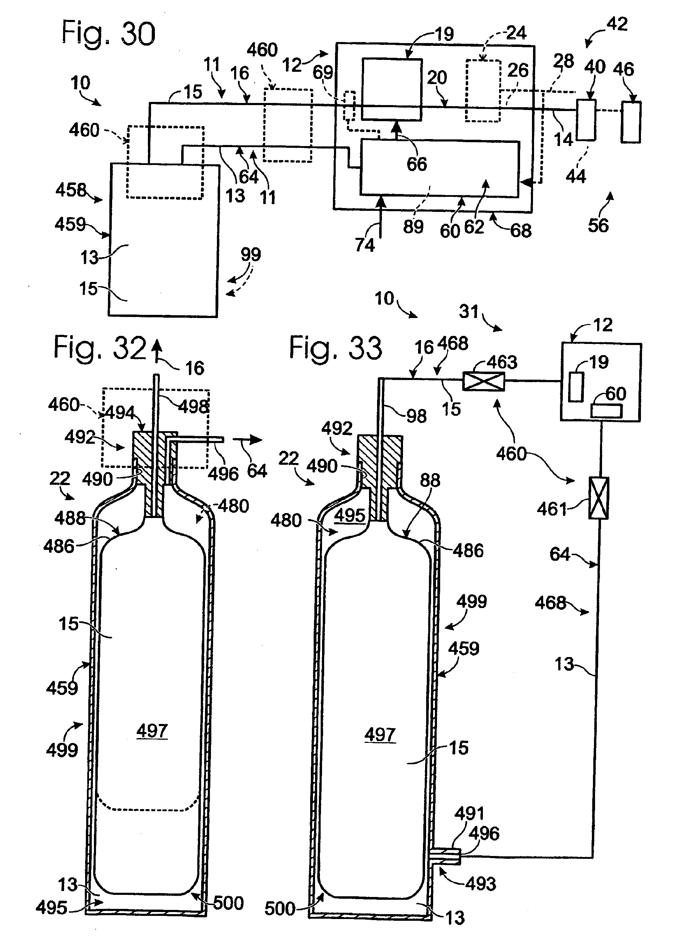

As discussed, and while not required to all embodiments, it is within the scope of the present disclosure that hydrogen generation assembly 10, and/or energy-producing systems 42 incorporating the same, may be constructed to have minimal, if any, balance-of-plant power requirements. By this it is meant that the system may be implemented without requiring much of the fluid-delivery equipment, controllers, and other electronic equipment conventionally utilized for these assemblies and/or systems. As discussed, the heating fuel and hydrogen-production fluid may be stored under pressure, even in embodiments in which one of these fluids is a liquid as dispensed from the feedstock delivery system. For example, the hydrogen-production fluid may be an alcohol, a liquid hydrocarbon, and/or a mixture of water with a liquid alcohol or hydrocarbon. Where conventionally a pump and/or compressor would be utilized to drawn this stream from a supply and to deliver it under a suitable pressure to the hydrogen-producing region, the feedstock delivery systems discussed, illustrated and/or incorporated herein may be (but are not required to be) adapted to draw and deliver the heating fuel to the hydrogen generation assembly's heating assembly and the hydrogen-production fluid to the assembly's hydrogen-producing region without requiring the use of pumps or compressors. Furthermore, the fuel and fluid may be commonly housed in a fuel canister and yet still be available for separate delivery. The consolidation of both the fuel and fluid into the same pressure vessel may increase the compactness and/or portability of the system. Illustrative, non-exclusive examples of feedstock delivery systems that utilize such a canister, or pressurized vessel, are discussed in connection with Figs. 30-35.

As discussed, it is within the scope of the present disclosure that the flow of the heating fuel and hydrogen-production fluid may be controlled by a valve assembly, such as when the heating fuel and hydrogen-production fluid are stored or available in a pressurized condition. As an illustrative example, the flows may be regulated by valve assembly 460, such as which may include two valves or a three-way or other valve that provides for at least three flow configurations. Therefore, responsive to a first user input that initiates the flow of heating fuel to the burner assembly, the hydrogen producing region will start being preheated, either upon initiating the flow of the heating fluid or upon also actuating an ignition source.

This actuation of the ignition source, when necessary, may be coupled to the actuation of the valve assembly so as to occur automatically responsive to actuation of the valve assembly, or may be independently initiated, such as by an operator. Ignition may be manually actuated, such as by a user when the flow of heating fuel is initiated. It is also within the scope of the present disclosure that the ignition source is adapted to ignite automatically upon receipt of the heating fuel stream, such as when the ignition source includes a combustion catalyst. As a further example, the ignition source may be operatively coupled to the switch used to initiate the flow of heating fuel to the heating assembly so that the ignition source is actuated as, or within a selected time period after, the flow of heating fuel is commenced. As yet a further illustrative, non-exclusive example, when the system includes a battery 52 or other energy-storage device, such as a capacitor, ultracapacitor, or flywheel, this device may be utilized to power the ignition source for a sufficient period to initiate combustion of the heating fuel.

For a steam reforming reaction utilizing a hydrogen-production fluid containing methanol and water, the hydrogen-production region is preferably heated to at least 300° C. Illustrative examples of threshold preheating temperatures include 300° C, 325° C, 350° C, 375° C, 400° C, a temperature of at least 350° C, a temperature in the range of 350-450° C, a temperature in the range of 350-400° C, a temperature in the range of 375-425° C, etc. The desired threshold temperature upon detection of which the flow of hydrogen-production fluid will be commenced may vary depending upon such factors as the mechanism by which hydrogen gas is produced, whether the heating assembly will continue to be supplied with heating fuel after the flow of hydrogen-production fluid is commenced, the rate and/or time period for which this supply of heating fuel will continue to be supplied to the heating assembly, the composition of the hydrogen-production fluid, the environment in which the hydrogen-generation assembly is being used, user preferences, etc.

The determination that the hydrogen-producing region has been heated to a selected threshold temperature may be accomplished via any suitable mechanism and/or method. For example, a temperature sensor may be used to indicate the temperature of the hydrogen-producing region. An operator may manually detect the temperature, and if it is within an acceptable temperature range, commence the flow of hydrogen-production fluid to the hydrogen-producing region and/or stop or reduce the flow of heating fuel to the heating assembly, such as by simply actuating valve assembly 460. It is also within the scope of the present disclosure that the temperature sensor is coupled to the valve assembly, such as via a suitable temperature-driven solenoid or actuator, to automatically commence the flow of hydrogen-production fluid and/or reduce or stop the flow of heating fuel when the preselected threshold temperature has been detected. For example, a bimetallic temperature sensor, solenoid or other detector or actuator may be utilized.

The time required to preheat the hydrogen-producing region should be reproducible as long as the heating fuel, operating environment or other parameters are not changed. Therefore, a timer may be used to indicate when an acceptable amount of time has elapsed, with this threshold time corresponding to a previously determined time period within which the hydrogen-producing region was preheated to an acceptable temperature. The timer may be adapted to provide a visual, audible or other signal to an operator. It is also within the scope of the disclosure that the timer is coupled to the valve assembly to automatically commence the flow of hydrogen-production fluid and/or to stop or reduce the flow of heating fuel upon expiration of the preselected time period.

When the hydrogen-producing region has been heated to a suitable temperature for producing hydrogen gas via the steam reforming or other mechanism by which the region is adapted to operate, and the flow of hydrogen-production fluid to the hydrogen-production region has commenced, hydrogen gas will start being produced in the hydrogen-production region upon delivery of fluid 15 thereto. As discussed, it is within the scope of the present disclosure that this may have occurred by two actuations of the valve assembly, or less, and optionally with actuation of an ignition source. The byproduct stream produced in separation region 24 may be adapted to have sufficient fuel value to provide the heating fuel for the heating assembly when the hydrogen generation assembly is producing a product hydrogen stream. Therefore, the assembly may be self-sustaining within a range of suitable operating temperatures as long as the supply of hydrogen-production fluid is not exhausted. Should this occur the system may be adapted to automatically shutdown because the lack of flow of hydrogen-production fluid also means that there will not be a flow of product hydrogen steam 14 or byproduct stream 28.

When hydrogen generation assembly 10 is coupled to a fuel cell stack 40 to provide an energy-producing system 42, the stack may be adapted to automatically produce an electric current upon delivery of product hydrogen stream 14 and an air stream 74 or other oxidant stream to the fuel cell stack. The flow of hydrogen gas to the stack will typically occur within seconds after the flow of fluid 15 to the preheated fuel processing system is commenced. The air stream may be adapted to be automatically delivered to the fuel cell stack, such as when the stack includes an open cathode construction in which air is drawn automatically from the environment in which the stack is used without requiring fans, blowers, or compressors. In such an embodiment, the energy-producing system automatically produces this current and/or powers the operation of an energy-consuming device (which may be electronically connected to the energy-producing system 42 and/or integrated therewith), while only requiring the minimal operator inputs described above. In some embodiments, the fuel cell stack may include an electrically powered fan or blower that is powered by the fuel cell stack, with an initial supply of air being provided by the operator. As a further variation, this initial supply may be provided by a fan or other blower that is powered by a battery or other energy-storage device. Upon generation of an electric current in the fuel cell stack, this battery or other energy-storage device would no longer be needed, as the stack could meet the power requirements of such an air delivery system. When an electric ignition source and/or time is utilized in the heating assembly and/or hydrogen generation assembly, the battery or other energy-storage device may also provide the power thereto. In experiments, the energy requirements of these devices tend to be very small and of short duration, although this is not required to all embodiments.

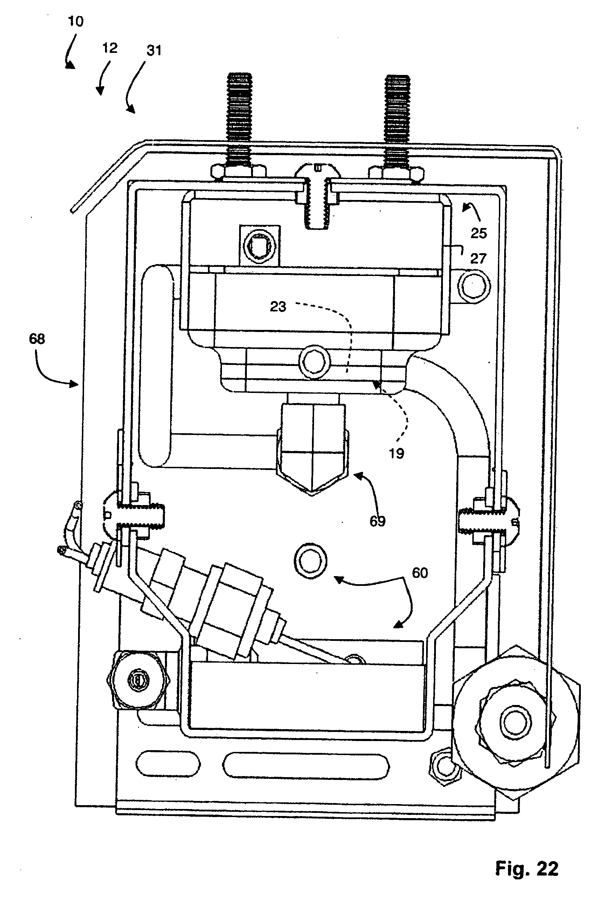

Illustrative, non-exclusive examples of fuel processing assemblies 31, and hydrogen generation assemblies 10 containing the same, that are adapted to produce product hydrogen stream 14, are discussed with respect to Figs. 13-22. In the following discussion, hydrogen production fluid 15 will be discussed as a mixture of methanol and water, although it is within the scope of the present disclosure that any of the carbon-containing feedstocks 18 and/or hydrogen production fluid compositions discussed and/or incorporated herein may be utilized The following examples will provide illustrative, non-exclusive examples of feedstock delivery systems that are adapted to deliver liquid and gas fuel streams to the corresponding heating assemblies. The illustrative examples are intended to illustrate examples of suitable constructions, without requiring the same or otherwise limiting the scope of the present disclosure.

By returning briefly to Fig. 12, the illustrative example, which may be implemented with any of the shells 27, feedstock delivery systems, etc. discussed, illustrated and/or incorporated herein, the heating assembly is adapted to receive and combust the byproduct stream from the fuel processor. In some embodiments, the byproduct stream may have sufficient fuel value to be utilized as the sole source of heating fuel, at least after startup of the hydrogen generation assembly and transitioning to a hydrogen-producing operating state. In some embodiments, it may even be desirable to configure the fuel processor to contain sufficient residual hydrogen gas that this optional goal is realized. A potential tradeoff with the reduced amount of hydrogen gas present in stream 14 is that a continuous flow of fuel 13 does not need to be pumped or otherwise delivered to and consumed by the heating assembly to maintain the hydrogen-producing region at a suitable hydrogen-producing temperature, such as within a suitable hydrogen-producing temperature range.

When gaseous fuels 13 are utilized during startup of the hydrogen generation assembly and byproduct stream 28 is utilized as the fuel for heating assembly 60 when the hydrogen generation assembly is in a hydrogen-producing operating state, the gaseous streams may be exposed to an ignition source (or existing flame) and positioned relative to the hydrogen-producing region via any suitable mechanism and/or structure. An illustrative, non-exclusive example of a suitable configuration is for the gas streams to flow through a nested burner assembly that defines generally parallel flow paths for each of the gas streams and/or which establishes flow paths that position each of the gas streams at a suitable position relative to the hydrogen-producing region. Fig. 13 illustrates examples of a heating assembly 60 that includes a burner assembly 282 that is adapted define a first flow conduit 284 for a gaseous combustible fuel 13, and a second flow conduit 286 for a byproduct stream 28. The first flow conduit may additionally or alternatively be described as being a start-up burner assembly, with the second flow conduit additionally or alternatively being described as being a primary, or main, burner assembly. As illustrated, the primary and start-up burner assemblies define separate gas flow paths for the combustible streams contained therein until after ignition of the streams. Fig. 13 also illustrates examples of suitable burner constructions that may be used in heating assembly 60. The illustrative examples demonstrate that in some embodiments, it may be desirable to utilize a burner assembly that includes separate flow paths for heating fuel 13 and byproduct stream 28. Various elongate (ribbon) and point-sized orifices are illustrated through which the fuel and/or byproduct stream flow and are combusted with air.

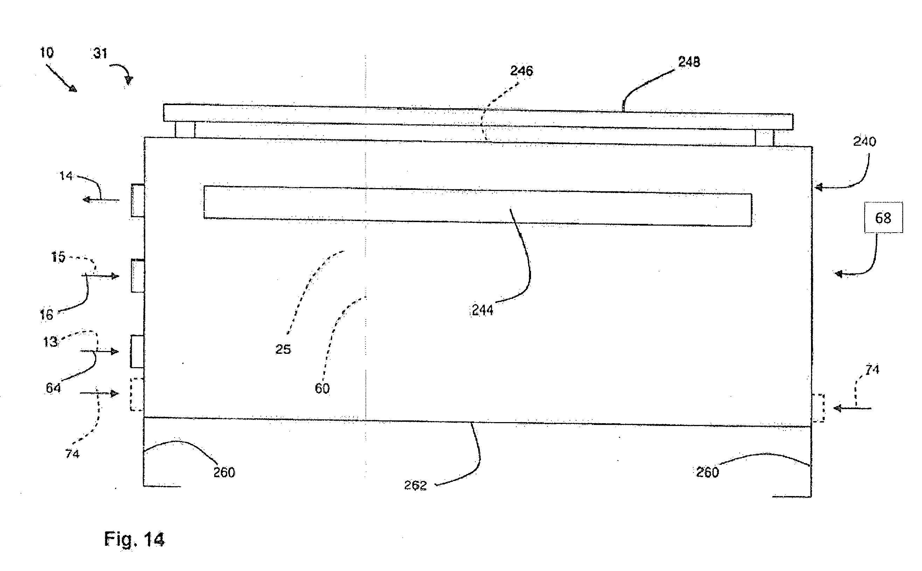

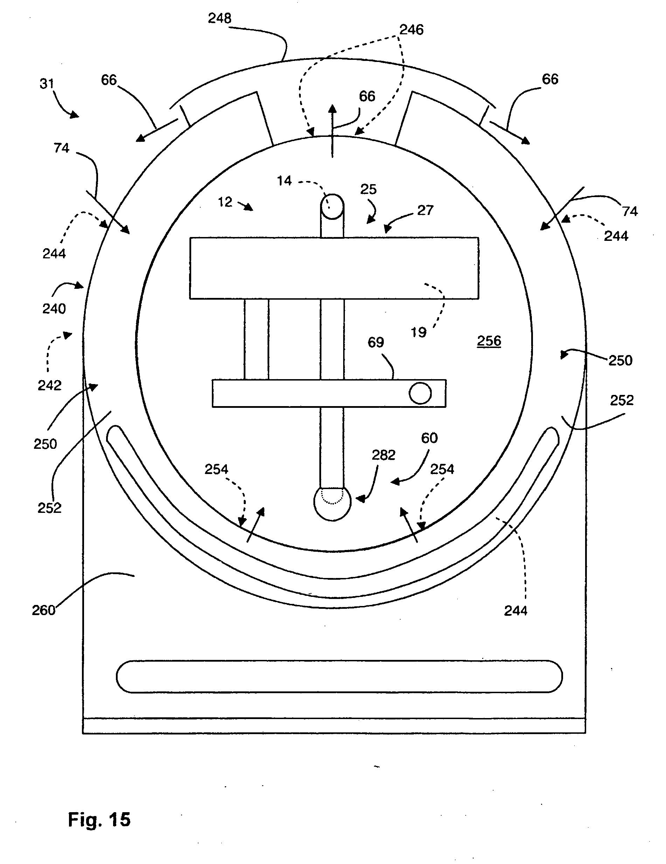

In Figs. 14 and 15, a fuel processing system 31 is shown in which the hydrogen-producing region, separation region, and burner assembly are contained in a common shell, or housing, 68 that is open to the environment so that air may be circulated through the housing. As perhaps best seen in Fig. 14, the illustrative example of a housing 68 is indicated generally at 240 and includes spaced apart supports 260 that support a body region 262 of the housing above a surface upon which the mounts are positioned. The housing further includes an outlet port for product hydrogen stream 14 and input ports for a fuel stream 16 of hydrogen production fluid 15 and a fuel stream 64 of combustible fuel 13. As schematically illustrated in dashed lines in Fig. 15, the shell may include an insulating layer 242 to reduce the external temperature of the system. Also shown are inlets 244 for air stream 74 for the heating assembly, and outlets 246 for heated exhaust stream 66 from the heating assembly. In the illustrated example, the outlets for the heating exhaust stream are covered by a heating plate, or shroud, 248. Although not required, it is within the scope of the present disclosure to mount or otherwise position at least a portion of the feedstock delivery system, such as a supply of fuel or fluid on plate 248. During use of the fuel processing assembly, the heated exhaust stream will heat the components of the feedstock delivery system (or other objects to be heated) that are positioned on the plate. Plate 248 may have any suitable configuration and may include mounts or other receivers that facilitate positioning and/or securing objects to be heated on the plate.

As shown in Fig. 15, the shell defines a flow path 250 for an air stream 74 that preheats the air stream and cools the outer surface of the shell by providing a jacket, or cooling passage, 252 through which the air stream flows before being used to support combustion in the heating assembly. As perhaps best seen in Fig. 15, the air stream flows through passage 252, and then through inlets 254 to a central region, or compartment, 256 of the shell in which the hydrogen-producing region, separation region and burner assembly are housed. Fig. 15 also illustrated an example of a fuel processing assembly that includes a heating assembly with a burner assembly 282.

As discussed, some feedstock delivery systems 22 for hydrogen generation assemblies according to the present disclosure are adapted to deliver streams of liquid combustible fuel 13 to the heating assembly. Some liquid combustible fuel streams may not be readily ignited and/or combusted at certain operating temperatures within which the hydrogen generation assembly may be utilized. As a non-exclusive example, the fuel stream may be delivered to the heating assembly as a liquid fuel stream at a temperature in the range of approximately 25° C to approximately 100° C, although temperatures above and below this illustrative range may be used without departing from the scope of the present disclosure. As used herein, "liquid" or "liquid-phase" is meant to refer to fuel streams that include at least a majority, if not most or even all, or nearly all, of the fuel in the liquid phase at the operating parameters at which the fuel stream is delivered to the heating assembly. Additionally, when fuel stream 64 includes a carbon-containing feedstock 18 or is a composite stream (such as the subsequently discussed composite stream 90) that includes carbon-containing feedstock and water, the fuel stream that is delivered to heating assembly 60 may be in the liquid phase at operating parameters at which it is delivered to the heating assembly. The operating parameters discussed above are not intended to be exclusive examples. Instead, they are meant to illustrate typical parameters, with parameters outside of these ranges still being within the scope of the disclosure. In many applications, such as heating assemblies incorporated in fuel processing assemblies for use in portable or mobile uses, the operating parameters for delivery of fuel stream 64 may vary widely depending on the environmental conditions in which the fuel processing assembly is used. For example, fuel processing assemblies may deliver fuel stream 64 to heating assembly 60 at temperatures ranging from lower than 0° C to higher than 100° C.

Illustrative, non-exclusive examples of other temperature ranges within which the fuel processing assemblies may be used include temperatures of less than 30° C, less than 20° C, less than 10° C, less than -10° C, less than -20° C, less than -30° C, less than -40° C, temperatures in the range of -50° C and 100° C, temperatures in the range of -50° C and 50° C, temperatures in the range of -50° C and 30° C, temperatures in the range of -30° C and 50° C, and temperatures in the range of -30° C and 30° C. As discussed, during startup of the fuel processing assembly, the heating assembly is adapted to receive and initiate combustion of a liquid fuel stream. Some liquid fuels may not be liquids in regions of the illustrative temperature ranges described above, and accordingly, the composition of the liquid fuel to be used may be selected with factors that include the expected ambient temperature around the fuel processing assembly. For example, methanol will not be a liquid at 100° C.

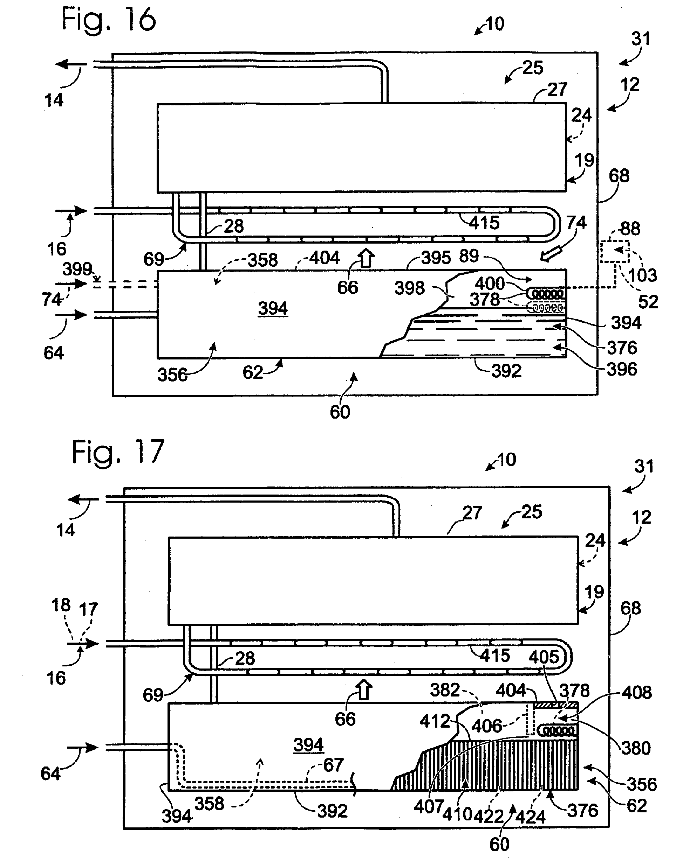

In Fig. 16, an illustrative, non-exclusive example of a hydrogen generation assembly 10 that includes a heating assembly 60 that is adapted to receive a liquid fuel stream 64 is illustrated schematically. Heating assembly 60 includes burner assembly 62 and may include associated inlets, outlets, and other features appropriate and consistent with the heating assembly description provided herein. As indicated schematically in Fig. 16, burner assemblies 62 according to the present disclosure include a start-up burner assembly 356 and, in some embodiments, also may include a primary, or main, burner assembly 358. As the name implies, the start-up burner assembly is adapted to heat at least the hydrogen-producing region of the fuel processor to a suitable hydrogen-producing temperature. The primary, or main, burner is adapted to provide continued heating to at least the hydrogen-producing region of the fuel processor during continued hydrogen-producing operation of the fuel processor. The primary burner may be adapted to consume a gaseous fuel stream, with this gaseous fuel stream being partially or completely formed from a portion of the mixed gas stream produced by the hydrogen-producing region. It is within the scope of the present disclosure that the start-up and primary burner assemblies, when both present in a particular embodiment, may be separate assemblies and/or may share one or more components.

Heating assembly 60 is illustrated in Fig. 16 being in thermal communication with the hydrogen-producing region 19 of the fuel processing assembly and thereby adapted to heat or may otherwise be adapted to heat portions of the fuel processing assembly, including the reforming region. As discussed above, and as illustrated in Fig. 16, heating assembly 60 may be disposed within shell 68 of fuel processor 12, although it is within the scope of the present disclosure that it may be located at least partially, or completely, external of the shell. Appropriate conduits, conducting materials, and other apparatus may be provided to communicate the thermal energy in combustion exhaust stream 66 to the hydrogen-producing region of the fuel processing assembly.

As illustrated schematically in Fig. 16, heating assembly 60 includes at least one fuel chamber 376 and an ignition source 89 in the form of at least one heating and ignition source 378 and is adapted to receive at least one air stream 74. In Fig. 16, fuel chamber 376 is shown including a bottom 392 and side walls 394. Fuel chamber 376 includes a top 395, which may be a partially, or completely, open top, and thereby form an open reservoir for retaining the liquid fuel delivered thereto. In such an embodiment, air stream 74 may be delivered (by blowers, fans, or other suitable devices) and/or may naturally flow to fuel chamber 376 from the environment through open top 395.

As illustrated in Fig. 16, the hydrogen-producing region 19 or other portion of the fuel processing assembly to be heated by combustion exhaust stream 66 will typically be located above, and often relatively close to, the open top of the fuel chamber. This enables the combustion stream to heat this structure as the stream naturally flows from the fuel chamber. As discussed, blowers, fans and other suitable structures may additionally or alternatively be used to promote the delivery of the heated combustion stream to reforming region 19 and/or other regions of the fuel processing assembly.

In some embodiments, fuel chamber 376 may include a full or partial top member 404 for enclosing, either completely or partially, the fuel chamber. When fuel chamber 376 includes a full, or closed, top member to form a substantially closed combustion chamber, fuel chamber 376 also may include one or more air inlets 399 to allow air to enter the fuel chamber for combustion, such as air stream 74 described above, and also may include one or more exhaust ports. The air inlets and exhaust ports may be configured for natural air flow or may be coupled to pumps, blowers, compressors, valves, or other equipment for controlled or pressurized fluid flow. An inlet port 399 for air stream 74 is also shown in dashed lines in Fig. 16 to graphically depict that (at least partially) open top fuel chambers also may include one or more inlet and/or exhaust ports. A heating assembly having a closed top 395 may produce more radiant heat than a comparable open top heating assembly, and through the use of exhaust port(s) (and associated fluid conduits extending therefrom), may be configured to deliver combustion exhaust stream 66 to one or more selected regions or structures of the fuel processing assembly, including regions that would be more difficult to suitably heat merely by the convective flow of the heated exhaust stream through an open top of the fuel chamber.

The at least one fuel chamber is configured to receive at least a portion of fuel stream 64, which contains a combustible fuel (13) according to the present disclosure. Fuel stream 64 includes a carbon-containing feedstock 18 may include additional components such as water, air, oxygen, hydrogen, or other components that are combustible, non-combustible, and/or necessary for combustion, such as air or oxygen. While a single fuel stream 64 is shown in Fig. 16, it is within the scope of the present disclosure that more than one stream 64 may be used and that the additional streams may supply the same or different carbon-containing feedstocks, other combustible fuels, air, or other components. Additionally, as discussed above, fuel stream 64 may include liquid, carbon-containing feedstock that is the same carbon-containing feedstock delivered to fuel processor 12. Similarly, fuel stream 64 may include a composite stream that includes carbon-containing feedstock and water, and which may have the same, or essentially the same composition as the feed stream for the hydrogen-producing region 19 of the fuel processor.

The heating assembly 60 shown in Fig. 16 includes an ignition source in the form of a heating and ignition source 378. Source 378 is adapted to heat and initiate combustion of the carbon-containing feedstock 18 in fuel stream 64. Heating and ignition source 378 may be disposed or otherwise positioned external to fuel chamber 376, as shown in solid lines, may be disposed within fuel chamber 376, as shown in dashed lines, or may be disposed partially inside and partially outside of fuel chamber 376. Heating and ignition source 378 may include any suitable structure or device for heating and igniting the fuel stream in the presence of air to initiate combustion thereof. In some embodiments, heating and ignition source 378 may include more than one device.

Examples of suitable heating and ignition sources 378 include at least one of a spark plug, a glow plug, a pilot light, a combustion catalyst, glow plugs in combination with combustion catalysts, electrically heated ceramic igniters, and the like. In some embodiments, heating and ignition source 378 includes an electrical resistance heating element either alone or in combination with an igniter, such as a spark plug. A glow plug is one example of an electrical resistance heating element that may be used alone to both heat and ignite the carbon-containing fuel received by the fuel chamber. Heating and ignition source 378 may include an electrical resistance heating element configured to be heated to a temperature sufficiently hot, also referred to as a red hot or glowing hot temperature, to ignite the carbon-containing fuel in fuel chamber 376.

Fig. 17 illustrates schematically that heating assembly 60 may include an ignition region 380 and a combustion region 382, with the ignition region being located closer to the ignition source than the combustion region. In such embodiments, the carbon-containing fuel disposed in the fuel chamber may be mixed with air and ignited in the ignition region 380 and combusted to produce heated combustion stream 66, which may be exhausted from heating assembly 60 to heat at least the reforming region of fuel processor 12. It is within the scope of the present disclosure that the combustion initiated in ignition region 380 may extend to other locations within heating assembly 60 and/or hydrogen generation assembly 10. For example, the combustion may continue in the ignition region, and may also extend to combustion region 382 such that after ignition combustion occurs in both the combustion region and the ignition region. Additionally, due to the dispersion of the fuel vapor, combustion may occur in other portions of the fuel processing assembly. As used herein, ignition region 380 is used to refer to an area or region in fuel chamber 376 that is smaller than the entirety of the fuel chamber. That is, ignition region 380 is a subset of fuel chamber 376 that may be physically defined or may be an area of fuel chamber 76, such as a particular end region, corner region, etc.

As illustrated in solid lines in Fig. 16, fuel stream 64 may be delivered as a volume of liquid, at least a substantial portion of which (if not all of which) remains as a liquid fuel supply within the fuel chamber until it is consumed to support combustion within the fuel chamber, as discussed in more detail herein. Fuel stream 64 may be delivered to an aperture or fill port of the fuel chamber through a suitable fluid conduit, with the liquid fuel thereafter flowing within the fuel chamber, such as under the force of gravity adsorptive/wicking forces applied by any structures within the fuel chamber, etc. It is within the scope of the present disclosure that the heating assembly may include at least one distribution conduit that extends within the fuel chamber and through which the liquid fuel stream flows prior to being dispensed from the distribution conduit within the fuel chamber. The distribution conduit may include apertures or other outlets along its length, may include an outlet (such as at its distal end within the fuel chamber), and/or may include one or more branches to further distribute the liquid fuel stream within the fuel chamber. While not required to all embodiments, the distribution conduit, when used, may be adapted to selectively deliver at least a portion of the liquid fuel stream beneath, or proximate to, the heating and ignition source, to distribute the liquid fuel stream to one or more selected regions of the fuel chamber, etc. When the fuel chamber includes a transport medium, such as described herein in connection with Fig. 17, a distribution conduit may (but is not required to be) used to deliver the liquid fuel stream through at least a portion of the transport medium prior to dispensing the liquid fuel from the conduit and into the fuel chamber.

In operation, and as described above, fuel stream 64 may be delivered to heating assembly 60 as a liquid, or at least partially in a liquid phase. Fuel stream 64 may be delivered to fuel chamber 376 under operating conditions, or delivery conditions, that include a first temperature and a first pressure. The carbon-containing feedstock(s) delivered to the fuel chamber may have a flash point, or minimum ignition temperature, that is higher than the first temperature at which the carbon-containing feedstock(s) is delivered to the fuel chamber. As used herein, "flash point" refers to the minimum temperature at which the vapor pressure of the liquid is sufficient to form an ignitable mixture with air near the surface of the liquid. The flash point for the fuel stream received by fuel chamber 376 may depend upon such factors as the carbon-containing feedstock in the fuel stream, the relative concentrations of carbon-containing feedstock and other components in the fuel stream, the conditions in the fuel chamber, etc.

While the flash point refers to the minimum temperature at which a liquid fuel will have a vapor pressure above its surface sufficient to form an ignitable mixture with air, whether the mixture will ignite is dependent upon the concentration of the combustible fuel vapor in the air at the location of the ignition source. For example, if the ignition source is spaced-apart from the surface of the liquid carbon-containing feedstock, a number of factors may have diluted the concentration of the combustible fuel vapor. The lower flammability limit is often used to refer to the minimum concentration of the combustible fuel vapor in air for which a flame can propagate. As used herein, "ignition vapor pressure" may be used to refer to the minimum vapor pressure at which ignition of the fuel in air will occur.

The temperature of the liquid carbon-containing feedstock in fuel chamber 376 necessary to produce an ignitable vapor concentration (i.e., a concentration at least equal to the lower flammability limit) may be higher than the flash point temperature and will be referred to herein as the ignition temperature. While the ignition temperature accounts for environmental factors such as availability of fresh air in the vapor space above the liquid fuel in the area adjacent the ignition source and the ability of the fuel vapor to exit the fuel chamber, the ignition temperature will be referred to herein as a property of the carbon-containing fuel.

The fuel stream may enter the fuel chamber at a first temperature and may have an ignition temperature greater than the first temperature. In some embodiments, the carbon-containing fuel delivered to the fuel chamber may have an ignition partial pressure, and the carbon-containing fuel in the fuel chamber may have an initial partial pressure less than its ignition partial pressure. In some applications of heating assembly 60, the first temperature (delivery temperature) of fuel stream 64 may be such that there is substantially no carbon-containing feedstock in the vapor phase. In other applications, the fuel stream may be delivered at a first temperature at which there is some carbon-containing feedstock in the vapor phase. However, in many applications the concentration of carbon-containing feedstock in the vapor phase at the first temperature will not be sufficient to form a flammable mixture at the location of heating and ignition source 378. That is, the first temperature will be less than the ignition temperature of the carbon-containing fuel. Cold weather applications and configurations where fuel stream 64 includes a composite stream having water and carbon-containing feedstock are exemplary, though not exclusive, applications where the first temperature will not yield sufficiently high concentrations of carbon-containing feedstock vapor, or fuel vapor, to form an ignitable mixture at the heating and ignition source.

With continued reference to Fig. 16, fuel chamber 376 may be described as including a liquid fuel region 396 and a fuel vapor region 398. As illustrated, fuel chamber 376 is an open reservoir and fuel vapor region 398 is defined by the surface of the liquid fuel in the liquid fuel region 396 and by side walls 394 of fuel chamber 376, but is unbounded on top (i.e., theoretically the fuel vapor region extends as far as the fuel vapor can dissipate within the fuel processing assembly). In embodiments where fuel chamber 376 includes a top member, whether full or partial, fuel vapor region 398 may be said to be at least partially bounded on the top by the full or partial top member.

Heating assembly 60 also includes a heating and ignition source 378, as described briefly above. As illustrated in Fig. 16, heating and ignition source 378 takes the form of an electrical resistance heating element 400 that is disposed completely in fuel vapor region 398. As shown, the heating and ignition source is illustrated being positioned above the liquid fuel region of the fuel chamber. However, it is within the scope of the present disclosure that at least a portion of the heating and ignition source be disposed in liquid fuel region 396, as illustrated in dashed lines in Fig. 16. Similarly, it is within the scope of the present disclosure that other functionally suitable structures may be used for heating and ignition source 378, with the electrical resistance heating element, and its illustrated coiled configuration, merely being illustrative, non-exclusive examples. While heating and ignition source 378 is shown adjacent to one end of heating assembly 60, it is within the scope of the present disclosure that heating and ignition source 378 may be disposed anywhere within heating assembly 60 where at least a portion of it may be in sufficient contact with fuel vapor to ignite the carbon-containing fuel in the fuel chamber. As illustrative, non-exclusive examples, the heating and ignition source may be positioned along a lateral wall of the fuel chamber, may be located within a perimeter region of the fuel chamber, may be located within a central region of the fuel chamber, etc.

With continuing reference to Fig. 16, heating and ignition source 378 is illustrated as being in a coiled configuration and as a unitary device. Other configurations are within the scope of the present disclosure. For example, a unitary heating and ignition source 378 may be linear, may include linear and curved portions, or may be otherwise curled, bent, or configured in other shapes or configurations. Additionally or alternatively, heating and ignition source 378 may include more than one device, such as two, three, or more components. For example, a first device may be configured to heat the liquid carbon-containing fuel in the fuel chamber while a second device may be configured to provide the ignition source. The ignition source may be a spark plug or other intermittent, or selectively actuated, ignition source or may be a glow plug or other source that provides a red hot surface of sufficient temperature to ignite the fuel vapor in the fuel chamber. As another example, two or more complete heating and ignition devices may be used, such as two or more spaced-apart resistance heating elements.

As discussed, heating and ignition source 378 may include one or more devices. Regardless of the configuration, heating and ignition source 378 may be understood to provide a heating area and an ignition area. The heating area and the ignition area may be separate portions of the source 378, they may be the same portions of the source, or they may include overlapping portions of the source. In a unitary heating and ignition source disposed entirely in the fuel vapor region, for example, the heating area and the ignition area may be coextensive. In multi-component heating and ignition sources, one component may be (at least primarily) configured to heat the liquid while the other component is (at least primarily) configured to ignite the vapor. Additionally or alternatively, a unitary device may be configured with two or more portions of different constructions, such as of different materials, to impart different characteristics or features as discussed herein. One such portion may be better suited (i.e., primarily configured) to heat the liquid while the other portion is better suited to ignite the fuel. Moreover, a unitary heating and ignition source of consistent construction, or any other heating and ignition source, may be disposed with a first portion in the liquid fuel and a second portion in the fuel vapor. In such a configuration, the portion in the liquid fuel may be considered a heating area while the portion in the fuel vapor may be considered an ignition area and, in some applications, a heating source.

As discussed above, heating and ignition source 378 may comprise any number of devices, structures, circuits, members, and/or materials. In some embodiments, heating and ignition source 378 may include an electrical resistance heating element 400. Electrical resistance heating element 400 may include a conventional wire made of suitable electrically resistant materials that generate heat upon receipt of an electric current. Illustrative, non-exclusive examples of such materials include tungsten and Nichrome alloys (such as 80Ni20Cr and 60Ni16Cr24Fe). Additionally, the materials used in electrical resistance heating element 400 may be selected based on their performance in the conditions of the fuel chamber, such as having a high thermal breakdown temperature, being non-reactive with the carbon-containing fuels in the fuel chamber, and being otherwise suitable under other conditions that may affect the ability of the heating and ignition source to heat and ignite the fuel in the fuel chamber. Exemplary materials include silicon-carbide and other refractory materials. It is within the scope of the present disclosure that any suitable material or combination of materials may be used in heating and ignition source 378. The particular materials used in a given embodiment may depend on such factors as the carbon-containing feedstock in the fuel stream, the hydrogen-producing mechanism(s) utilized by the fuel processor, the configuration of the heating assembly and fuel chamber, the configuration and disposition of the heating and ignition source, etc.

With continued reference to Fig. 16, heating and ignition source 378 is illustrated as being optionally coupled to, and/or in communication with, a controller, such as a controller 88, that is adapted to monitor and/or control the operation and/or operating state of the heating and ignition source. Controller 88 may be any suitable manual or automated controller adapted to do at least one of turning the heating and ignition source on and off, controlling the rate of heating of heating and ignition source 378, and controlling its surface temperature over time, among other possible functions. Controller 88 may be disposed entirely within heating assembly 60, partially within heating assembly 60 and partially outside of the heating assembly, or completely outside of heating assembly 60, but in communication with the heating and ignition source. In some embodiments, controller 88 may be outside of heating assembly 60 but within fuel processing assembly 31. It is also within the scope of the present disclosure that controller 88 may be disposed outside of the fuel processing assembly for more convenient user access during operation of the fuel processing assembly. In some embodiments, controller 88 may include, and/or be in communication with, a power source 103 (such as battery 52) for the heating and ignition source (such as to regulate the delivery of power therefrom). The controller may be adapted to perform other functions, and accordingly, controller 88 may be implemented as a portion, or functional component, of a controller for the fuel processing assembly and/or fuel cell system within which the heating assembly is utilized.

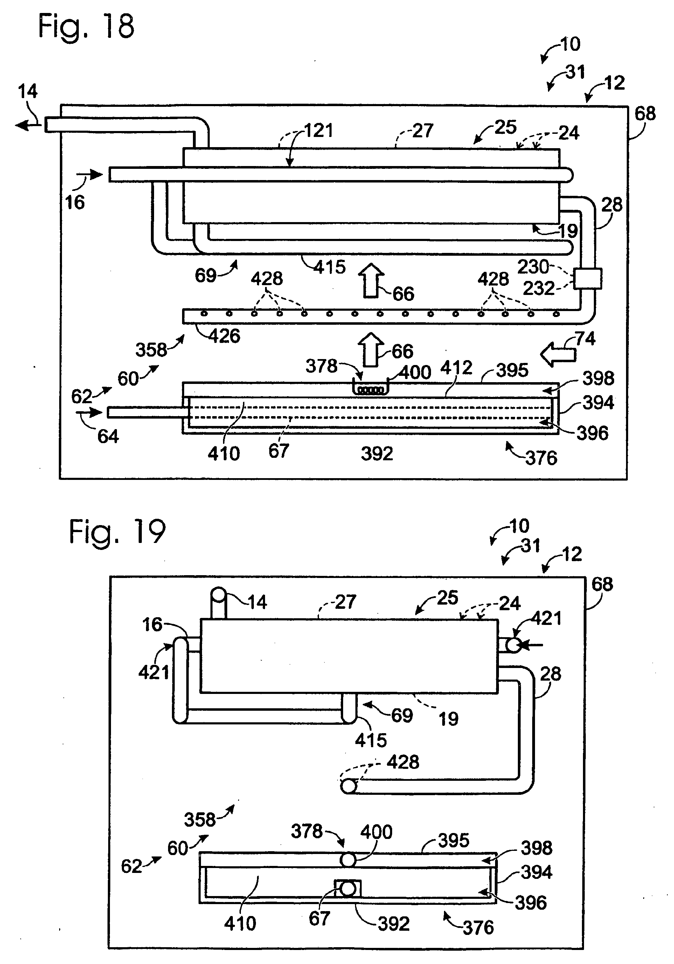

As discussed, heating assembly 60 (and/or burner assembly 62) may include a primary burner assembly 358 in addition to start-up burner assembly 356. In Fig. 18, a primary burner assembly 358 is schematically illustrated and may be adapted to receive a gaseous fuel stream. For example, byproduct stream 28 may be delivered to the heating assembly for use as a fuel for the primary burner assembly. As discussed in more detail herein, the primary burner assembly, when present, may be positioned in a variety of orientations relative to the start-up burner assembly. These illustrative positions includes, but are not limited to, positions in which the primary burner assembly is recessed within the start-up burner assembly, positions in which the primary burner assembly is positioned above (i.e., closer to the hydrogen-producing region) the start-up burner assembly, and positions in which the primary burner assembly and the start-up burner assembly are positioned at the same, or similar, distances relative to the hydrogen-producing region. Although illustrated in the example shown in Fig. 18, it is also within the scope of the present disclosure that the byproduct stream is not delivered to the heating assembly, that another gaseous fuel stream is delivered to the primary burner assembly, that the heating assembly does not include a primary burner assembly, and/or that the byproduct (and/or other gaseous fuel stream) is delivered to the start-up burner assembly for combustion during hydrogen-producing operation of the fuel processing assembly.

Fig. 17 illustrates another example of a hydrogen generation assembly 10 that includes a fuel processing assembly 31, fuel processor 12, hydrogen-producing region 19, and heating assembly 60 substantially as described above, with these components being identified with consistent reference numerals as discussed previously. It is within the scope of the present disclosure that any of the structures, elements and/or variants discussed and/or illustrated herein may be used with or in these components and hydrogen generation assembly 10. As illustrated, Fig. 17 provides another example of a heating assembly 60 that includes a start-up burner assembly 356 and a main burner assembly 358. Heating assembly 60 also includes a fuel chamber 376 and a heating and ignition source 378. Fuel chamber 376 is illustrated with a bottom 392, side walls 394, and a top member 404, which may be a partial top member, as illustrated, or a full top member as discussed above. As illustrated at 405, the top member 404 may, but is not required to, include one or more vents, or air passages, 405 through which an air stream may be drawn or otherwise enter the ignition, vapor and/or combustion region.

Additionally, fuel chamber 376 may optionally include at least one baffle 406, illustrated in dotted lines in Fig. 17, which may cooperate with the top member to at least partially define, or separate, the fuel vapor region and/or the ignition region 380 and combustion region 382. As discussed above, ignition region 380 includes the region in which the initial ignition of the fuel in fuel chamber 376 occurs. Ignition region 380 and combustion region 382 may be distinguished by the ignition region being the area in which the fuel vapor is ignited by the heating and ignition source and the combustion region being any region in which the fuel is combusted by propagation of the flame from the ignition region. In some embodiments, the ignition region 380 and combustion region 382 may be separated from each other. One example of such a configuration is illustrated in Fig. 17 with the inclusion of the optional baffle 406 and top member 404. As illustrated, baffle 406 extends downward from top member 404 to form an at least partially enclosed ignition chamber 408. Heating and ignition source 378 is disposed within ignition chamber 408 and may be disposed in the fuel vapor region therein, the liquid fuel region therein, or partially in both the liquid fuel region and the vapor fuel region, as discussed above.

Ignition chamber 408 may be configured to at least partially confine the fuel vapor evaporating from the liquid fuel as the heating and ignition source heats the fuel chamber. By at least partially confining the fuel vapor, ignition chamber 408 may facilitate or assist in initiating ignition of the (heated) fuel by reducing the dissipation of the fuel vapor and minimizing the possibility that fuel vapor can be blown away from the heating and ignition source by environmental conditions. These factors otherwise could result in an actual ignition temperature or flash point that is above the theoretical ignition temperature or flash point of the particular fuel composition. When fuel chamber 376 includes an ignition region 380, such as ignition chamber 408, it is within the scope of the present disclosure that the ignition region may be in communication with the combustion region such that the flame and combustion initiated in the ignition region can propagate to the combustion region. This is illustrated in Fig. 17 by baffle 406 terminating above the surface of the liquid fuel region, and thereby defining a flame passage 407 through which the flame and combustion may travel or propagate out of ignition chamber 408 to the remainder of fuel chamber 376.

With reference to Figs. 16 and 17, vaporization region 69 is illustrated as a length of tubing 415 that extends generally intermediate, or between, heating assembly 60 and hydrogen-producing region 19. In the illustrated example, the vaporization region (i.e., tubing 415), is configured to define a plurality of flow paths that extend generally parallel to the heating assembly and the hydrogen-producing region, thereby providing a comparatively greater heat transfer effect than if the feed stream merely passed between the heating assembly and the hydrogen-producing region a single time. The illustrated example also demonstrates that the tubing extends along a sinusoidal or other laterally extending path beneath the hydrogen-producing region, which also increases the heat transfer effect (i.e., the amount of time that the feed stream is heated by the heated exhaust stream prior to being delivered to the hydrogen-producing region. The illustrated example is intended to be just that, an example, as the shape, orientation, length, cross-sectional area, relative position to the hydrogen-producing region and/or heating assembly, number of paths, etc. of the vaporization region may vary without departing from the scope of the present disclosure. Regardless of its particular configuration, the region should be designed to receive the liquid feed stream that will be used to produce hydrogen gas in the hydrogen-producing region of the fuel processor and to deliver this stream as a vaporized feed stream to the hydrogen-producing region, with the feed stream being vaporized in the vaporization region through heat exchange with at least the exhaust stream from the heating assembly.

Heating assemblies 60 according to the present disclosure may be used with fuel processing assemblies that do not include a vaporization region for the feed stream for the hydrogen-producing (reforming) region of the fuel processor and/or may include a vaporization region that is not directly heated by stream 66 and/or which is not positioned between the heating assembly and region 19. When configured with a vaporization region that includes at least one length of tubing or other enclosed region in which the feed stream is vaporized by heat exchange with the heated exhaust stream 66 from the heating assembly flowing external the tubing or other region through which the feed stream flows to be vaporized, tubing/region 415 may be formed or shaped in any configuration designed to provide a desired amount of exposure time, and coincident heat transfer, in the vaporization region for the feed stream prior to entering the fuel processor.

Fig. 17 also illustrates that fuel chambers 376 according to the present disclosure may (but are not required to) include a transport medium 410 that is disposed at least substantially in the liquid fuel region of fuel chamber 376. Transport medium 410 may be configured to draw the liquid fuel in fuel chamber 376 to the top, or top surface, 412 of the transport medium for combustion. At least the top surface of the transport medium, and optionally additional regions of the medium proximate the top surface, may extend to the surface and/or out of the liquid fuel region. Accordingly, transport medium 410 may include one or more materials and/or structures adapted to moving (i.e., conveying or otherwise transporting) the liquid fuel from the fuel chamber to the top, or top surface, 412 of the transport medium. Fire-resistant materials and materials adapted to tolerate elevated temperatures and the particular chemical environment of fuel chamber 376 may be utilized. For example, transport medium 410 may include ceramic or glass materials in some embodiments. When a solid block or ceramic or other absorbent material is used as transport medium, this material may, but is not required to, include a plurality of holes or other apertures that are drilled or otherwise formed into the material.

In some embodiments, transport medium 410 may be porous or otherwise adapted to absorb the liquid fuel in fuel chamber 376. Absorbent materials 422 in transport medium 410 may enable the transport medium to prevent spillage of the liquid fuel during transport of a fuel processing assembly having a fuel chamber that is not substantially closed, such as a fuel chamber configured as an at least substantially open-topped reservoir. The absorbent materials may draw in the liquid fuel and be adapted to move the liquid fuel to the top 412 as liquid fuel is consumed. When transport medium 410 is adapted to at least temporarily absorb the liquid fuel that is delivered to the fuel chamber, the transport medium may also be described as a containment medium, in that the liquid fuel that is absorbed by the medium (prior to being combusted) is prevented from spilling from the fuel region, such as if the fuel chamber were suddenly tilted or overturned.

Additionally or alternatively, transport medium 410 may include fibers, tubes or other structures 424 that are adapted to wick, such as by capillary action, the liquid fuel from the bottom of the fuel chamber to the top 412 of transport medium 410, as shown more clearly in Fig. 17. In some embodiments, a plurality of glass fibers may be arranged to provide capillary action to move the liquid fuel to the top of transport medium 410, although this is but one of many suitable structures for medium 410 within the scope of the present disclosure. Similarly, when glass or other absorptive and/or wicking and/or capillary fibers, strands, or other structures 424 are used, they may extend in any suitable orientation, including aligned, woven, and/or random configurations. An illustrative, non-exclusive example of a non-woven configuration is a felt formed from the fibers, or strands. Additional examples include transport media in wool, blanket, mat, pad, and sheet form. An example of a transport medium that has proven effective is Koawool™ Cerablanket™ refractory ceramic fiber, although others may be used. Transport medium 410 may also be referred to as a transport structure, and in some embodiments, a containment structure.

Transport medium 410 may, but is not required to in all embodiments, provide a flame-holding surface in the fuel chamber. For example, transport medium 410 may be configured to provide a flame-holding, or flame-positioning, top surface that is spaced from the fuel processor 12, hydrogen-producing region 19, vaporization region 69, or other portion of hydrogen generation assembly 10 and/or fuel processing assembly 31 by a predetermined distance to obtain desired heating properties and thermal communication between the flame of the heating assembly 60 and the remaining components of fuel processing assembly 10. One advantage of utilizing transport medium 410 is that the flame of the combustion can be maintained at a consistent distance from the other components throughout the combustion process even as the liquid fuel is consumed.

The top 412 of transport medium 410 may be spaced from heating and ignition source 378 by a first distance, from top member 404 by a second distance, from vaporization region 69 by a third distance, and from hydrogen-producing region 19 by a fourth distance. It is within the scope of the present disclosure that any or all of the distances and any other spacing between transport medium 410 and other components of hydrogen generation assembly 10 may be varied to obtain selected, or desired, thermal communication between the components. It is within the scope of the present disclosure that the first distance may be zero, or nearly zero, or even that the heating and ignition source may extend at least partially into, or otherwise below the upper surface of, the transport medium, which may be described as corresponding to a negative first distance.

Also shown in Figs. 17 in dashed lines at 67 is an example of a distribution conduit that may extend within the fuel chamber to deliver the liquid fuel stream within the chamber. When the fuel chamber includes a transport medium 410, the medium may include a passage for the distribution conduit, may be formed or otherwise extend around the conduit, and/or may be positioned upon the conduit, etc.

It is within the scope of the present disclosure for the primary burner assembly to extend within the liquid fuel region of the start-up burner assembly. While this construction is not required, it enables the flames produced by the burner assemblies to extend at the same or similar-heights. As discussed, the relative distances between the portions of the fuel processing assembly to be heated and the components of the heating assembly may vary within the scope of the present disclosure. In some embodiments, it may be desirable to have these components relatively closely together so as to not diminish or otherwise less efficiently utilize the heat value of the heated combustion stream. However, the geometry and construction of the fuel processing assembly may provide structural (i.e., space and size) constraints that impair this optional design objective. By recessing the primary burner assembly within the fuel region of the start-up burner assembly (for example, instead of locating it above the liquid fuel region of the start-up burner assembly), the thickness of the burner assembly, or perhaps more specifically the distances between the flames produced by the start-up and primary burner assemblies and the hydrogen-producing region, may be comparatively reduced.

When the fuel chamber includes a transport medium and a primary burner assembly that extend within the liquid fuel region of the fuel chamber, the medium and burner assembly may be oriented in any suitable configuration within this region of the fuel chamber. As illustrative, non-exclusive examples, the transport medium may extend on opposed sides, and optionally beneath, the primary burner assembly, the primary burner assembly may be received within a recess or other passage in the transport medium, etc.

Another illustrative example of a hydrogen generation assembly 10 with a fuel processing assembly 31 having a heating assembly 60 according to the present disclosure is shown in Figs. 18 and 19. Unless otherwise discussed, the illustrated fuel processing assembly may include any of the components, subcomponents, and/or variants described, illustrated, and/or incorporated herein. Similarly, the newly described elements and/or configurations of Figs. 18 and 19 may be utilized with any of the other hydrogen generation and fuel processing assemblies described, illustrated and/or incorporated herein. Figs. 18 and 19 provide an example of a heating assembly 60 in which the primary burner assembly 358 is positioned above fuel chamber 376, which contains the start-up burner assembly 356 as shown in Figure 17. The illustrated primary burner assembly includes a transport medium 410 in the liquid fuel region 396 of the fuel chamber and further includes a distribution conduit 67 that is adapted to deliver the liquid fuel stream within the fuel chamber. Although not required, the illustrated conduit extends across at least a substantial portion of the fuel chamber and may include apertures to emit liquid fuel along the length of the conduit, and thereby along the length of the liquid fuel region. Figs. 18 and 19 also provide a graphical example of a heating and ignition source 378 that includes a resistive element 400 positioned above a central region of the fuel chamber.

In the illustrated example, the primary burner assembly 358 includes an elongate conduit that extends at least generally parallel to the hydrogen-producing region and vaporization region of the fuel processor, with the primary burner assembly including apertures 428 through which a gaseous fuel stream is emitted and combusted from the primary burner assembly. In the illustrated example, primary burner assembly 358 is adapted to receive the byproduct stream 28 from region 25, which contains hydrogen-producing region 19 and at least one purification region 24. Although not required, region 25 is shown including a housing 27 that includes hydrogen-producing region 19, such as may include a stream or other reforming catalyst. Housing 27 may further contain at least one hydrogen-selective membrane and/or methanation catalyst that is adapted to separate the mixed gas stream produced in the hydrogen-producing region into product hydrogen stream 14 and byproduct stream 28. Fig. 18 also illustrates schematically that the conduit though which byproduct stream 28 flows prior to being consumed as a gaseous fuel for primary burner assembly 358 may (but is not required to) include at least one filter 230 and/or at least one restrictive orifice 232 that provides backpressure to the system and thereby promotes greater separation of hydrogen gas into the product hydrogen stream.

Figs. 18 and 19 also illustrate that the fluid conduit that forms vaporization region 69 may include one or more preheating conduits 421 through which the liquid feed stream is heated prior to being vaporized in the vaporization region. Preheating of the liquid feed stream may reduce the length of the vaporization region and/or the time during which the feed stream needs to be in the vaporization region to be vaporized, and/or the amount of heat that is required to be delivered to the liquid feed stream in the vaporization region to vaporize the stream. Preheating of the liquid feed stream may also provide more stable, or steady flow of the stream, as some liquid streams may create a surging flow if the stream is quickly vaporized.

During startup of a hydrogen generation assembly with a feedstock delivery system or other mechanism for utilizing a liquid combustible fuel stream for the heating assembly during start up of the hydrogen generation assembly, at least a portion (if not all) of the fuel stream is delivered to the heating assembly as a liquid fuel stream. The liquid fuel stream is thereafter ignited and combusted with an air stream, or ambient air, to produce a heated combustion stream that is used to heat the steam reformer. As discussed, in some embodiments, the fuel stream may have at least one of the same components as the hydrogen production fluid, and in some embodiments may have the same composition as this stream, including (but not limited to) compositions that include at least 25 vol% water.

In some embodiments, a pump, such as a positive displacement pump, may be used and adapted to provide a predetermined volume of the liquid fuel stream, which may also be described as a predetermined quantity of liquid, carbon-containing feedstock, to the fuel chamber of the heating assembly. In some embodiments, a controller may be used to control the operation of the pump. On other embodiments, the pump may be manually actuated and/or the predetermined volume may be manually poured or otherwise introduced into the fuel chamber. As discussed, the liquid fuel stream is delivered to the fuel chamber and retained therein as a liquid supply of fuel that is consumed during at least startup of the fuel processing assembly. Therefore, unlike a heating assembly that consumes the fuel stream as it is delivered thereto, the start-up burner assembly of the present disclosure at least temporarily stores a volume of liquid fuel. In some embodiments, the fuel stream may be configured to provide a stream of carbon-containing feedstock during at least the start up phase and, optionally, during the (hydrogen-producing) operating state of the fuel processor.

The fuel stream is delivered to the fuel chamber and is heated by the heating and ignition source to increase the vapor pressure of the carbon-containing fuel in the fuel vapor region of the start up burner assembly. The fuel vapor is ignited by the heating and ignition source and the combustion of the fuel begins. The heat of combustion adjacent the ignition source will radiate and heat the adjacent liquid fuel to further increase the vapor pressure of the carbon-containing fuel in the fuel chamber, allowing the flame and combustion to propagate throughout the fuel chamber. The temperature at which the fuel vapor ignites is determined by a number of factors, as discussed above. When the temperature in the fuel chamber adjacent the heating and ignition source reaches the ignition temperature, the fuel vapor is ignitable. In some embodiments, the fuel vapor ignites, or is ignited, upon being heated to the ignition temperature. In other embodiments, the fuel vapor only ignites when the surface temperature of the heating and ignition source reaches the heating element ignition temperature, or the temperature at which the surface of the heating element is sufficiently hot to ignite the fuel vapor (such as glowing hot or red hot).

Because the combustion may propagate through the fuel chamber, the heating and ignition source may be significantly smaller than the size of the fuel chamber. For example, the heating and ignition source may be a localized heat source. A localized heat source is a heating element that is substantially smaller than the fuel chamber. The liquid fuel disposed in the fuel chamber has a top surface having a surface area. The localized heat source may be coiled, linear, or otherwise configured as described above and may be disposed above, or partially above, the top surface of the liquid fuel. The localized heat source may have a footprint (i.e., occupy a space) corresponding to the surface area of liquid fuel corresponding or aligned with the localized heat source. The footprint of the localized heat source may be substantially smaller than the surface area of the liquid fuel in the fuel chamber. For example, the footprint may correspond to only 20% of the surface area of the liquid fuel region. In other embodiments, the heating and ignition source may be sized to have a footprint corresponding to only 10%, 5%, or smaller amounts of the surface area. It is within the scope of the present disclosure that the heating and ignition source be larger, or correspond with a larger percentage of the liquid fuel surface area, and that the heating and ignition source may be still smaller. The size of the heating and ignition source and the configuration of the fuel chamber (i.e., whether there are baffles, top members, disposition of the heating and ignition source, etc.) may affect the ignition temperature of the carbon-containing fuel and may also affect the heating element ignition temperature. Moreover, the size and location of the ignition region and combustion region will be determined by the configuration of the heating and ignition source, as described above.

Once combustion is initiated in the start-up burner assembly, the combustion continues, in some cases aided by the transport medium, at least until the reformer or other hydrogen-producing region is heated to a selected, or predetermined, temperature. In embodiments utilizing a metered pump to dispense a predetermined amount of carbon-containing feedstock into the fuel chamber, the amount of fuel dispensed may be calculated to contain at least enough carbon-containing feedstock to raise the temperature of the hydrogen-producing region to the predetermined temperature. In some embodiments, the predetermined temperature to which the start-up burner assembly is adapted to heat the reformer is greater or less than the operating temperature of the hydrogen-producing region. For example, the selected, or predetermined, temperature to which the start-up burner assembly raises the reformer may be a certain amount above or below the desired operating, or reforming, temperature, such as 25-125° C, 25-75° C, 50-100° C, etc., less than or greater than the reforming temperature.

In embodiments utilizing a metered pump that delivers a predetermined quantity of fuel to the start-up burner assembly, the start-up burner assembly may be configured to combust the fuel until all the fuel is combusted, at which point the primary burner assembly may be operated to maintain the operating temperature of the fuel processing assembly. In exothermic fuel processing assemblies, the start-up burner assembly may be operated to raise the fuel processing assembly to the predetermined temperature, sufficient to begin operating the hydrogen-producing mechanism, and/or to vaporize or otherwise preheat the feed stream(s) for the fuel processor. At this point, the exothermic reaction of the hydrogen-producing region may be used to maintain the operating temperature of the hydrogen-producing region.

In embodiments not utilizing a metered pump (or other delivery mechanism that is adapted to dispense a predetermined quantity of the carbon-containing fuel stream to the fuel chamber), the liquid combustible fuel stream may be delivered to the start-up burner assembly until the hydrogen-producing region is heated to a predetermined temperature. In this embodiment, the predetermined temperature may be still lower than the temperature discussed above (i.e., there may be a greater difference between the predetermined temperature and the reforming temperature). One reason for this is that the fuel chamber may contain a certain amount of liquid fuel that is yet uncombusted when the fuel stream stops flowing to the start-up burner assembly, which liquid fuel will be combusted to further raise the temperature of the hydrogen generation assembly even after the liquid combustible fuel stream stops flowing to the start-up burner assembly.

As compared to the embodiment with the metered pump, an embodiment with a continual flow of fuel to the start-up burner assembly may have at least one additional feature, such as a temperature- or time-based flow controller and/or a liquid fuel, ignition chamber separator. The temperature- or time-based flow controller may be adapted to automatically stop, either abruptly or gradually, the flow of the liquid combustible fuel stream to the start-up burner assembly when the predetermined temperature is reached, such as by measuring the temperature directly or by measuring the time and comparing it to empirical temperature/time tables. It is within the scope of the present disclosure that the flow of the fuel stream may also be controlled manually in some embodiments. Additionally, the start-up burner assembly may include a liquid fuel ignition chamber separator to prevent newly added fuel and carbon-containing feedstock from cooling the liquid fuel already being heated by the heating and ignition source.

Also within the scope of the present disclosure are start-up heating assemblies that utilize a metered pump to provide an initial quantity of liquid fuel to be heated and ignited and then a continuous feed of the liquid combustible fuel stream after ignition and combustion has begun, to ensure continued combustion until the predetermined temperature is obtained.

Whether a metered pump and predetermined volume is utilized, a continuous feed of the fuel stream may be utilized, or some combination of the two, upon heating the hydrogen-producing region to the predetermined temperature at which the feed stream can be delivered to the hydrogen-producing region, the feed stream may be directed to the reforming region and hydrogen production may begin. In embodiments where a common stream, such as a composite stream containing water and carbon-containing feedstock, is used as both the feed stream and the fuel stream, the transition between supplying the fuel stream and supplying the feed stream may be instantaneous, gradual, or there may be a break between supplying the fuel stream and supplying the feed stream, such as when a metered pump is used to deliver a predetermined quantity of fuel to the heating assembly.

As hydrogen gas is produced in the reforming region of the steam reformer, and then purified in one or more purification regions, a gaseous byproduct stream may be produced and may be delivered to the heating assembly to be used as a fuel stream by the primary burner assembly. In some applications, such as most steam reformers in which the carbon-containing feedstock is methanol, the byproduct stream should have sufficient heating value that the heating assembly will not require any additional liquid fuel, such as additional carbon-containing feedstock from the feed stream for the hydrogen-producing region. However, when other carbon-containing feedstocks, and especially hydrocarbons, are used, it may be necessary either to continue to supply the primary burner assembly with carbon-containing feedstock, such as from the feed stream or another source, and/or to use some of the product hydrogen stream as a fuel stream in order to provide sufficient fuel to maintain the temperature of the reformer.

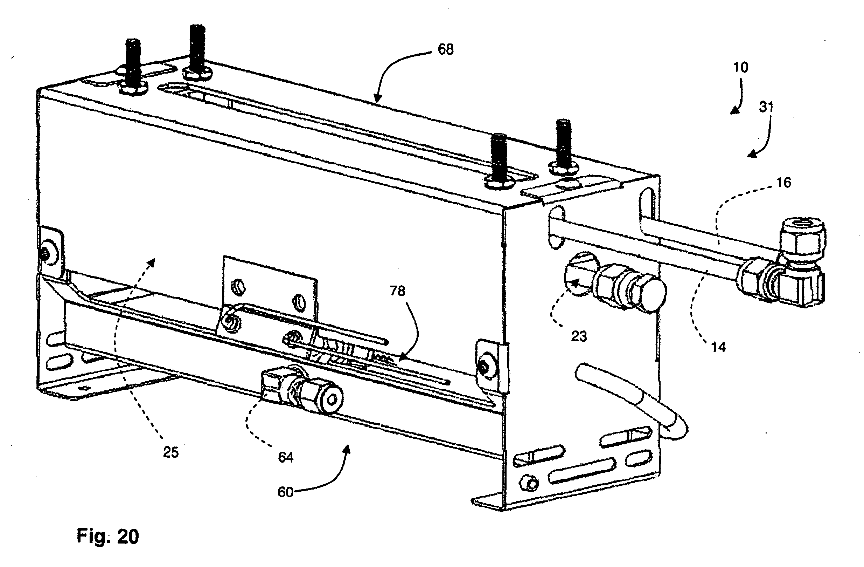

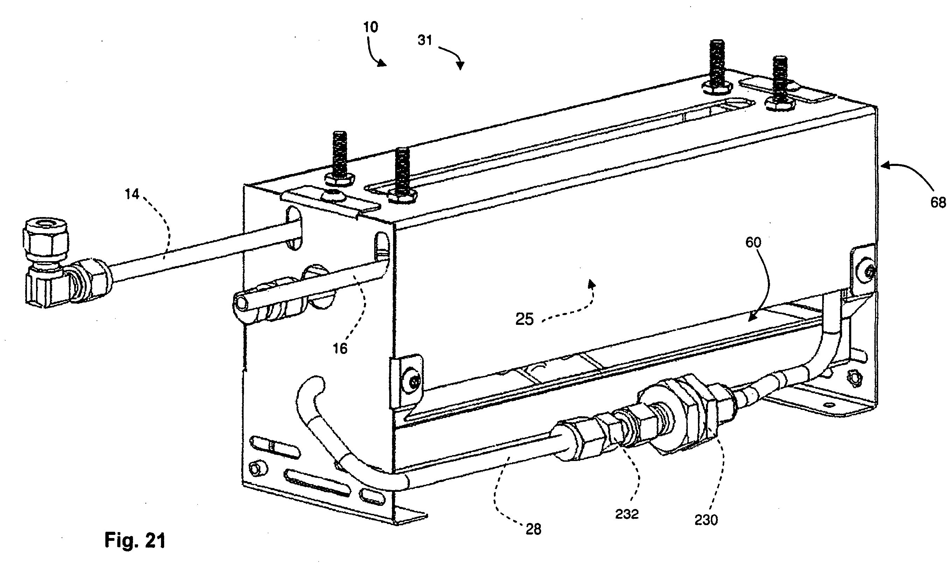

Figs. 20-22 illustrate an illustrative, non-exclusive example of a housing containing a fuel processing assembly 31 with a heating assembly 60 that is adapted to receive a liquid combustible fuel stream to support at least start up of the fuel processing assembly. As illustrated, the assembly includes an outer shell 68 and various optional external heat shields and supports. The illustrated example includes a start up burner assembly that is adapted to receive a liquid fuel stream that is combusted to heat at least the hydrogen-producing region of the fuel processing assembly to a suitable hydrogen-producing temperature. This liquid fuel stream includes at least one combustible liquid fuel, such as methanol. The liquid fuel stream may, but is not required to, include water, such as at least 25 vol% water, and may (but is not required to) have the same composition as the feed stream from which hydrogen gas is produced in the hydrogen-producing region. Additional examples of suitable liquid start up burners, and variants thereof and optional components therefor, are disclosed in U.S. Patent Application Serial No. 11/226,810 (later published as US 7,632,322), which is entitled "Hydrogen-Producing Fuel Processing Assemblies, Heating Assemblies, and Methods of Operating the Same," was filed on September 13, 2005. In at least the lower right portion of Fig. 21, an optional restrictive orifice 232 and filter 230 are shown included on the fluid conduit that defines a flow path for the byproduct stream from a separation region, such as a membrane-based separation region, with the illustrated byproduct stream being delivered to a burner that combusts the byproduct stream to produce a heated combustion stream that may be used to heat at least the hydrogen-producing region of the fuel processing assembly during hydrogen-producing operation of the fuel processing assembly. The illustrated example of a hydrogen generation assembly 10 shown in Figs. 20-22 may be used with any of the liquid-receiving heating assemblies, fuel and/or feed stream compositions, fuel processing assemblies, purification regions, and the like described, illustrated, and/or incorporated herein. In the particular embodiments, the assembly 10 is shown including the shell 27 of Figs. 9-11 and the heating assembly of Fig. 18.

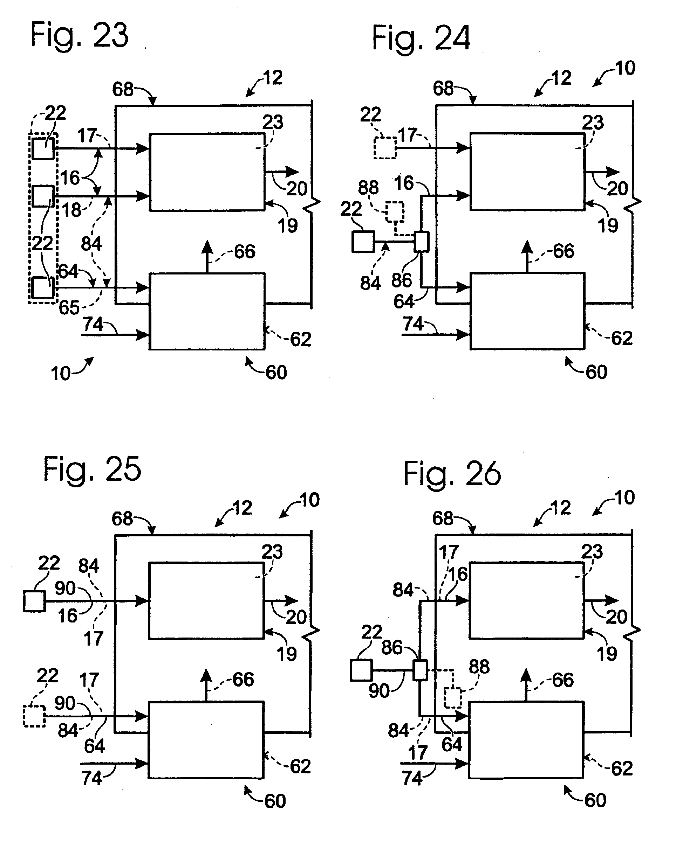

As discussed previously, hydrogen generation assemblies 10 according to the present disclosure may utilize any suitable type and/or number of feedstock delivery systems 22 appropriate for the feed and/or fuel streams to be delivered thereby. As also discussed, some feedstock delivery systems include pumps or other electrically powered propulsion mechanisms, while others do not required or otherwise utilize pumps. Some feedstock delivery systems are in fluid communication with a pressurized supply (112) of fuel or feed, while others are in fluid communication with an unpressurized, or low pressure, supply that requires external forces to propel the fluid to the fuel processing assembly, such as to the hydrogen producing region or the heating assembly thereof. While the fuel and feed streams may be separately stored and delivered, it is also within the scope of the present disclosure that this complete separation is not required, as illustrated with respect to Figs. 23-27. It is within the scope of the present disclosure that the illustrated feedstock delivery systems may be selectively utilized in any of the hydrogen generation assemblies described, illustrated and/or incorporated herein.

According to an aspect of the present disclosure, which is not required to all embodiments, a liquid-phase carbon-containing feedstock 84 may be used for both carbon-containing feedstock portion 18 of feed stream 16 for reforming region 19 and carbon-containing feedstock portion 65 of fuel stream 64 for heating assembly 60, such as schematically illustrated in Fig. 23. This dual use of carbon-containing feedstock 84 is not required to all embodiments of the present disclosure. Fig. 23 also provides a graphical illustration of a hydrogen-producing fuel processing assembly that includes more than one feedstock delivery system 22, such as a delivery system 22 that is adapted to deliver a feed stream containing water 17, a feed stream containing carbon-containing feedstock 18, and/or a feedstock delivery system 22 that is adapted to deliver fuel stream 64. As illustrated in dashed lines in Fig. 23, it is within the scope of the present disclosure that the previous example of three feedstock delivery systems may additionally or alternatively be implemented as a single feedstock delivery system 22, such as which may include more than one pump and/or produce more than one outlet stream. It is further within the scope of the present disclosure that not all liquid streams to the fuel processing assembly are delivered by a feedstock delivery system 22. Instead, one or more of the streams may be delivered by a different mechanism or delivery system.

In the illustrative example shown in Fig. 23, liquid carbon-containing feedstock 84 is delivered to both heating assembly 60 and hydrogen-producing region 19. Fig. 23 has been shown in a fragmentary view because fuel processor 12 may have a wide variety of configurations, such as configurations that do not include a purification region, that utilize more than one type or number of purification mechanism, etc. It is intended that the fragmentary fuel processor shown in Fig.23 (and subsequent figures) schematically represents any of these configurations, as well as any of the steam reformers and other fuel processors described, illustrated and/or incorporated herein.

Fig. 24 is similar to Fig. 23, except that the liquid carbon-containing feedstock 84 is delivered as a single stream to valve assembly 86, in which the carbon-containing feedstock is selectively delivered to at least one of the heating assembly and the hydrogen-producing region. Valve assembly 86 may include any suitable structure for selectively dividing the stream of carbon-containing feedstock between the heating assembly and the hydrogen-producing region. The range of possible configurations includes the heating assembly receiving all of the carbon-containing feedstock, the hydrogen-producing region receiving all of the carbon-containing feedstock, or both the heating assembly and the hydrogen-producing region receiving carbon-containing feedstock. As discussed herein, the distribution of the carbon-containing feedstock depends at least in part upon the particular carbon-containing feedstock being used, whether byproduct stream 28 is also used as a fuel for at least a portion of heating assembly 60, and the particular mode of operation of the fuel processor, such as an idle mode, a startup mode, or a hydrogen-producing mode.

The distribution of liquid carbon-containing feedstock 84 between the hydrogen-producing region and the heating assembly may be manually controlled. However, in many embodiments, it may be desirable for the distribution to be predetermined and/or at least partially automated, such as by including a controller 88 that selectively regulates the delivery of feedstock 84 between the hydrogen-producing region and the heating assembly. An example of a suitable controller for a steam reforming fuel processor is disclosed in U.S. Patent No. 6,383,670. In some embodiments, controller 88 and/or valve assembly 86 may be configured to allow a predetermined initial volume of carbon-containing feedstock into heating assembly 60, as will be discussed in greater detail herein.

As discussed previously, in the context of a steam reformer or other fuel processor that produces hydrogen gas from water and a carbon-containing feedstock, feed stream 16 may be at least substantially, and typically entirely, comprised of a mixture of water and a liquid-phase carbon-containing feedstock 84 that is preferably miscible in, or with, water. As such, a single (composite) feed stream 90 containing water 17 and carbon-containing feedstock 84 can be consumed as both the hydrogen-producing feed stream 16 for the reforming reaction, as well as the heating assembly fuel stream 64. Further reduction in the supplies, delivery systems, flow regulators, delivery conduits and the like may be achieved according to another aspect of the present disclosure by feed stream 16 and fuel stream 64 both containing the same liquid carbon-containing feedstock 84 and water 17, with the carbon-containing feedstock preferably being miscible in water. This is schematically illustrated in Figs. 25 and 26, in which this composite stream is indicated at 90. Streams 16 and 64 may have nearly, or completely, identical compositions, and may be entirely formed from stream 90. It is within the scope of the disclosure, however, that at least one of streams 16 and 64 may have at least one additional component or additional amount of water or carbon-containing feedstock added thereto prior to consumption of the stream by the heating assembly or hydrogen-producing region. Similarly, it is within the scope of the present disclosure that additional streams may deliver additional components or additional amounts of water or carbon-containing feedstock to the heating assembly or the fuel processor.

Similar to the previously discussed alternatives of Figs. 23 and 24 (where only the carbon-containing feedstock component 84 of feed stream 16 was delivered to heating assembly 60 rather than both the carbon-containing feedstock 84 and the water 17), composite feed stream 90 may be selectively delivered to heating assembly 60 and hydrogen-producing region 19 in separate streams from the same source or from different sources, as schematically illustrated in Fig. 25. Alternatively, and as schematically illustrated in Fig. 26, a single composite feed stream 90 may be delivered to the fuel processing assembly, and more specifically to a valve assembly 86, where the stream is selectively divided between the heating assembly and the hydrogen-producing region. A controller 88, which may be a manual controller or a computerized or other electronic controller or preprogrammed controller, is also shown in dashed lines in Fig. 26. Controller 88 may be located internal or external fuel processor 12, and/or may include both internal and external components.

The relative amounts of water 17 and liquid carbon-containing feedstock 84 in composite feed stream 90 may vary within the scope of the present disclosure. For example, the ratio may depend upon such factors as the particular carbon-containing feedstock being used, the hydrogen-producing mechanism being used in the fuel processor, user preferences, the catalyst being utilized, the demand for hydrogen gas, the efficiency of the reforming catalyst, etc. The relative concentrations of these components may be expressed in terms of a ratio of water to carbon. When feedstock 84 is methanol, a 1:1 molar ratio of steam to carbon has proven effective. When feedstock 84 is ethanol, a steam-to-carbon molar ratio of 2-3:1 has proven effective. When feedstock 84 is a hydrocarbon, a steam-to-carbon molar ratio of approximately 3:1 is typically used. However, the illustrative ratios described above are not meant to be exclusive ratios within the scope of the disclosure, and others, including greater and lesser ratios, may be used.

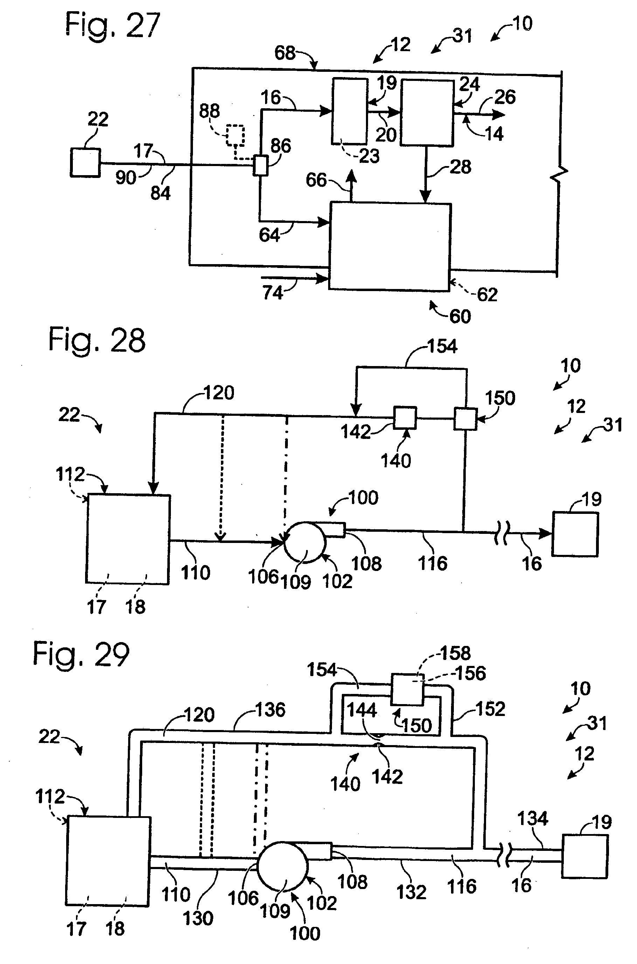

In Fig. 27, a variation of the configuration of Fig. 26 is shown to illustrate that it is within the scope of the present disclosure that valve assembly 86 may be located either internal or external fuel processor 12 of fuel processing assembly 31. Fig. 27 also illustrates that when the fuel processor includes or is otherwise associated with a purification region 24 that produces a gaseous byproduct stream 28, the gaseous byproduct stream 28 may be delivered to the heating assembly to be used as a gaseous fuel for the heating assembly. This gaseous fuel may supplement the liquid fuel discussed above (such as carbon-containing feedstock 84 or composite feed stream 90), or may itself contain sufficient heating value for certain steam reformers or other fuel processors and/or certain operating configurations of the fuel processors.

Another illustrative, non-exclusive example of a suitable feedstock delivery system 22 that may be used with hydrogen generation assemblies 10 according to the present disclosure is shown in Fig. 28 and is adapted to deliver feed stream 16 to hydrogen-producing region 19 of the fuel processor 12 of fuel processing assembly 31. As shown, feedstock delivery system 22 includes a pump assembly 100 that includes at least one pump 102. Pump 102 includes an inlet 106 and an outlet 108, with the inlet being in fluid communication with a feedstock supply, or source, 112, and the outlet being in fluid communication with fuel processor 12. Pump 102 further includes a working portion, or pumping mechanism, 109 that is located generally between the pump's intake and outlet. Pump 102 is adapted to draw or otherwise receive a liquid stream 110 from supply 112 and to emit a liquid stream 116. Accordingly, feedstock delivery system 22 may be described as being adapted to pump a liquid stream containing at least one feedstock for hydrogen-producing region 19 from a liquid feedstock supply. Stream 110 may be referred to as an inlet stream or an intake stream, and stream 116 may be referred to as an outlet stream.

Pump 102 may be powered by any suitable power source; illustrative, non-exclusive examples of which include a component of hydrogen-producing fuel cell system 42, such as fuel cell stack 40 and/or energy storage device 52. Additional illustrative examples include a power supply that is independent of power output produced by the fuel cell system, such as an external, or dedicated, battery, an electrical grid, etc. While not required, pump 102 may be a single-speed, or single-output, pump that is adapted to either be in an on, or active, configuration in which the pump is receiving liquid stream 110 and emitting liquid stream 116, or an off, or unpowered, configuration in which the pump is not emitting stream 116. The actual output of the pump will vary with the voltage of the power output delivered to the pump, which may tend to vary.

As discussed, pump assembly 100 includes at least one pump. Accordingly, it is within the scope of the present disclosure that pump assembly 100 may include a single pump 102 or more than one pump 102. When the pump assembly includes more than one pump, the pumps may cooperate to draw liquid stream 110 and/or emit outlet stream 116. Additionally or alternatively, the pumps may each be adapted to draw a liquid stream 110 from the same or different sources 112 and/or to each emit an outlet stream 116 therefrom.

Supply 112 includes any suitable type and/or number of reservoirs and/or other sources from which the liquid stream may be drawn or otherwise received by an inlet 106 of a pump 102 of pump assembly 100. Illustrative, non-exclusive examples of suitable supplies 112 include tanks, canisters, and other liquid vessels, which may or may not be pressurized. Liquid stream 110 contains at least one component of feed stream 16, such as water 17 and/or a carbon-containing feedstock 18. As indicated in Fig. 28 in dashed lines, and as discussed herein, it is also within the scope of the present disclosure that stream 110 and/or supply 112 contain at least two different components of feed stream 16, such as water 17 and a liquid carbon-containing feedstock 18. Therefore, it is within the scope of the present disclosure that stream 110 may include a single component of feed stream 16, may contain more than one component of feed stream 16, and/or may include all of the component(s) of feed stream 16. The components of feed stream(s) 16 may also be referred to as feedstocks from which hydrogen-producing region 19 produces hydrogen gas.

As shown in Fig. 28, at least a portion of liquid outlet stream 116 may form feed stream 16. However, at least a portion of liquid stream 116 may additionally or alternatively be recycled to a location upstream of the pump's intake 106, such as to supply 112 or to the fluid conduit through which stream 110 flows from supply 112 to pump 102. As used herein, the terms "upstream" and "downstream" are measured with respect to the direction of fluid flow through the corresponding stream. The recycled portion 120 of liquid stream 116 is shown in a solid line being delivered back to supply 112 and in a dashed line being delivered to a fluid conduit containing stream 110. It is further within the scope of the present disclosure that recycle stream 120 may be recycled directly to the pump, such as at or proximate inlet 106, as indicated in Fig. 28 with a dash-dot line.

Described in terms of the fluid conduits of, or associated with, feedstock delivery system 22, and as illustrated somewhat schematically in Fig. 29, the feedstock delivery system may be described as including an intake conduit 130 through which liquid stream 110 is drawn or otherwise received from supply 112 to pump 102. The feedstock delivery system further includes an outlet, or output, conduit 132 through which stream 116 is emitted from the pump's outlet 108. The output conduit is in fluid communication with a delivery conduit 134, through which at least a portion of stream 116 may be delivered to hydrogen-producing region 19 as at least a portion of feed stream 16. Feedstock delivery systems 22 according to the present disclosure further include a recycle conduit 136 that defines a fluid flow path that establishes fluid communication between the delivery conduit and a portion of the feedstock delivery system that is upstream of the pump's working portion 109. This portion of the recycle conduit may be referred to as the higher pressure region of the recycle conduit, and the portion of the recycle conduit downstream of the flow restrictor may be referred to as a lower pressure region of the recycle conduit. Expressed in slightly different terms, the recycle conduit may be described as including a first portion that extends in fluid communication between the outlet conduit and the flow restructure and defines a liquid flow path therebetween, and a second portion that extends in fluid communication between the flow restrictor and supply 112, inlet conduit 130 or another portion of the feedstock delivery system that is upstream from the working portion of the pump. The second portion of the recycle conduit similarly defines a liquid flow path between the flow restrictor and this upstream portion of the feedstock delivery system.

In the illustrative example shown in Fig. 29, the outlet conduit branches to establish fluid communication, or connections, with the recycle and delivery conduits. The fluid conduits described herein may include any suitable structure that defines a flow path for the liquid or other fluid streams described herein. Accordingly, the conduits should be formed from a suitable material, construction, and size for the fluid streams traveling therethrough and the operating conditions encountered thereby. The conduits have been schematically illustrated in Fig. 29, and it is within the scope of the present disclosure that they may (but are not required to) include, or be in communication with, additional structures and/or components, such as sensors, valves, flow-control devices, and the like.

Although not required to all embodiments, it is within the scope of the present disclosure that pump 102 is adapted to continuously draw stream 110 thereto and to emit liquid stream 116 therefrom, with it being within the scope of the present disclosure that the pump may be adapted to deliver a greater flow rate of stream 116 than is desired, or in some embodiments even able to be present in feed stream 16. Accordingly, the pump may be described as providing an output stream having a greater flow rate of liquid than the flow rate of feed stream 16 that is produced therefrom and delivered to the hydrogen-producing region (or other portion) of fuel processor 12. In such a configuration, the pump may be described as being configured to provide excess liquid, or excess flow rate, in output stream 116, thereby providing a flow of liquid that forms recycle stream 136.

By maintaining the pump in an operating state that provides an output stream 116 that contains a greater amount of feedstock than required by the hydrogen-producing region, the pump may be configured to maintain a constant output regardless of the hydrogen demand, or requirements, of the hydrogen-producing region, at least when the hydrogen-producing region is in a hydrogen-producing operating state. In some embodiments, the pump may be configured to maintain a flow rate of liquid feedstock that exceeds the hydrogen-producing region's maximum demand for the feedstock (i.e., the demand for the feedstock when the hydrogen-producing region is at its maximum rated production rate and/or when the hydrogen-producing region is producing sufficient hydrogen gas to produce a power output at the maximum rated power output of the fuel cell stack). In some embodiments, the feedstock delivery system may be adapted to provide an output stream that has a flow rate that is at least 10%, at least 25%, or even at least 50% greater than the amount of feedstock required by the hydrogen-producing region. However, because of the self-regulating nature of the feedstock delivery system, the excess feedstock is not wasted, and instead is recycled through the feedstock delivery system, where it may be reused or returned to the feedstock supply.

In Figs. 28 and 29, feedstock delivery system 22 further includes a flow restrictor 140 and a pressure-actuated valve 150. Flow restrictor 140 is adapted to reduce, or restrict, the cross-sectional area of recycle conduit 136. For example, and as schematically illustrated in Fig. 29, flow restrictor 140 may define a cross-sectional area for conduit 134 that is smaller than the cross-sectional area of delivery conduit. Accordingly, liquid stream 116 may be biased to flow through delivery conduit 134, and thereby to hydrogen-producing region 19, when the pressure in the hydrogen-producing region and/or delivery conduit 134 is less than the pressure in the recycle stream (at least between outlet conduit 132 and flow restrictor 140). Expressed in slightly different terms, flow restrictor 140 is adapted to create backpressure against recycle stream 120 flowing through the flow restrictor and through recycle conduit 136 back to the feedstock supply or other location upstream of the pump's working portion. The selected amount of backpressure created by the orifice may vary according to a variety of factors, such as one or more of user preferences, the size of the orifice, the shape of the orifice, the flow rate of liquid emitted by the pump assembly, the size of the delivery and recycle conduits, the composition and properties of the feed stream, etc. Preferably, the flow restrictor is sized or otherwise configured to provide, or maintain, a pressure that is greater than the selected, or desired, delivery pressure of feed stream 16 to hydrogen-producing region 19 and less than the subsequently described threshold delivery pressure and/or threshold recycle pressure.

Flow restrictor 140 may include any suitable structure that is configured to restrict the flow path of the recycle stream through recycle conduit 136. As an illustrative, non-exclusive example, the flow restrictor may include an orifice 142 having an opening 144 of smaller cross-sectional area than a portion of recycle conduit 136 upstream of the orifice and/or of smaller cross-sectional area than delivery conduit 134. An example of such an orifice is schematically illustrated in Fig. 29. Orifice 142 may be referred to as a restrictive orifice. Orifice 142 may have an opening having a fixed, or non-adjustable, size. Alternatively, the flow restrictor may include an orifice having a variable, or adjustable, opening size. When the orifice is configured to permit adjustment of its orifice size, it may be configured for manual adjustment of the orifice size, such as responsive to user inputs to a manual control element and/or responsive to electronic or other command signals from a controller or other portion of the fuel processing assembly and/or fuel cell system.

Pressure-actuated valve 150 is adapted to selectively permit the recycle stream to bypass the flow restrictor and thereby not be subjected to the backpressure created by the restrictive orifice 142 or other flow restrictor 140 and yet still be able to be returned to the supply or other portion of the feedstock delivery system that is upstream of the pump's working portion. Illustrative, non-exclusive examples of suitable pressure-actuated valves include pressure relief valves and check valves that are fluidly connected to as described herein, namely, to selectively restrict and permit liquid flow to a bypass conduit that enables the liquid to bypass the flow restrictor. As graphically indicated in Fig. 29, pressure-actuated valve 150 is in fluid communication with a bypass conduit 152 through which at least a portion of recycle stream 136 may selectively flow as a bypass stream 154 from a position upstream of the flow restrictor to a position downstream of the flow restrictor. Expressed in more structural terms, the pressure-actuated valve is adapted to selectively permit at least a portion of the recycle stream to flow from conduit 132 through the recycle conduit and back to supply 112 or inlet conduit 110 without having to flow through the flow restrictor. In Fig. 28, the pressure-actuated valve is schematically illustrated at the juncture between the bypass conduit and the recycle conduit upstream of the flow restrictor. However, it is within the scope of the present disclosure that the pressure-actuated valve may be located at any suitable location where it selectively permits and restricts flow to the flow restrictor, with the flow being diverted through the bypass conduit when the pressure-actuated valve restricts its flow to the flow restrictor. For example, Fig. 29 illustrates that the pressure-actuated valve may be located at an intermediate position along the bypass conduit (i.e., anywhere between the inlet and outlet of the bypass conduit). It is also within the scope of the present disclosure that the valve may be located at the inlet or exit of the conduit.

Pressure-actuated valve 150 is normally adapted, or biased, to restrict flow through bypass conduit 152 when the pressure in recycle stream 136 upstream of the flow restrictor (i.e., between output conduit 132 and flow restrictor 140) is less than a threshold recycle pressure. This configuration may be referred to as the closed, or flow-restricting, configuration of the pressure-actuated valve. However, when the pressure reaches (or exceeds) this threshold recycle pressure, the pressure-actuated valve is adapted to automatically permit liquid from upstream of orifice 140 to flow through bypass conduit 152.

When the pressure reaches (or exceeds) this threshold recycle pressure and the pressure-actuated valve is (automatically) configured to its actuated configuration responsive thereto, at least a portion of recycle stream 120 may flow through the bypass conduit, thereby reducing the pressure of the liquid upstream of the flow restrictor. This may also reduce the pressure of the feed stream delivered by the feedstock delivery system. The threshold recycle pressure may be the same as the maximum, or threshold, delivery pressure that is acceptable for feed stream 16. However, it is also within the scope of the present disclosure that these pressures are not the same. For example, the threshold recycle pressure may be selected to be less than the threshold delivery pressure, such as by a determined increment, to provide a buffer or pressure differential between the pressure at which the pressure-actuated valve is designed to permit flow through the bypass conduit (and thereby reduce the pressure in the delivery and other associated streams) and the maximum pressure at which the delivery conduit and/or fuel processing assembly is designed, or desired, to receive the feed stream.

As indicated herein, at least the hydrogen-producing region of fuel processing assembly 31 may be designed to operate at an elevated pressure, such as a pressure of at least 345 kPa (50 psi). When the fuel processing assembly includes a purification, or separation, region, such as described herein, this region may also be designed to operate at an elevated pressure. The particular maximum and minimum operating pressures for a particular fuel processing assembly will tend to vary according to a variety of possible factors. Illustrative examples of such factors may include, but may not be limited to, the hydrogen-producing reaction utilized in hydrogen-producing region 19, the composition of feed stream 16, the viscosity of the liquid in feed stream 16, the delivery conduit construction, size, and/or configuration, the construction of the fuel processing assembly, the pressure requirements of the fuel processing assembly and/or fuel cell system downstream from the hydrogen-producing region, design choices and tolerances, etc. For example, some fuel processing assemblies may be designed to maintain an elevated pressure in at least the hydrogen-producing region, and optionally at least one purification region thereof by utilizing a restrictive orifice or other suitable flow restrictor downstream of the hydrogen-producing region, and optionally downstream of a purification region that is also preferably maintained at an elevated pressure.

The amount of liquid (i.e., the percentage of recycle stream 120) that flows through conduit 152 may vary within the scope of the present disclosure. In some embodiments, the entirety of the stream that forms recycle stream 120 may flow through the bypass conduit when the pressure-actuated valve is in its actuated, or flow-permitted, configuration. In other embodiments, some of stream 120 may also flow through orifice 142 or other flow restrictor 140 even in periods in which the pressure-actuated valve is in this actuated configuration.

When present, pressure-actuated valve 150 may include a valve, or valve member, 156 and a biasing mechanism 158 that is adapted to bias the valve from its actuated configuration to its closed configuration. Biasing mechanism 150 may include any suitable structure or device adapted to provide the above-described biasing and yet permit the pressure-actuated valve to be configured to its actuated configuration when the threshold recycle pressure is reached, or exceeded. An illustrative, non-exclusive example of a suitable biasing mechanism is a spring or other resilient member that exerts a biasing force against the valve member in a direction that opposes the force exerted upon the pressure-actuated valve by the liquid in the recycle stream upstream of the flow restrictor. In other words, the liquid stream upstream from the flow restrictor may exert a force that urges the pressure-actuated valve from its closed configuration to its actuated configuration. This force is applied against the bias of, or the force exerted by, biasing mechanism 158. When the force exerted by the stream exceeds the force exerted by the biasing mechanism, the pressure-actuated valve is configured to its actuated configuration. Otherwise, when the stream pressure exerts a force to the pressure-actuated valve that is less than the force applied by the biasing mechanism, the pressure-actuated valve is adapted to remain in its closed configuration. Biasing mechanism 158 may also function as a pressure detector, or pressure sensor, that is adapted to detect when the pressure of the liquid stream emitted by the pump assembly exceeds a threshold pressure, such as a threshold recycle or delivery pressure. Specifically, when the pressure of the liquid, as applied against the biasing mechanism, is sufficient to overcome the force exerted by the biasing mechanism, then the threshold pressure is exceeded. Accordingly, the biasing mechanism may be adapted to exert a biasing force that sets or corresponds to the threshold pressure, such as the threshold recycle or delivery pressure.

Biasing mechanism 158 is preferably further adapted to automatically return the pressure-actuated valve to its closed configuration, such as when the pressure detected thereby (or applied thereto) decreases to below the threshold recycle pressure, when the pressure decreases to a level that is not sufficient to overcome the biasing force exerted by the biasing mechanism, and/or after a predetermined time period has elapsed since the pressure-actuated valve was configured to its actuated configuration. In other words, it is within the scope of the present disclosure that the pressure-actuated valve is configured to remain in its actuated configuration, once configured thereto, for at least a predetermined minimum time period. It is also within the scope of the present disclosure that the pressure-actuated valve may be configured to automatically transition between its actuated and closed configurations responsive entirely to the forces exerted thereto by the liquid steam and the biasing mechanism.

Figs. 28 and 29 illustrate feedstock delivery systems 22 that include a flow restrictor and a pressure-actuated valve associated with the recycle stream of the feedstock delivery system. In operation, orifice 142 or another flow restrictor 140 is adapted to create backpressure that thereby urges, or biases, the output stream from the pump assembly to flow through delivery conduit 134 toward the hydrogen-producing region of the fuel processing assembly. However, should the orifice or other flow restrictor become clogged or otherwise fail, then the amount of backpressure created by the flow restrictor will increase and the portion of liquid outlet stream 116 that flows therethrough to form recycle stream 136 will decrease or even become zero, which corresponds to when there is no flow through the flow restrictor. If this pressure continues to increase, i.e., if the hydrogen-generation assembly remains in operation, there is a potential for injury or damage. For example, pressures that exceed the threshold delivery pressure and/or threshold recycle pressure may damage pump 102 or one or more portions of the fuel processing assembly. In essence, the pressure in at least output stream 116, and typically feed stream 16, and the portion of recycle stream 120 upstream from the flow restrictor, will continue to increase because the pump is configured to emit a greater flow of output stream 116 than is being consumed by hydrogen-producing region 19. Because the orifice or other flow restrictor is not able to permit the excess liquid, or sufficient quantities of the excess liquid, to flow therethrough to form recycle stream 120, the pressure will increase. However, because the above-described feedstock delivery systems also include a pressure-actuated valve 150, the pressure is prevented from increasing beyond a threshold recycle or delivery pressure. When the pressure-actuated valve is actuated, the pressure will decrease, at least until the pressure-actuated valve returns to its closed configuration. Should the flow restrictor continue to be clogged or otherwise inoperational or only partially operational, the pressure may begin to increase again, with the pressure-actuated valve again transitioning to its actuated configuration should the pressure again increase to or beyond the corresponding threshold pressure.

It is within the scope of the present disclosure that a feedstock delivery system 22 according to the present disclosure may not include both flow restrictor 140 and pressure-actuated valve 150. For example, the feedstock delivery system may include a flow restrictor 140, such as described herein, without a pressure-actuated valve (and accordingly without bypass conduit 152). As another example, the feedstock delivery system may include a pressure-actuated valve 150, such as descried herein, without a flow restrictor that creates backpressure on the outlet stream and which is selectively bypassed using the pressure-actuated valve. In such an embodiment, the bypass conduit would not be present, and the pressure-actuated valve would selectively create backpressure to the outlet (and delivery) streams in its closed configuration, in which flow of the recycle stream is restricted by the pressure-actuated valve. When the pressure exceeds a threshold pressure, as described herein, the pressure-actuated valve is transitioned or otherwise urged to its actuated configuration, in which at least a portion of the outlet stream is recycled to supply 112 or another portion of the delivery system upstream of the pump's working portion.

As discussed, if system 22 does not include a pressure-actuated valve, there is a potential for the pressure to increase beyond selected threshold pressures if the flow restrictor fails, is clogged or otherwise is not able to properly function. However, system 22 and/or fuel processing assemblies and/or fuel cell systems containing feedstock delivery system 22 may include other suitable mechanisms for detecting and reacting to pressures that near or exceed a selected threshold pressure. For example, systems that include a controller may include a pressure sensor that is adapted to measure the pressure in output stream 116, upstream of flow restrictor 140, or in another suitable location, with the controller being adapted to control the operation of at least feedstock delivery system 22 responsive to a pressure that exceeds or nears a selected threshold.

As another example, if feedstock delivery system 22 is implemented without a flow restrictor, then pressure-actuated valve 150 will still be able to selectively reduce the pressure in output stream 116, feed stream 16, etc., responsive to when the pressure in these streams exceeds a selected threshold pressure, such as the above-discussed threshold recycle pressure or threshold delivery pressure. Because such a feedstock delivery system 22 does not include a flow restrictor that establishes some backpressure within system 22 while also permitting a recycle stream to flow therethrough, the pressure in the system will tend to oscillate. More specifically, the liquid pressure will tend to increase as the pump emits a greater flow rate of liquid than is consumed in hydrogen-producing region 19. This increase will tend to continue until the pressure-actuated valve is transitioned from its closed configuration to its actuated configuration. Thereafter, the pressure will tend to decrease until the pressure-actuated valve returns to its closed configuration, at which time the liquid pressure will tend to begin increasing again. This oscillation in the liquid pressure, such as the pressure of feed stream 16 may affect the flow rate of hydrogen gas produced by the fuel processor, which in turn may affect the power output produced by the fuel cell stack. The systems should still be operational, but may not be maintained in as steady, or constant, of operating state due to the pressure fluctuation, or oscillation, in the feedstock delivery system.

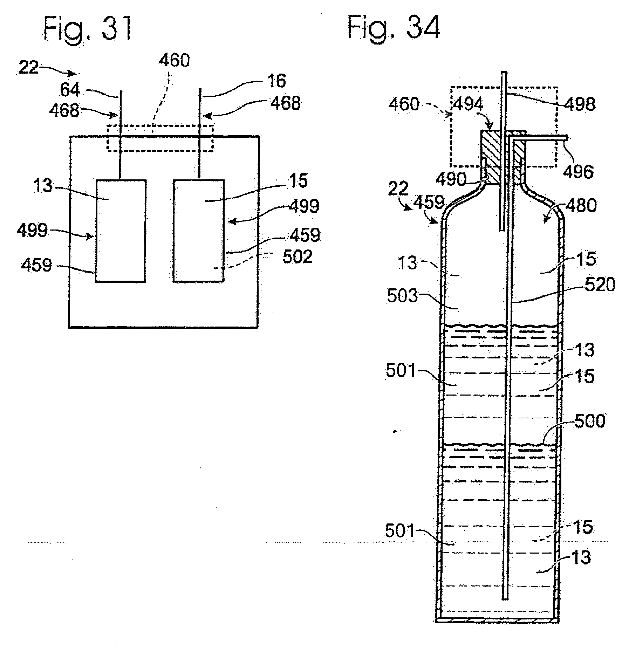

As discussed, some feedstock delivery systems 22 accordingly to the present disclosure are adapted to deliver a liquid stream and a gas stream. An illustrative, non-exclusive example of such a feedstock delivery system may be utilized to deliver a liquid hydrogen-production fluid (15) to a hydrogen-producing region of a fuel processing assembly and a gaseous combustible fuel stream (13) to a heating assembly, or vice versa. Figs. 31-35 provide illustrative, non-exclusive examples of feedstock delivery systems that are adapted to selectively and separately deliver a liquid stream and a gaseous stream.

In the illustrative examples, the feedstock delivery systems 22 includes pressurized sources 499 of heating fuel 13 and hydrogen-production fluid 15. Illustrative examples of sources 499 include pressurized tanks or other pressure vessels that contain one or both of fuel 13 and fluid 15 under pressure; however, any suitable pressurized source may be used without departing from the scope of the present disclosure. Because these components of feedstock supply streams 11 are available under pressure from the feedstock delivery system, hydrogen generation assembly 10 does not require the use of mechanical pumps, compressors, or other electrically powered components to draw the heating fuel and/or hydrogen-production fluid from sources 499 and to deliver streams under pressure to the hydrogen-producing region and heating assembly of fuel processing system 31. Instead, the streams are automatically propelled from the pressurized source upon opening of a valve or other suitable flow-regulating device that selectively permits or restricts flow of the streams from the feedstock delivery system to the fuel processing system. These flow-regulating devices are schematically illustrated in Fig. 30 and collectively referred to as a valve assembly 460. Illustrative delivery pressures for hydrogen-producing region 19 typically will be in the range of 345-2070 kPa (50-300 psi), although pressures outside of this range are within the scope of the present disclosure. In the context of at least a hydrogen-producing region that utilizes a steam reforming catalyst to produce mixed gas stream 20, non-exclusive examples of delivery pressures include 690-1725 kPa (100-250 psi), 862,5-1552,5 kPa (125-225 psi), 1035-1552,5 kPa (150-225 psi), 1207,5-1552,5 kPa (175-225 psi), 1035-1380 kPa (150-200 psi), at least 690 kPa (100 psi), at least 1035 kPa (150 psi) at least 1380 kPa (200 psi), and a delivery pressure that is less than 1725 kPa (250 psi) and greater than or equal to at least 690 or 1035 kPa (100 or 150 psi).

Fig. 31 provides an example of a feedstock delivery system 22 that includes heating fuel 13 and hydrogen-production fluid 15 in pressurized sources 499 in the form of separate pressure vessels 459. In such an embodiment, each of fuel 13 and fluid 15 is either a gas that is stored under pressure or a liquid that is stored in vessel 459 in a manner adapted to deliver the liquid under pressure to the hydrogen producing region of the fuel processing system. An illustrative example of a suitable mechanism for delivering a liquid stream at a suitable pressure from feedstock delivery system 22 without requiring the use of mechanical and/or electrical pumps, compressors or similar equipment is to include a gaseous propellant that pressurizes the liquid and propels the liquid stream from the feedstock delivery system responsive to valve assembly 460 permitting the flow of this stream. Illustrative examples of suitable propellants include carbon dioxide and nitrogen gas, although others may be used.

It is within the scope of the present disclosure that feedstock delivery system 22 may include a pressure vessel 459 that contains both heating fuel 13 and hydrogen production fluid 15 and which is adapted to separately deliver streams containing the fuel or fluid, such as responsive to the configuration of the valve assembly. An illustrative example of such a feedstock delivery system is shown in Fig. 32. Pressure vessel 459 is adapted to store heating fuel 13 and hydrogen-production fluid 15.

In vessel 459, one of fuel 13 and fluid 15 may be adapted to be discharged from the pressure vessel under its own pressure while the other of fuel 13 and fluid 15 may be adapted to be discharged from the pressure vessel under pressure applied thereto, such as from the first of fuel 13 and fluid 15. For example, the heating fuel may be disposed in the pressure vessel for delivery, under its own pressure, to the heating assembly 60. The hydrogen-production fluid may be disposed in the pressure vessel 459 for delivery, under pressure applied by the heating fuel, to the hydrogen-producing region 19. The hydrogen-production fluid and the heating fuel are maintained at least substantially separate in the pressure vessel, such as in an interior cavity of the pressure vessel. By this it is meant that fuel 13 and fluid 15 are not intermixed throughout the pressure vessel. Instead, the heating fuel and the hydrogen-production fluid are maintained in discrete, identifiable regions of the pressure vessel, with little or no mixing of fuel 13 and fluid 15. For example, the heating fuel may be a gas and the hydrogen-production fluid may be a liquid, with the fuel and fluid being separated by an interface 500 in the pressure vessel. As another example, the heating fuel and the hydrogen-production fluid may be immiscible and separated by an interface 500 in the pressure vessel. While not required, this interface 500 may be formed from the fluid interface between the heating fuel and the hydrogen-production fluid interface layer in the pressure vessel 459. As a further example, the heating fuel and the hydrogen-production fluid may be separated by a physical, or structural, separating member, such as the subsequently described pressure transmitters, that forms the interface 500.

The pressure vessel may also be described as a fuel canister, fuel cartridge, or a feedstock canister or cartridge. As discussed in more detail herein, in some embodiments, it may also be described as a dual fuel or a combined fuel-feedstock canister or cartridge. While illustrated with a single pressure vessel and a single valve assembly, the feedstock delivery system 22 may include more than one pressure vessel and/or more than one valve assembly without departing from the scope of the present disclosure. Additionally, more than one pressure vessel 459 may be in fluid communication with a single valve assembly. In the illustrative example shown in Fig. 32, fluid supply (feed) stream 16 and fuel supply stream 64 are adapted to be discharged from the same pressure vessel 459, and the flow of these streams is regulated by the same valve assembly 460. As discussed, however, this construction is not required.

In Figs. 32-33, interfaces 500 take the form of structural interfaces in the form of pressure transmitters 488, with the illustrated example been collapsible bladders 488. The pressure transmitter may also be described as dividing the interior cavity 480 into a first, or pressurizing, chamber 495 and a second, or pressurized, chamber 497. The pressure transmitter 488 may be configured to automatically adjust the relative volumes of the first and second chambers 495 and 497 responsive to changes in the volumes and/or pressures within the chambers. For example, the pressure transmitter may be adapted to move automatically within the cavity to adjust the relative sizes of the chambers. As a more particular example, when the amount of hydrogen-production fluid 15 decreases within chamber 495, the pressure transmitter may move within the cavity to adjust to this change in fluid 15 by decreasing the size of chamber 495, typically with a corresponding increase in the size of chamber 497. The pressure transmitter may itself also apply some pressure to the pressurized fluid, but it is also within the scope of the disclosure that the pressure transmitter does not (at all, or appreciably) apply pressure to the pressurized fluid. The pressure transmitter may have any suitable construction, with the collapsible, flexible bladder shown in Figs. 32 and 33 being but an illustrative example. For example, the pressure transmitter may include constructions in which the transmitter is slidably or otherwise adapted to move within the cavity, configurations in which the transmitter is flexible, is elastically deformable, is rigid but moveable to permit the above-discussed resizing, etc.

When used to pressurize and propel the hydrogen-production fluid, as discussed above, the heating fuel 13 may also be referred to as a pressurizing fuel. Correspondingly, the hydrogen-production fluid 15 may also be referred to as a pressurized fuel or fluid. When the heating fuel is disposed in the pressure vessel, it is stored under its own pressure, which is sufficient to apply pressure on the hydrogen production fluid 15. The pressurizing heating fuel 13 may be selected to exist in vessel 459 as a two-phase system, including a liquid phase and a vapor phase. This may enable the pressure vessel to maintain a constant, or substantially constant, pressure on the hydrogen-production fluid 15, especially when the temperature of the pressure vessel remains constant. For example, the heating fuel may be selected to be at vapor-liquid equilibrium when the feedstock delivery system 22 is in hydrogen-generation configuration. An illustrative example of a two-phase pressurizing fuel 13 is shown in Fig. 34, in which a liquid phase is shown at 501 and a gaseous phase is shown at 503. As the hydrogen-production fluid 15 or the heating fuel 13 is discharged from the pressure vessel 459, a portion of the heating fuel 13 in the liquid phase evaporates to the vapor phase, filling the vacated space in the interior cavity 480. Accordingly, the heating fuel 13 applies a substantially constant pressure on the hydrogen-production fluid 15 even when the heating fuel or hydrogen-production fluid is being discharged. While it is within the scope of the present disclosure to utilize any of the heating fuels described herein, propane is a well-suited pressurizing fuel for use in feedstock delivery systems having a pressure vessel according to the present disclosure.

Fig. 34 illustrates another example of a pressure vessel 459 that may be used in the feedstock delivery system of the present disclosure. Similar to the pressure vessels shown in Figs. 32 and 33, the pressure vessel shown in Fig. 34 defines an internal cavity 80 into which heating fuel 13 and hydrogen-production fluid 15 are received and maintained at least substantially separate with an interface 500 separating the fuel and the fluid. Similarly, one of fuel 13 and fluid 15 may be a pressurizing fuel or fluid, with the other being pressurized by the pressurizing fuel/fluid. However, unlike the examples shown in Figs. 32 and 33, in Fig. 34 the interface between the fuel and the fluid does not include a structural barrier or surface that divides cavity 480 into compartments 495 and 497. Instead, Fig. 34 illustrates that the interface may be formed by the nature of the heating fuel and the hydrogen-production fluid. As discussed, immiscible fluids may be maintained at least substantially, if not completely, separate even though there is not a structural barrier between the fluids. Similarly, if one of fuel 13 and fluid 15 is a gas and the other is a liquid, the fuel and the fluid may be maintained at least substantially separate, again with a discernable interface formed therebetween.

Fig. 34 also illustrates a length of fluid connector 520 that extends into interior cavity 480 to establish fluid communication with the fluid that is distal the vessel's discharge orifice 490. Alternatively, the pressure vessel may include a discharge orifice within regions of the cavity that will contain a particular one of fuel 13 or fluid 15. As yet another example, a fluid conduit may be used that extends through the wall, or body, of the pressure vessel to an inlet in the corresponding region of the pressure vessel in which the fluid/fuel is located. Heating fuel 13 and hydrogen-production fluid 15 are indicated in solid and dashed lines in Fig. 34 to graphically illustrate that the relative position and/or pressurizing/pressurized relationship of these components within the pressure vessels disclosed herein is not fixed for all embodiments, and may vary, such as depending upon the particular application of the pressure vessel, the mechanism utilized to produce hydrogen gas, the composition of the fuel and/or fluid, etc. Illustrative, non-exclusive examples of suitable components include using propane or another condensable gas as the pressurizing heating fuel and using methanol, methanol and water, or another alcohol or alcohol-water mixture as the pressurized hydrogen-producing fluid.

In Fig. 33, the pressure vessel 459 is shown including a discharge orifice 490 defined at a discharge region 492 of the pressure vessel. The location of orifice 490 and the shape and orientation of vessel 459 may vary without departing from the scope of the present disclosure. The discharge orifice 490 is illustrated as being closed off by a closure member 494, which has first and second flow paths 496 and 498 defined therein, but any suitable construction and/or configuration may be used without departing from the scope of the present disclosure. The closure member may include any device or configuration of devices that are adapted to seal the discharge orifice except for flow through flow paths, or outlets, defined by the closure member. The separate and discrete first and second flow paths 496 and 498 are configured to reduce or eliminate the cross-contamination of the discharge streams that make up the one or more feedstock supply streams discussed above. However, it is within the scope of the disclosure that the flow paths include a common fluid conduit, within which fuel 13 and fluid 15 selectively flow, such as depending upon the configuration of valve assembly 460. Sealants, gaskets, and other such devices may be included in the feedstock delivery system 22 to assist in maintaining the separation between fuel 13 and fluid 15, not only within the pressure vessel, but also as discharged therefrom.

Fig. 33 provides a graphical illustration that the pressure vessel may include more than one discharge orifice, with the pressure vessel of Fig. 33 including first and second discharge regions 492 and 493, which respectively include first and second discharge orifices 490 and 491 through which the heating fuel and hydrogen-production fluid are selectively discharged (responsive to the configuration of the valve assembly) through outlets, or flow paths, 496 and 498. Fig. 33 also graphically depicts the feedstock delivery system adapted to deliver heating fuel 13 and hydrogen-production fluid 15 to fuel processing system 31, with Fig. 33 illustrating an example of a valve assembly 460 that includes valves 461 and 463.

As discussed, valve assembly 460 is adapted to regulate the flow, or discharge, of the heating fuel and the hydrogen-production fluid from the pressure vessel. Valve assembly 460 includes at least one valve and may include any suitable structure for selectively regulating the flow of streams from the pressure vessel. The schematic representations of valve assembly 460 in Figs. 30 and 32 are intended to graphically indicate that components of the valve assembly may be integrated with the pressure vessel, may be attached directly to the pressure vessel, and/or may be in fluid communication with the pressure vessel, such as being connected downstream from the pressure vessel and upstream from the hydrogen-producing region and heating assembly. In other words, the valve assembly 460 may be configured as part of the pressure vessel 459 or it may be separate from the pressure vessel but still in fluid communication with the heating fuel and the hydrogen-production fluid.

Valve assembly 460 is adapted to selectively and separately discharge the hydrogen-production fluid and the heating fuel from pressure vessel 459. For example, valve assembly 460 may be adapted to allow selective discharge of the heating fuel and the hydrogen-production fluid, but to not allow the discharge of the heating fuel and the hydrogen-production fluid together as a single stream. In some embodiments, this discharge of the hydrogen-production fluid may be under pressure applied by the heating fuel. It is within the scope of the present disclosure that the relationship may be reversed, with the heating fuel being discharged under pressure applied by the hydrogen-production fluid.

The valves and/or valve assembly may be adapted to simply either permit or restrict flow of the corresponding stream through a fixed orifice size. It is also within the scope of the present disclosure that the valves and/or valve assembly may be adapted to provide an adjustable, or variable, flow of either or both of the streams, such as to adjust the relative size of an orifice through which the streams flow through the valve assembly. It is within the scope of the present disclosure that the valve assembly may be actuated, such as between flow and no-flow configurations and/or to adjust the relative rate of flow therethrough, via any suitable mechanism. Illustrative examples include valve assemblies that are adapted to be manually actuated, such as by an individual proximate the valve assembly, actuated by a controller or other electronic device or signal, or automatically actuated responsive to detection or occurrence of a predetermined triggering event, such as a detected temperature, pressure, flow condition, etc.

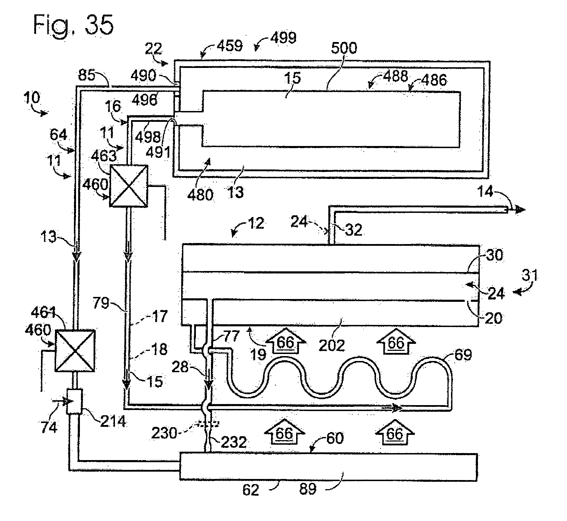

As graphically illustrated in Fig. 35, the valve assembly 460 may include a first valve 461 that is adapted to discharge the heating fuel and a second valve 463 that is adapted to discharge the hydrogen-production fluid. The valve assembly 460 may also, or alternatively, include a three-way valve. The three-way valve may be adapted to selectively allow the discharge of the heating fuel, allow the discharge of the hydrogen-production fluid, or prevent the discharge of both the heating fuel and the hydrogen-production fluid. The three-way valve may be considered to have an off configuration, in which no fluids are allowed to discharge from the pressure vessel, a heating configuration, in which the heating fuel is permitted to discharge from the pressure vessel, and a hydrogen-generation configuration, in which the hydrogen-production fluid is permitted to discharge from the pressure vessel. The three-way valve may be configured to only permit selection of the heating configuration from the off configuration, such that the valve must pass through the heating configuration prior to selecting the hydrogen-generation configuration. Alternatively, the three-way valve may be adapted to permit, from any selected configuration, selection of either of the remaining configurations.

The three-way valve or other implemented valve assembly 460 may be configured to permit, or enable, the discharge of the heating fuel until a predetermined condition is met before permitting, or enabling, the discharge of the hydrogen-producing fluid. The predetermined condition may include the passage of a predetermined amount of elapsed time from the initiation of the heating configuration. In embodiments where the feedstock delivery system is supplying a heating fuel to a heating assembly in a hydrogen generation assembly, the predetermined condition may include the hydrogen generation assembly reaching a predetermined operating temperature. The valve assembly 460 may be configured to allow selection of the hydrogen-generation configuration upon the occurrence of other such predetermined conditions.

Such a three-way valve (or other implementation of valve assembly 460) may include a control mechanism that allows selection of the heating configuration from the off configuration, but prevents selection of the hydrogen-generation configuration until the predetermined condition occurs or is otherwise detected, which releases the control mechanism and permits the selection of the hydrogen-generation configuration. The valve assembly may permit selection of the heating configuration and be adapted to automatically switch to the hydrogen-generation configuration when the predetermined condition occurs or is otherwise detected. It is also within the scope of the present disclosure that a valve assembly is used that does not restrict the simultaneous flow of both fuel 13 and fluid 15.

Additional examples of suitable feedstock delivery systems 22 that include pressure vessels 459 containing heating fuel 13 and hydrogen-production fluid 15 in pressurizing-pressurized relationships and which may be used in hydrogen generation assemblies according to the present disclosure are disclosed in U.S. Patent Application Serial No. 11/096,827 (later published as US 2006-0090396).

Similar to the hydrogen generation assembly 10 schematically illustrated in Fig. 30, the hydrogen generation assembly 10 in Fig. 35 includes a feedstock delivery system 22 and a fuel processing system 31. In the illustrative example, the feedstock delivery system 22 includes pressurized sources 499 of heating fuel 13 and hydrogen-production fluid 15 in the form of a pressure vessel 459. As illustrated, pressure vessel 459 includes an interior compartment, or cavity, 480 that contains both heating fuel 13 and hydrogen-production fluid 15, and a valve assembly 460 that selectively permits separate flows of fuel 13 and fluid 15. As shown, the valve assembly 460 includes first and second valves 461 and 463. However, the valve assembly 461 may be configured in accordance with any of the variations described herein, including the use of a three-way valve. The feedstock delivery system 22 illustrated in Fig. 35 also includes a first and second discharge orifice 490 and 491. First and second flow paths 496 and 498 are illustrated in Fig. 35 as leading from the first and second discharge orifices 490 and 491 to the fuel processing system 31.

The pressure vessel 459 is shown in Fig. 35 as including a pressure transmitter 488 configured as a bladder 486 with the hydrogen-production fluid 15 disposed in the bladder and the heating fuel 13 disposed in the interior cavity 480 of the pressure vessel surrounding and pressurizing the bladder 486 and the hydrogen-production fluid 15 disposed therein. Any of the other pressurized sources and/or pressure vessel configurations described, illustrated and/or incorporated herein may be used in place of the illustrated pressure vessel 459 shown in Fig. 35.

Illustrative examples of hydrogen-producing fuel cell systems 42, hydrogen-producing fuel processing assemblies 10, and feedstock delivery systems 22 have been schematically illustrated herein. These systems may, but are not required to, include additional components, such as air/oxidant supplies and delivery systems, heat exchange assemblies and/or sources, controllers, sensors, valves and other flow controllers, power management modules, etc. It is within the scope of the present disclosure to selectively include one or more of these components. Similarly, although a single fuel processor 12 and/or a single fuel cell stack 40 are shown the figures, it is within the scope of the disclosure that more than one of either or both of these components may be used.

### Industrial Applicability

The present disclosure is applicable to the hydrogen-production, feedstock delivery, and power generation fields.

It is believed that the disclosure set forth above encompasses multiple distinct inventions with independent utility. While each of these inventions has been disclosed in its preferred form, the specific embodiments thereof as disclosed and illustrated herein are not to be considered in a limiting sense as numerous variations are possible. The subject matter of the inventions includes all novel and non-obvious combinations and subcombinations of the various elements, features, functions and/or properties disclosed herein. Similarly, where the claims recite "a" or "a first" element or the equivalent thereof, such claims should be understood to include incorporation of one or more such elements, neither requiring nor excluding two or more such elements.

It is believed that the following claims particularly point out certain combinations and subcombinations that are directed to one of the disclosed inventions and are novel and non-obvious. Inventions embodied in other combinations and subcombinations of features, functions, elements and/or properties may be claimed through amendment of the present claims or presentation of new claims in this or a related application. Such amended or new claims, whether they are directed to a different invention or directed to the same invention, whether different, broader, narrower, or equal in scope to the original claims, are also regarded as included within the subject matter of the inventions of the present disclosure.

## Claims

1. A hydrogen generation assembly (10), comprising:
a fuel processing assembly (31), comprising:
a hydrogen-producing region (19) adapted to receive at least a feed stream (16) containing at least a carbon-containing feedstock and to produce a mixed gas stream (20) containing hydrogen gas as a majority component therefrom;
at least one purification region (24) adapted to receive the mixed gas stream and to separate the mixed gas stream into at least one product hydrogen stream (14) and at least one byproduct stream (28);
a heating assembly (60) adapted to combust a fuel stream to produce a heated exhaust stream (66) for heating at least the hydrogen-producing region, wherein the heating assembly is adapted to receive and combust the byproduct stream when the hydrogen-producing region is producing hydrogen gas;
a flow restrictor (140) between the hydrogen-producing region and the heating assembly, wherein the flow restrictor is adapted to create backpressure in a fluid conduit (77) through which the byproduct stream flows to the heating assembly (60);
a feedstock delivery system (22) adapted to deliver the feed stream (16) containing at least a carbon-containing feedstock to the hydrogen-producing region of the fuel processing assembly (31), wherein the feedstock delivery system is in communication with a liquid supply (112) containing the carbon-containing feedstock, wherein the feedstock delivery system (22) comprises:
a pump assembly (100) adapted to draw from the liquid supply (112) a liquid inlet stream (110) containing at least the carbon-containing feedstock and to emit a liquid outlet stream (116);
an outlet conduit (132) in fluid communication with a delivery conduit (134) and with a recycle conduit (136), wherein the delivery conduit (134) is in fluid communication with the hydrogen-producing region (19) of the hydrogen-producing fuel processing assembly (10), and the recycle conduit (136) is in fluid communication with at least one of the liquid supply (112) and an inlet conduit (130) through which the liquid inlet stream (110) is drawn to the pump assembly (100); wherein the outlet conduit (132) is adapted to receive the liquid outlet stream (116) and to define a flow path for the liquid outlet stream to the delivery conduit and the recycle conduit;
a flow restrictor (140) adapted to create backpressure in the recycle conduit; and
a pressure-actuated valve (150) adapted to selectively permit liquid in the recycle conduit to bypass the flow restrictor.

2. The hydrogen generation assembly of claim 1, wherein the pressure-actuated valve (150) is in fluid communication with a bypass conduit (152) that extends in fluid communication with portions of the recycle conduit upstream and downstream of the flow restrictor.

3. The hydrogen generation assembly of claim 2, wherein the pressure-actuated valve (150) is adapted to be selectively configured between a closed configuration, in which the pressure-actuated valve restricts flow of the liquid outlet stream (116) through the bypass conduit (152), and an actuated configuration, in which the pressure-actuated valve (150) permits flow of the liquid outlet stream through the bypass conduit (152), wherein the pressure-actuated valve is biased to the closed configuration, and further wherein optionally the pressure-actuated valve is adapted to transition to the actuated configuration when the pressure of the liquid outlet stream in the delivery conduit exceeds a threshold recycle pressure.

4. The hydrogen generation assembly of claim 3, wherein the hydrogen-producing region (19) has a threshold delivery pressure for the portion of the liquid outlet stream delivered thereto, wherein the threshold recycle pressure corresponds to the threshold delivery pressure, and optionally wherein the threshold recycle pressure is less than the threshold delivery pressure.

5. The hydrogen generation assembly of any one of claims 1-4, wherein the hydrogen-producing region (19) is adapted to receive up to a threshold flow rate of the liquid outlet stream through the delivery conduit (34), and further wherein the pump assembly is adapted to emit a liquid outlet stream having a greater flow rate than the threshold flow rate.

6. The hydrogen generation assembly of any one of claims 1-5, wherein the heating assembly (60) is in thermal communication with the hydrogen-producing region (19), wherein the heating assembly comprises at least one fuel chamber (376) and at least one heating and ignition source (378); wherein the at least one fuel chamber (376) is adapted to receive at least one fuel stream at a first temperature, the at least one fuel stream comprising a liquid, combustible, carbon-containing fuel having an ignition temperature greater than said first temperature, and further wherein the at least one heating and ignition source is adapted to heat at least a portion of the fuel chamber to raise the temperature of at least a portion of the carbon-containing fuel to a second temperature at least as great as the ignition temperature and to ignite the carbon-containing fuel.

7. The hydrogen generation assembly of claim 6, wherein the feedstock delivery system is further adapted to deliver the at least one fuel stream to the at least one fuel chamber.

8. The hydrogen generation assembly of claim 7, wherein the fuel chamber (376) includes an at least substantially open reservoir adapted to receive and at least temporarily store a volume of the liquid, combustible, carbon-containing fuel.

9. The hydrogen generation assembly of claim 7 or claim 8, wherein the heating assembly further comprises a transport medium (410) disposed in the fuel chamber (376), optionally wherein the transport medium is adapted to at least temporarily absorb the liquid, combustible, carbon-containing fuel.

10. The hydrogen generation assembly of claim 7 or claim 8, wherein the heating assembly further comprises a transport medium disposed in the fuel chamber, and further wherein the transport medium is adapted to define a flame-holding surface for the fuel.

11. A system comprising the hydrogen generation assembly of any of claims 1-10, in combination with a fuel cell stack adapted to produce an electric current from an oxidant and at least a portion of the product hydrogen stream.

12. The hydrogen generation assembly of any of claims 1-10 or the system of claim 11, wherein the mechanism by which hydrogen gas is produced from feed stream (16) is steam reforming or autothermal reforming in which reforming catalysts are used, and further wherein the feed stream contains water and a carbon-containing feedstock.

13. The hydrogen generation assembly of any of claims 1-10 or the system of claim 11 or 12, wherein the feed stream and the fuel stream each comprise at least one common component, and optionally wherein the at least one common carbon-containing component is delivered from a common supply, wherein optionally the feed stream and the fuel stream each comprise 25-75 vol % water and at least one water-miscible carbon-containing component.

14. The hydrogen generation assembly of any of claims 1-10 or the system of any of claims 11-13, wherein the hydrogen-producing region includes a steam reforming catalyst (23), wherein the hydrogen-producing region is adapted to produce a mixed gas stream containing hydrogen gas and other gases, and further wherein the hydrogen gas forms the majority component of the mixed gas stream.

15. The hydrogen generation assembly of any of claims 1-10 or the system of any of claims 11-14, wherein the at least one purification region includes at least one hydrogen-selective membrane (30), and optionally wherein the at least one purification region further includes a chemical carbon monoxide removal assembly selected from: a water-gas shift reactor to provide hydrogen gas and carbon dioxide from water and carbon monoxide, partial oxidation reactors that are adapted to convert carbon monoxide into carbon dioxide and methanation catalyst regions, or beds, that convert carbon monoxide and hydrogen gas to methane and water.

## Patentansprüche

1. Wasserstofferzeugungseinheit (10), umfassend:
eine Brennstoffverarbeitungseinheit (31), die folgendes umfasst:
eine Wasserstofferzeugungsregion (19), die mindestens einen Zustrom (16) empfangen kann, der mindestens ein kohlenstoffhaltiges Ausgangsmaterial enthält und einen gemischten Gasstrom (20) daraus erzeugen kann, der Wasserstoffgas als eine Hauptkomponente enthält;
mindestens eine Reinigungsregion (24), welche den gemischten Gasstrom empfangen und den gemischten Gasstrom in mindestens einen Produktwasserstoffstrom (14) und mindestens einen Nebenproduktstrom (28) trennen kann;
eine Heizeinheit (60), welche einen Brennstoffstrom verbrennen kann, um einen erhitzten Abgasstrom (66) zum Erhitzen der mindestens einen Wasserstofferzeugungsregion, wobei die Heizeinheit den Nebenproduktstrom empfangen und verbrennen kann, wenn die Wasserstofferzeugungsregion Wasserstoffgas erzeugt;
einen Strömungsbegrenzer (140) zwischen der Wasserstofferzeugungsregion und der Heizeinheit, wobei der Strömungsbegrenzer einen Gegendruck in einer Fluidleitung (77) erzeugen kann, durch welche der Nebenproduktstrom zu der Heizeinheit (60) fließt;
ein Ausgangsmaterialzufuhrsystem (22), das den Zustrom (16), der mindestens ein kohlenstoffhaltiges Ausgangsmaterial enthält, der Wasserstofferzeugungsregion der Brennstoffverarbeitungseinheit (31) zuführen kann, wobei sich das Ausgangsmaterialzufuhrsystem in Kommunikation mit einer Flüssigkeitsversorgung (112) befindet, welche das kohlenstoffhaltige Ausgangsmaterial enthält, wobei das Ausgangsmaterialzufuhrsystem (22) folgendes umfasst:
eine Pumpeneinheit (100), die der Flüssigkeitsversorgung (112) einen Flüssigkeitseinlassstrom (110), der mindestens das kohlenstoffhaltige Ausgangsmaterial enthält, entziehen kann, und einen Flüssigkeitsauslassstrom (116) emittieren kann;
eine Auslassleitung (132), die sich in Fluidverbindung mit einer Zufuhrleitung (134) und einer Umlaufleitung (136) befindet, wobei sich die Zufuhrleitung (134) in Fluidverbindung mit der Wasserstofferzeugungsregion (19) der Wasserstoff erzeugenden Brennstoffverarbeitungseinheit (10) befindet, und wobei sich die Umlaufleitung (136) in Fluidverbindung mit mindestens der Flüssigkeitsversorgung (112) oder einer Einlassleitung (130) befindet, durch welche der Flüssigkeitseinlassstrom (110) zu der Pumpe (100) gesaugt wird; wobei die Auslassleitung (132) den Flüssigkeitsauslassstrom (116) empfangen und einen Strömungspfad für den Flüssigkeitsauslassstrom zu der Zufuhrleitung und der Umlaufleitung definieren kann;
einen Strömungsbegrenzer (140), der einen Gegendruck in der Umlaufleitung erzeugen kann; und
ein druckbetätigtes Ventil (150), das es selektiv ermöglichen kann, dass Flüssigkeit in der Umlaufleitung den Strömungsbegrenzer umgeht.

2. Wasserstofferzeugungseinheit nach Anspruch 1, wobei sich das druckbetätigte Ventil (150) in Fluidverbindung mit einer Umgehungsleitung (152) befindet, die sich in Fluidverbindung mit Abschnitten der Umlaufleitung stromaufwärts und stromabwärts des Strömungsbegrenzers erstreckt.

3. Wasserstofferzeugungseinheit nach Anspruch 2, wobei das druckbetätigte Ventil (150) selektiv zwischen einer geschlossenen Konfiguration, an der das druckbetätigte Ventil den Fluss des Flüssigkeitsauslassstroms (116) durch die Umgehungsleitung (152) begrenzt, und einer betätigten Konfiguration, an der das druckbetätigte Ventil (150) den Fluss des Flüssigkeitsauslassstroms durch die Umgehungsleitung (152) zulässt, konfiguriert werden kann, wobei das druckbetätigte Ventil an die geschlossene Konfiguration vorbelastet ist, und wobei das druckbetätigte Ventil optional ferner in die betätigte Konfiguration übergehen kann, wenn der Druck in dem Flüssigkeitsauslassstrom in der Zufuhrleitung einen Schwellenwert-Umlaufdruck überschreitet.

4. Wasserstofferzeugungseinheit nach Anspruch 3, wobei die Wasserstofferzeugungsregion (19) einen Schwellenwert-Zufuhrdruck für den Abschnitt des Flüssigkeitsauslassstroms aufweist, der dieser zugeführt wird, wobei der Schwellenwert-Umlaufdruck dem Schwellenwert-Zufuhrdruck entspricht, und wobei der Schwellenwert-Umlaufdruck optional niedriger ist als der Schwellenwert-Zufuhrdruck.

5. Wasserstofferzeugungseinheit nach einem der Ansprüche 1 bis 4, wobei die Wasserstofferzeugungsregion (19) bis zu einer Schwellenwert-Strömungsrate des Flüssigkeitsauslassstroms durch die Zufuhrleitung (34) empfangen kann, und wobei die Pumpeneinheit ferner einen Flüssigkeitsauslassstrom mit einer höheren Strömungsrate als die Schwellenwert-Strömungsrate emittieren kann.

6. Wasserstofferzeugungseinheit nach einem der Ansprüche 1 bis 5, wobei die Heizeinheit (60) sich in thermischer Verbindung mit der Wasserstofferzeugungsregion (19) befindet, wobei die Heizeinheit mindestens eine Brennstoffkammer umfasst und mindestens eine Heiz- und Zündquelle (378); wobei die mindestens eine Brennstoffkammer (376) mindestens einen Brennstoffstrom auf einer ersten Temperatur empfangen kann, wobei der mindestens eine Brennstoffstrom einen flüssigen, verbrennbaren, kohlenstoffhaltigen Brennstoff mit einer Zündtemperatur umfasst, die höher ist als die erste Temperatur, und wobei die mindestens eine Heiz- und Zündquelle zumindest einen Teil der Brennstoffkammer erhitzen kann, um die Temperatur zumindest eines Teils des kohlenstoffhaltigen Brennstoffs auf eine zweite Temperatur zu erhitzen, die mindestens so hoch ist wie die Zündtemperatur, und um den kohlenstoffhaltigen Brennstoff zu zünden.

7. Wasserstofferzeugungseinheit nach Anspruch 6, wobei das Ausgangsmaterialzufuhrsystem den mindestens einen Brennstoffstrom der mindestens einen Brennstoffkammer zuführen kann.

8. Wasserstofferzeugungseinheit nach Anspruch 7, wobei die Brennstoffkammer (376) mindestens einen im Wesentlichen offenen Speicher aufweist, der ein Volumen des flüssigen, verbrennbaren, kohlenstoffhaltigen Brennstoffs empfangen und zumindest vorübergehend speichern kann.

9. Wasserstofferzeugungseinheit nach einem der Ansprüche 7 oder 8, wobei die Heizeinheit ferner ein Transportmedium (410) umfasst, das sich in der Brennstoffkammer (376) befindet, wobei das Transportmedium optional den flüssigen, verbrennbaren, kohlenstoffhaltigen Brennstoff zumindest vorübergehend absorbieren kann.

10. Wasserstofferzeugungseinheit nach einem der Ansprüche 7 oder 8, wobei die Heizeinheit ferner ein Transportmedium umfasst, das sich in der Brennstoffkammer befindet, und wobei das Transportmedium ferner eine flammenhaltende Oberfläche für den Brennstoff definieren kann.

11. Wasserstofferzeugungseinheit nach einem der Ansprüche 1 bis 10, in Kombination mit einem Brennstoffzellenstapel, um einen elektrischen Strom aus einem Oxidationsmittel und mindestens einem Teil des Produktwasserstoffstroms zu erzeugen.

12. Wasserstofferzeugungseinheit nach einem der Ansprüche 1 bis 10 oder das System nach Anspruch 11, wobei der Mechanismus, durch den Wasserstoffgas aus dem Zustrom (16) erzeugt wird, Dampfreformierung oder autothermische Reformierung ist, wobei Reformierungskatalysatoren eingesetzt werden, und wobei der Zustrom ferner Wasser und ein kohlenstoffhaltiges Ausgangsmaterial enthält.

13. Wasserstofferzeugungseinheit nach einem der Ansprüche 1 bis 10 oder das System nach Anspruch 11 oder 12, wobei der Zustrom und der Brennstoffstrom jeweils mindestens eine gemeinsame Komponente umfassen, und wobei die mindestens eine gemeinsame kohlenstoffhaltige Komponente von einer gemeinsamen Zufuhreinrichtung zugeführt werden, wobei optional der Zustrom und der Brennstoffstrom jeweils 25 bis 75 Volumenprozent Wasser und mindestens eine wassermischbare kohlenstoffhaltige Komponente umfassen.

14. Wasserstofferzeugungseinheit nach einem der Ansprüche 1 bis 10 oder das System nach einem der Ansprüche 11 bis 13, wobei die Wasserstofferzeugungsregion einen Dampfreformierungskatalysator (23) aufweist, wobei die Wasserstofferzeugungsregion einen gemischten Gasstrom erzeugen kann, der Wasserstoffgas und andere Gase enthält, und wobei das Wasserstoffgas ferner die Hauptkomponente des gemischten Gasstroms bildet.

15. Wasserstofferzeugungseinheit nach einem der Ansprüche 1 bis 10 oder das System nach einem der Ansprüche 11 bis 14, wobei die mindestens eine Reinigungsregion mindestens eine wasserstoffselektive Membran (30) aufweist, und wobei die mindestens eine Reinigungsregion optional ferner eine Entzugseinheit für chemisches Kohlenmonoxid aufweist, die ausgewählt wird aus: einem Wasser-Gas-Konvertierungsreaktor, um Wasserstoffgas und Kohlendioxid aus Wasser und Kohlenmonoxid vorzusehen, teilweisen Oxidationsreaktoren, die Kohlenmonoxid in Kohlenstoffdioxid- und Methanisierungskatalysatorregionen umwandeln können, oder Betten, die Kohlenmonoxid und Wasserstoffgas in Methan und Wasser umwandeln.

## Revendications

1. Ensemble de production d'hydrogène (10), comprenant :
un ensemble de traitement de combustible (31), comprenant :
une région de production d'hydrogène (19) conçue pour recevoir au moins un flux d'alimentation (16) contenant au moins un produit de départ contenant du carbone et pour en produire un flux de gaz mélangé (20) contenant de l'hydrogène gazeux en tant que composant majoritaire ;
au moins une zone de purification (24) conçue pour recevoir le flux de gaz mélangé et séparer le flux de gaz mélangé en au moins un flux d'hydrogène de produit (14) et au moins un flux de sous-produit (28) ;
un ensemble de chauffage (60) conçu pour brûler un flux de combustible pour produire un flux d'échappement chauffé (66) pour chauffer au moins la région de production d'hydrogène, dans lequel l'ensemble de chauffage est conçu pour recevoir et brûler le flux de sous-produit lorsque la région de production d'hydrogène produit de l'hydrogène gazeux ;
un réducteur de débit (140) entre la région de production d'hydrogène et l'ensemble de chauffage, dans lequel le réducteur de débit est conçu pour créer une contre-pression dans un conduit de fluide (77) à travers lequel le flux de sous-produit s'écoule vers l'ensemble de chauffage (60) ;
un système d'alimentation en produit de départ (22) conçu pour fournir le flux d'alimentation (16) contenant au moins un produit de départ contenant du carbone à la région de production d'hydrogène de l'ensemble de traitement de combustible (31), dans lequel le système d'alimentation en produit de départ est en communication avec une alimentation en liquide (112) contenant le produit de départ contenant du carbone, dans lequel le système d'alimentation de produit de départ (22) comprend :
un ensemble pompe (100) conçu pour aspirer à partir de l'alimentation en liquide (112) un flux d'entrée de liquide (110) contenant au moins le produit de départ contenant du carbone et pour émettre un flux de sortie de liquide (116) ;
un conduit de sortie (132) en communication fluidique avec un conduit d'alimentation (134) et avec un conduit de recyclage (136), dans lequel le conduit d'alimentation (134) est en communication fluidique avec la région de production d'hydrogène (19) de l'ensemble de traitement de combustible produisant de l'hydrogène (10), et le conduit de recyclage (136) est en communication fluidique avec l'alimentation en liquide (112) et/ou un conduit d'entrée (130) à travers lequel le flux d'entrée de liquide (110) est aspiré vers l'ensemble pompe (100) ; dans lequel le conduit de sortie (132) est conçu pour recevoir le flux de sortie de liquide (116) et pour définir un chemin d'écoulement pour le flux de sortie de liquide vers le conduit d'alimentation et le conduit de recyclage ;
un réducteur de débit (140) conçu pour créer une contre-pression dans le conduit de recyclage ; et
une vanne actionnée par pression (150) conçue pour autoriser de manière sélective le liquide dans le conduit de recyclage à contourner le réducteur de débit.

2. Ensemble de génération d'hydrogène selon la revendication 1, dans lequel la vanne actionnée par pression (150) est en communication fluidique avec un conduit de dérivation (152) qui s'étend en communication fluidique avec des parties du conduit de recyclage en amont et en aval du réducteur de débit.

3. Ensemble de génération d'hydrogène selon la revendication 2, dans lequel la vanne actionnée par pression (150) est conçue pour être réglée de manière sélective entre une configuration fermée, dans laquelle la vanne actionnée par pression limite l'écoulement du flux de sortie de liquide (116) à travers le conduit de dérivation (152), et une configuration actionnée, dans laquelle la vanne actionnée par pression (150) permet l'écoulement du flux de sortie de liquide à travers le conduit de dérivation (152), dans lequel la vanne actionnée par pression est rappelée à la configuration fermée, et dans lequel en outre éventuellement la vanne actionnée par pression est conçue pour passer à la configuration actionnée lorsque la pression du flux de sortie de liquide dans le conduit d'alimentation est supérieure à une pression de recyclage de seuil.

4. Ensemble de génération d'hydrogène selon la revendication 3, dans lequel la région de production d'hydrogène (19) a une pression d'alimentation de seuil pour la partie du flux de liquide de sortie qui lui est fournie, dans lequel la pression de recyclage de seuil correspond à la pression d'alimentation de seuil, et éventuellement dans lequel la pression de recyclage de seuil est inférieure à la pression d'alimentation de seuil.

5. Ensemble de génération d'hydrogène selon l'une quelconque des revendications 1 à 4, dans lequel la région de production d'hydrogène (19) est conçue pour recevoir jusqu'à un débit de seuil du flux de sortie de liquide à travers le conduit d'alimentation (34), et en outre dans lequel l'ensemble pompe est conçu pour émettre un flux de sortie de liquide ayant un débit supérieur au débit de seuil.

6. Ensemble de génération d'hydrogène selon l'une quelconque des revendications 1 à 5, dans lequel l'ensemble de chauffage (60) est en communication thermique avec la région de production d'hydrogène (19), dans lequel l'ensemble de chauffage comprend au moins une chambre de combustible (376) et au moins une source de chauffage et d'allumage (378) ; dans lequel l'au moins une chambre de combustible (376) est conçue pour recevoir au moins un flux de combustible à une première température, l'au moins un flux de combustible comprenant un combustible liquide contenant du carbone ayant une température d'inflammation supérieure à ladite première température, et en outre dans lequel l'au moins une source de chauffage et d'allumage est conçue pour chauffer au moins une partie de la chambre de combustible pour élever la température d'au moins une partie du combustible contenant du carbone à une seconde température au moins aussi élevée que la température d'inflammation et à enflammer le combustible contenant du carbone.

7. Ensemble de génération d'hydrogène selon la revendication 6, dans lequel le système d'alimentation en produit de départ est en outre conçu pour fournir l'au moins un flux de combustible à l'au moins une chambre de combustible.

8. Ensemble de génération d'hydrogène selon la revendication 7, dans lequel la chambre de combustible (376) comprend un réservoir au moins sensiblement ouvert conçu pour recevoir et au moins temporairement stocker un volume du combustible liquide contenant du carbone.

9. Ensemble de génération d'hydrogène selon la revendication 7 ou 8, dans lequel l'ensemble de chauffage comprend en outre un milieu de transport (410) disposé dans la chambre de combustible (376), éventuellement dans lequel le milieu de transport est conçu pour au moins absorber temporairement le combustible liquide contenant du carbone.

10. Ensemble de génération d'hydrogène selon la revendication 7 ou 8, dans lequel l'ensemble de chauffage comprend en outre un milieu de transport disposé dans la chambre de combustible, et en outre dans lequel le milieu de transport est conçu pour définir une surface de maintien de flamme pour le combustible.

11. Système comprenant l'ensemble de génération d'hydrogène selon l'une quelconque des revendications 1 à 10, en combinaison avec un assemblage de piles à combustible conçu pour produire un courant électrique à partir d'un oxydant et au moins une partie du flux d'hydrogène de produit.

12. Ensemble de génération d'hydrogène selon l'une quelconque des revendications 1 à 10 ou système selon la revendication 11, dans lequel le mécanisme par lequel l'hydrogène gazeux est produit à partir du flux d'alimentation (16) est le reformage à la vapeur ou le reformage autothermique dans lequel des catalyseurs de reformage sont utilisés, et en outre dans lequel le flux d'alimentation contient de l'eau et un produit de départ contenant du carbone.

13. Ensemble de génération d'hydrogène selon l'une quelconque des revendications 1 à 10 ou système selon la revendication 11 ou 12, dans lequel le flux d'alimentation et le flux de combustible comprennent chacun au moins un composant commun, et éventuellement dans lequel l'au moins un composant commun contenant du carbone est fourni à partir d'une alimentation commune, dans lequel éventuellement le flux d'alimentation et le flux de combustible comprennent chacun de 25 à 75 % en volume d'eau et au moins un composant contenant du carbone miscible à l'eau.

14. Ensemble de génération d'hydrogène selon l'une quelconque des revendications 1 à 10 ou système selon l'une quelconque des revendications 11 à 13, dans lequel la région de production d'hydrogène comprend un catalyseur de reformage à la vapeur (23), dans lequel la région de production d'hydrogène est conçue pour produire un flux de gaz mélangé contenant de l'hydrogène gazeux et d'autres gaz, et en outre dans lequel l'hydrogène gazeux forme le composant majoritaire du flux de gaz mélangé.

15. Ensemble de génération d'hydrogène selon l'une quelconque des revendications 1 à 10 ou système selon l'une quelconque des revendications 11 à 14, dans lequel l'au moins une zone de purification comprend au moins une membrane sélective à l'hydrogène (30), et éventuellement dans lequel l'au moins une région de purification comprend en outre un ensemble d'enlèvement de monoxyde de carbone chimique choisi parmi : un réacteur de conversion eau-gaz pour fournir de l'hydrogène gazeux et du dioxyde de carbone à partir de l'eau et du monoxyde de carbone, des réacteurs d'oxydation partielle qui sont conçus pour convertir le monoxyde de carbone en dioxyde de carbone et des régions de catalyseur de méthanisation, ou lits, qui convertissent le monoxyde de carbone et l'hydrogène gazeux en eau et en méthane.
